# EUROPEAN PATENT APPLICATION

(11) **EP 4 793 076 A1**
(43) Date of publication of application: **19.08.2026**
(21) Application number: 24876313.8
(22) Date of filing: 04.09.2024
(51) Int. Cl.: B60K 17/04

(54) **NOVEL MULTI-PURPOSE SHAFT DRIVE SYSTEM FOR ALL-TERRAIN VEHICLE**

(30) Priority: 10.10.2023 CN 202311302675; 10.10.2023 CN 202322707087 U
(71) Applicant: Ma, Liang, Yangquan, Shanxi 045008 (CN)
(72) Inventor: MA, Yixuan, Yangquan, Shanxi 045008 (CN); MA, Yilong, Yangquan, Shanxi 045008 (CN); MA, Liang, Yangquan, Shanxi 045008 (CN)
(74) Representative: Metida
(86) International application number: PCT/CN2024/116699
(87) International publication number: WO 2025/077493

(57) **Abstract**

Provided in the present invention is a novel multi-purpose shaft drive system for an all-terrain vehicle, comprising: multiple types of power machines such as a vertical or horizontal engine, a CVT engine and a motor; preferably, one engine thereamong and a novel multi-purpose shaft drive housing are assembled to form an integrated structure, which is installed on a body frame of a vehicle such as a go-kart, a UTV, and an ATV. The novel multi-purpose shaft drive housing of the present drive system uses an installation mode of vertical arrangement, where a universal joint output shaft bearing housing of the novel multi-purpose shaft drive housing is transversely installed on the rear end position of a rear drive axle of a chassis of a body frame of a vehicle such as a go-kart, a UTV, and an ATV, a suitable distance is provided between the transversely installed universal joint output shaft bearing housing and an axle housing of an integrated drive axle, and a longitudinal four-link mechanism and a transverse Panhard rod are used for flexible connection between the integrated drive axle at the lower part of the frame and the frame, so that when the vehicle travels on uneven roads, the integrated drive axle bounces with the undulations of the road surface, so as to perform a vertical motion relative to the frame or perform a cross-axle motion relative to a front axle.

## Description

### TECHNICAL FIELD

The present invention belongs to the technical field of power transmission structures, and specifically relates to a new multi-purpose shaft transmission system for all-terrain vehicles.

### BACKGROUND TECHNOLOGY

All modern all-terrain karts UTV/ATV all-terrain vehicles feature an integrated structure where the engine and rear suspension are combined into a single rear drive axle. However, this structural form of the rear drive axle is not well-suited for off-road driving and does not take into account the comfort of the driver and passengers. The reason for this is that the size of these vehicles is relatively small, and the installation position of the engine is highly restricted.

Therefore, most vehicle models are designed with the engine, rear suspension, and drive shaft as an integrated structure. That is, the rear suspension arm is a rigid structure, with the drive shaft installed below the arm and the engine installed above it. the engine, rear suspension arm, and drive shaft are fixed together to form a rigid single-arm structure for the drive rear axle. This design enables the effective use of chains to transfer power from the engine to the drive shaft and the effective use of shock absorber springs to reduce the impact and vibration from the ground. However, this drive method also has its drawbacks. Due to the rigid structure of the rear suspension arm, with the engine and drive shaft installed on it, the unsprung mass increases significantly. The rebound responsiveness of the rear suspension on uneven roads decreases, and it cannot effectively absorb the impact from the road surface in a timely manner. Because the rear suspension arm is a rigid structure, when it bounces up and down, it can only rotate around the two points where it is connected to the frame. the rigid arm rear axle cannot form a cross-axis condition with the front axle. Therefore, when the vehicle travels on off-road surfaces, the tracking of each wheel is poor and cannot stay in close contact with the road surface in real time. there is always one wheel in the air, reducing the efficiency of power transmission.

Due to the engine and the rear suspension arm being installed in a rigid cage structure, the unsprung mass of the drive axle has significantly increased, resulting in a substantial decline in the rebound responsiveness of the drive axle on uneven roads and a significant reduction in the riding comfort of the passengers.

Due to the engine and the rear suspension swing arm being installed in a rigid cage structure, the volume is too large. Only a semi-frame can be used to accommodate the installation of the rear suspension swing arm drive axle, which occupies the precious space resources of the kart UTV/ATV body, resulting in an uncoordinated and unattractive overall shape of the kart UTV/ATV.

Therefore, it is imperative to design a new type of multi-purpose shaft transmission system for off-road vehicles that features excellent performance, high transmission efficiency, adaptability to off-road driving conditions, consideration for the comfort of drivers and passengers, and the ability to separate the engine from the drive axle for installation.

### INVENTION CONTENT

To solve the technical problems existing in the prior art as mentioned above, the present invention proposes a new multi-purpose shaft drive system for all-terrain vehicles.

The technical solution adopted by the present invention is as follows:
A new multi-purpose shaft transmission system for all-terrain vehicles, including: vertical or horizontal engines, CVT engines, electric motors and other power units. One of them is preferably selected and installed as an integrated structure with a new multi-purpose shaft transmission box. The integrated structure is flexibly mounted on the chassis of go-karts, UTVs, ATVs, etc., through rubber spring mounts. Taking the vertical installation of the new multi-purpose shaft transmission box as an example, the universal joint output shaft bevel gear and the right-angle transmission box shell of the new multi-purpose shaft transmission box are installed in a horizontal arrangement on the rear end of the rear drive axle tube of the go-kart, UTV, ATV, etc. The left and right universal joint output shaft bearing seats arranged horizontally have an appropriate distance from the overall drive axle tube and keep the two shafts parallel. The engine is installed as an integrated structure with the new multi-purpose shaft transmission box and is arranged on the chassis of go-karts, UTVs, ATVs, etc., at a position for power transmission that remains relatively stationary with the vehicle. A longitudinal four-bar linkage and a transverse Panhard rod are used for flexible connection between the overall drive axle and the chassis at the lower part of the chassis, allowing the overall drive axle to move vertically or perform cross-axis actions with the front axle when the vehicle travels on uneven roads.

The splined shaft end of the left output drive half shaft is connected and inserted into the inner cage center splined hole of the constant velocity ball cage universal joint at the left end of the output shaft of the new multi-purpose shaft drive box body installed at the chassis frame position, and remains relatively stationary with the chassis during movement. The splined shaft end of the left end of the drive half shaft is connected and inserted into the inner cage center splined hole of the extendable constant velocity ball cage universal joint installed on the right side of the input shaft at the left end of the drive axle gear or chain sprocket chain drive box shell installed horizontally at the lower part of the chassis frame, and during movement, it bounces along with the overall drive axle while maintaining continuous power transmission. The constant velocity ball cage universal joint connected to the right end of the drive half shaft and the extendable constant velocity ball cage universal joint connected to the left end of the drive half shaft can. To compensate for the changes in angular momentum and displacement of the drive half shaft under various operating conditions and ensure the smooth transmission of power in the drive system;
The above-mentioned transmission system is exemplified by the installation of the engine and the new multi-purpose shaft transmission box as an integrated structure, with the left end of the integral drive axle tube being equipped with a gear (or sprocket and chain) transmission box housing to transmit power. In actual production and use, the engine and the new multi-purpose shaft transmission box can be installed as an integrated structure, with the right end of the integral drive axle tube being equipped with a drive axle gear or sprocket and chain transmission box housing to transmit power. It can also be configured in various power transmission forms such as installing the engine or electric motor and the new multi-purpose shaft transmission box as an integrated structure, and transmitting power through the constant velocity ball cage universal joints of the independent suspension knuckle steering knuckles on the left and right sides of the vehicle body. A new multi-purpose shaft transmission system for all-terrain vehicles includes a new multi-purpose shaft transmission box.

The new multi-purpose shaft transmission box is composed of three parts: the input shaft bevel gear right-angle transmission box housing, the intermediate transmission shaft support protection tube, and the universal joint output shaft bevel gear right-angle transmission box housing. The input shaft bevel gear right-angle transmission box housing and the internal installed input splined shaft, bevel gear bearing assembly, the intermediate transmission shaft support protection tube of suitable length and the intermediate transmission shaft and bevel gear assembly installed in the tube cavity, the universal joint output shaft bevel gear right-angle transmission box housing and the internal installed intermediate output shaft bevel gear bearing assembly, the left end driven bevel gear, the right end driven bevel gear, and the end output splined shaft are combined. The input shaft bevel gear right-angle transmission box housing is composed of multiple cylindrical shells of different diameters. The input shaft bevel gear right-angle transmission box housing includes a large bearing seat cylindrical shell, an active bevel gear cylindrical shell, a small bearing seat cylindrical shell, a driven bevel gear cylindrical shell, and a driven bevel gear bearing seat cylindrical shell, which are combined into an irregular input shaft bevel gear right-angle transmission box housing. The active bevel gear cylindrical shell in the horizontal position of the input shaft direction is welded to the small bearing seat cylindrical shell. In the vertical direction, the driven bevel gear cylindrical shell is welded to the active bevel gear cylindrical shell and the small bearing cylindrical shell in the horizontal direction to form an integrated structure. The flange of the active bevel gear cylindrical shell in the horizontal direction is fastened to the flange of the large bearing seat cylindrical shell with bolts. In the vertical direction, the flange of the driven bevel gear bearing seat cylindrical shell is fastened to the flange of the driven bevel gear cylindrical shell with bolts. The input shaft bevel gear right-angle transmission box housing of the new multi-purpose shaft transmission box is installed with the input shaft active bevel gear assembly and the intermediate transmission shaft driven bevel gear assembly. The overdrive gear or sprocket chain transmission box housing installed on the left side of the vertical or horizontal engine is located at the right end of the output shaft bearing seat in a horizontal position and extends to the right. The horizontally extending output splined shaft, located on the outer right side of the bearing seat of the output shaft at the end of the CVT engine variable frequency motor transmission box shell, extends horizontally to the right and is inserted into the input shaft bevel gear right-angle transmission box shell of the new multi-purpose shaft transmission box body, which is installed in parallel and coaxially. Inside the input shaft bevel gear right-angle transmission box shell, two sets of large bearings are installed in the large bearing seat in the horizontal direction of the input shaft, and an internal tooth splined shaft sleeve that can mesh with the input splined shaft is installed in the large bearing hole. Moreover, the inner end of the internal tooth splined shaft sleeve of an appropriate length is welded with a bevel gear, forming an integrated internal tooth splined shaft bevel gear assembly. Two sets of small bearings are installed in the small bearing seat in the horizontal direction of the input shaft inside the input shaft bevel gear right-angle transmission box shell, and adjustment shims are installed on both sides of the small bearing holes. The output splined shaft, which is horizontally positioned and extends to the right on the outer right side of the bearing seat of the output shaft at the end of the overdrive gear or chain wheel chain transmission box shell installed on the left side of the vertical or horizontal engine, or the output splined shaft that is horizontally positioned and extends to the right on the outer right side of the bearing seat of the output shaft at the end of the CVT engine transmission box shell or the motor, is preferably one of the output splined shafts at the right end of the engines. It is inserted into the internal tooth splined hole of the integrated internal tooth splined shaft bevel gear installed in the large bearing hole of the input shaft bevel gear right-angle transmission box shell and meshes with the splined shaft part of the input shaft to transmit power. The coaxial smooth shaft part then passes through the bearing holes of the two sets of small bearings installed in the small bearing seat and is fastened with a large nut at the exposed screw part at the end of the input shaft bevel gear right-angle transmission box shell. In the above structure, the input shaft bevel gear transmission box shell is installed as an integral structure with the overdrive gear or chain wheel chain transmission box shell of the vertical or horizontal engine, or with the CVT engine transmission box shell or the motor. The output splined shaft that is horizontally positioned and extends to the right on the outer right side of the bearing seat of the output shaft at the end of the overdrive gear or chain wheel chain transmission box shell, and the output splined shaft that is horizontally positioned and extends to the right on the outer right side of the bearing seat of the output shaft at the end of the CVT engine transmission box shell or the motor, are the coaxial splined shafts of the input shaft of the input shaft bevel gear right-angle transmission box shell.

The intermediate transmission shaft support and protection tube of the new multi-purpose shaft transmission box is composed of multiple sets of cylindrical shell tubes of different diameters and lengths, including: a cylindrical shell of the driven conical gear bearing seat in the vertical direction, a cylindrical shell of the intermediate transmission shaft support and protection tube of suitable length, and a cylindrical shell of the conical gear bearing seat at the end of the output shaft of the intermediate transmission shaft, which are combined into a coaxial intermediate transmission shaft support and protection tube; in the vertical direction, the flange of the cylindrical shell of the driven conical gear of the input shaft conical gear right-angle transmission box is fastened to the flange of the cylindrical shell of the driven conical gear bearing seat of the intermediate transmission shaft support and protection tube with bolts; in the vertical direction, the flange of the cylindrical shell of the conical gear bearing seat at the end of the output shaft of the intermediate transmission shaft support and protection tube is fastened to the universal joint. The flange of the cylindrical housing of the bearing seat of the input conical gear of the right-angle transmission box shell is fastened with bolts to the output shaft conical gear of the right-angle transmission box shell. The driven conical gear installed in the bearing seat of the cylindrical housing of the driven conical gear in the vertical direction is installed in the input conical gear right-angle transmission box shell in a vertical installation direction with respect to the input shaft in the horizontal position. The input shaft active conical gear with the horizontal input splined shaft and the driven conical gear of the intermediate transmission shaft installed in the vertical direction are meshed and transmit power. The intermediate transmission shaft with a suitable length is installed in the tube cavity of the intermediate transmission shaft support and protection tube, and both ends of the intermediate transmission shaft are splined shaft parts. The upper splined head part is inserted into the splined slot of the center splined hole of the driven conical gear meshed with the input shaft active conical gear in the input conical gear right-angle transmission box shell, and the lower splined head part is inserted into the splined slot of the center splined hole of the end output conical gear of the intermediate transmission shaft meshed with the left and right output shaft driven conical gears installed on the horizontal position universal joint output splined shaft in the universal joint output shaft conical gear right-angle transmission box shell to transmit power.

The universal joint output shaft bevel gear right-angle transmission box shell of the new multi-purpose shaft transmission box is composed of multiple cylindrical shells of different diameters, including: the cylindrical shell of the bevel gear bearing seat of the universal joint output shaft on the left side in the horizontal position and the cylindrical shell of the bevel gear bearing seat of the universal joint output shaft on the right side, the cylindrical shell of the universal joint output shaft bevel gear in the middle position, and the cylindrical shell of the bevel gear at the end of the intermediate transmission shaft installed vertically. On the outer left side of the cylindrical shell of the universal joint output shaft bevel gear, there is a cylindrical shell of the bevel gear bearing seat of the output shaft, and on the right side, there is also a cylindrical shell of the bevel gear bearing seat of the output shaft. In the vertical direction of the cylindrical shell of the universal joint output shaft bevel gear right-angle transmission box, there is a group of cylindrical shells of the bevel gear at the end of the intermediate transmission shaft. The flange plate of the cylindrical shell of the bevel gear bearing seat at the end of the intermediate transmission shaft support protection tube is fastened to the flange plate of the cylindrical shell of the bevel gear at the end of the intermediate transmission shaft of the universal joint output shaft bevel gear right-angle transmission box shell with bolts.

The conical gear at the end of the intermediate transmission shaft installed vertically in the universal joint output shaft conical gear right-angle transmission box housing is the input shaft conical gear meshing with the intermediate transmission shaft in the universal joint output shaft conical gear right-angle transmission box housing. The input shaft conical gear meshing with the intermediate transmission shaft and the bearing assembly are installed in the cylindrical shell of the bearing seat at the end of the intermediate transmission shaft output conical gear, and are in alignment with the universal joint output shaft. The left and right output shaft driven bevel gears installed on the output spline shaft in the horizontal position inside the right-angle transmission box housing of the conical gear are meshed with each other and transmit power.

In the horizontal left and right bearing seats of the universal joint output shaft bevel gear right-angle transmission box housing, two sets of bearings are respectively installed. In the two sets of bearing holes, the left output shaft driven bevel gear and the right output shaft driven bevel gear are respectively installed. The end output splined shaft is inserted into the center holes of the left and right driven bevel gears. The left and right driven bevel gears are located in the middle of the end output splined shaft. The sliding splined sleeve with internal splined teeth is inserted into the end output splined shaft. The center holes of the left and right driven bevel gears are smooth holes without internal splined teeth, while the center hole of the sliding splined sleeve has an internal splined teeth structure and meshes with the output splined shaft. At the same time, the sliding splined sleeve can slide left and right, and mesh with the inner teeth of the left or right driven bevel gear on the end output splined shaft, thereby enabling the end output shaft driven bevel gear and the output splined shaft to rotate in both forward and reverse directions, providing the vehicle with the function of forward and reverse gears. Meanwhile, the left end of the end universal joint output splined shaft installed outside the left output shaft bearing seat of the universal joint output shaft bevel gear right-angle transmission box housing is equipped with a left constant velocity ball cage universal joint outer cage, and the right end of the end universal joint output splined shaft installed outside the right output shaft bearing seat is equipped with a right constant velocity ball cage universal joint outer cage, simultaneously transmitting power to both left and right sides, providing convenient conditions for the subsequent installation of the drive half shaft.

A half shaft differential can be optionally installed in the conical gear right-angle transmission box housing of the universal joint output shaft, enabling the two constant velocity ball cage universal joints installed at the left and right ends of the universal joint output splined shaft to have a differential function. In the conical gear right-angle transmission box housing of the universal joint output shaft, two sets of bearings are respectively installed in the left and right bearing seats of the universal joint output shaft. The left and right protruding edges of the differential housing are respectively installed in the bearing holes of these two sets of bearings. A differential gear assembly is installed inside the differential housing, and a conical gear for the end output shaft differential is installed outside the differential housing and meshes with the input conical gear that meshes with the vertical intermediate transmission shaft in the conical gear right-angle transmission box housing of the universal joint output shaft. At the same time, a splined half shaft for left power output and a splined half shaft for right power output are respectively inserted into the bearing holes of the left and right bearing seats of the universal joint output shaft and mesh with the left and right differential conical gears installed in the differential housing. Moreover, a constant velocity ball cage universal joint is installed at the left end of the splined half shaft of the universal joint output shaft. Install the constant velocity ball cage universal joint at the right end of the splined half shaft of the universal joint output shaft and simultaneously transmit power to both the left and right ends.

The new multi-purpose shaft transmission system for all-terrain vehicles includes a transfer gear transmission box housing. When the common vertical or horizontal engine is installed as an integrated structure with the input shaft bevel gear right-angle transmission box housing of the new multi-purpose shaft transmission box, a set of transfer gear transmission box must be added between the vertical or horizontal engine and the new multi-purpose shaft transmission box to smoothly transfer the engine output power to the input shaft of the input shaft bevel gear right-angle transmission box housing of the new multi-purpose shaft transmission box. At the same time, the output spline shaft extending horizontally to the right from the bearing seat at the end of the transfer gear transmission box is the co-axial spline shaft of the input shaft of the new multi-purpose shaft transmission box, which can assist the new multi-purpose shaft transmission box to rotate to the horizontal position, vertical position or any angle position to transmit power.

The housing of the overbridge gear transmission box described in is composed of an elliptical shell in longitudinal section and a rectangular shell in transverse section, and a rectangular shell. The two ends of the shell are formed as semi-cylindrical shell ends, which are welded together to form an elliptical shell with a suitable length and thickness, suitable for the installation of internal transmission gear sets or sprocket chain sets. It is installed horizontally on the outside of the output shaft box of the vertical or horizontal engine on the left side, and is fastened with bolts at a position opposite to the engine output splined shaft on the left side of the engine, thus integrating the vertical or horizontal engine with the overdrive gear transmission box into a single structure. The output splined shaft on the left side of the vertical or horizontal engine is inserted into the center splined hole on the right side of the first set of input shaft transmission gears (or sprocket) in the overdrive gear transmission box, engaging and transmitting power.

Taking the overdrive gear transmission box as an example, inside the overdrive gear transmission box housing, there are multiple sets of transmission gears arranged in sequence and meshing with each other, including the first set of overdrive gears of the overdrive gear transmission box, the third set of intermediate transmission gears, and the 33rd set of output shaft transmission gears at the end. On the inner walls of the left and right sides of the housing at the input shaft end, there are two sets of first input shaft bearing seats installed. Inside these two sets of bearing seats, there are two sets of bearings and the first set of input shaft transmission gears. On the right side of the center splined hole of the first transmission gear, the splined output shaft on the left side of the vertical or horizontal engine is inserted and installed. On the inner walls of the left and right sides of the housing at the middle position, there are two sets of intermediate transmission gear bearing seats installed on each side. Inside these bearing seats, there are bearings, transmission gear shafts, and the third set of intermediate transmission gears installed on the gear shafts. On the inner walls of the left and right sides of the housing at the end of the output shaft, there are end output shaft bearing seats installed. Inside these bearings, there are bearings and the end output shaft. Output spline shaft and the third end output shaft drive gear assembly installed at the end of the output spline shaft; where the end output spline shaft is in a horizontal position and extends laterally to the right out of the right end output shaft bearing seat of the overdrive gear transmission box housing and then enters the input shaft bevel gear right-angle transmission box housing of the new multi-purpose shaft transmission box body installed in parallel and coaxially on the right side, meshing with the center spline hole of the input shaft driving bevel gear and transmitting power.

Taking the overpass sprocket chain transmission box as an example, the transmission structure inside the overpass sprocket chain transmission box is improved from the overpass gear transmission box; in which the first input shaft gear 1 installed on the bearing seat at the input end of the overpass gear transmission box is replaced with the first sprocket; the second intermediate transmission gear installed in the middle of the overpass gear transmission box is replaced with the second intermediate chain guide roller; the third transmission gear installed on the output spline shaft at the end is replaced with the third output sprocket; inside the overpass sprocket chain transmission box, the first input sprocket and the third output sprocket at the end are meshed with a transmission chain to transmit power, and the second intermediate chain guide roller assists the chain to run smoothly. The shell shape, installation position and function of the overpass gear transmission box and the overpass sprocket chain transmission box are the same, and the installation positions of each shaft inside the transmission box shell are also the same.

The new multi-purpose shaft drive system for all-terrain vehicles includes a matched integral drive axle. The integral drive axle is composed of a tubular axle tube of suitable length and an elliptical drive axle gear transmission box housing installed at the left or right end of the axle tube to form an integral drive axle housing. An integral drive shaft is inserted and installed inside the integral drive axle tube. The elliptical drive axle gear transmission box housing welded at the left end or right end of the integral drive axle tube has a rectangular cross-section shell and two semi-cylindrical shell ends at the two ends of the rectangular shell, which are welded together to form an elliptical cross-section of suitable length, and its interior is suitable for installing a transmission gear assembly or a transmission sprocket assembly.

Take the installation of the drive axle gear transmission box housing at the left end of the integral drive axle tube as an example;
Inside the drive axle gear transmission box shell installed at the left end of the integral drive axle tube, there are multiple sets of transmission gears arranged in sequence and meshing with each other. On the inner walls on both sides of the integral drive axle tube end position inside the drive axle gear transmission box shell, there are left and right symmetrical drive axle tube bearing seats welded. Inside the left and right symmetrical bearing seats, there is an integral drive shaft inserted. On the integral drive shaft, there is a first large gear for drive shaft transmission. On both sides of the first large gear on the integral drive shaft, there are bearings fitted, and the bearings are the same. The drive shaft is installed in the bearing seats on the inner walls of the left and right sides of the drive axle gear transmission box shell, and the first large gear installed on the entire drive shaft is kept in the middle transmission position between the left and right bearing seats of the drive axle tube. The bearing seats for the left and right symmetrical intermediate transmission gear combinations are installed on the inner walls of the left and right sides of the middle position of the drive axle gear transmission box shell. Bearings and the intermediate transmission gear shafts are installed in the left and right bearing seats, and the second intermediate transmission gear is installed on the intermediate position of the left and right bearing seats of the intermediate transmission gear shaft. The bearing seats for the left and right symmetrical input shafts are installed on the inner walls of the left and right sides of the input shaft end of the drive axle gear transmission box shell. The input splined shafts, which are installed with the outer ball cage of the constant velocity ball cage universal joint, are inserted into the bearing holes of the left and right bearing seats, and the third input transmission pinion is installed on the input splined shaft at the middle position of the left and right bearing seats. The splined shaft with the outer ball cage of the constant velocity ball cage universal joint extending to the right, which is installed at the right side of the input splined shaft end of the drive axle gear transmission box shell outside the left end of the entire drive axle tube, passes through the bearing seat at the input shaft end of the drive axle gear transmission box shell, and the extended part on the left side is fastened with a nut. The left and right bearing seats at the left and right ends of the entire drive axle tube are installed with left and right sets of bearings to fix the entire drive shaft installed in the tube cavity of the entire drive axle tube. There are splines at both ends of the entire drive shaft, and the flange plates for installing the wheel tires and the flange plates for installing the brake discs can be installed. The extended parts of the flange plates at both ends of the entire drive shaft are fastened with nuts. Outside the entire drive axle tube, there are welded longitudinal and transverse push-pull rod brackets, shock absorber spring brackets, brake pump brackets and other accessories to control the movement posture of the entire drive axle.

To expand the broader applicability of the integral drive axle, according to the vehicle usage requirements, the first large gear installed on the integral drive shaft within the drive axle gear transmission box shell at the left end of the integral drive axle tube can be replaced with a differential large gear assembly with differential function. The integral drive shaft installed within the integral drive axle tube can be replaced with two drive axle half shafts that are compatible with the differential assembly. The differential large gear assembly is installed in the drive axle gear transmission box shell at the middle position between the two symmetrical axle tube bearing seats. The flange edges on both sides of the differential housing are respectively embedded in the axle tube bearing seats on both sides of the drive axle gear transmission box shell. A differential bevel gear assembly is installed within the differential housing. The splined shafts of the two drive axle half shafts inserted into both ends of the integral drive axle tube are respectively inserted into the center splined shaft holes of the two differential bevel gears within the differential housing and mesh with each other to transmit power, and the integral drive axle is thus configured. Bearings are installed in the bearing seats at both ends of the drive axle tube to fix the left and right half shafts of the drive axle, enabling a differential function between the left and right half shafts.

Taking the installation of the drive axle sprocket chain drive box housing at the left end of the integral drive axle tube as an example;
The transmission chain and sprocket assembly in the integral drive axle chain and sprocket transmission box housing is an improvement of the transmission gear structure in the integral drive axle gear transmission box housing. Specifically, the first large transmission gear installed on the integral drive shaft at the middle position between the left and right symmetrical drive axle tube bearing seats in the integral drive axle gear transmission box housing on the left end of the integral drive axle is replaced with the first large transmission sprocket. The second intermediate transmission gear installed on the intermediate transmission gear shaft at the middle position in the integral drive axle gear transmission box housing is replaced with an intermediate chain guide wheel. The third small transmission gear installed on the input shaft splined shaft connected to the outer cage of the constant velocity ball cage universal joint between the left and right symmetrical input shaft bearing seats at the input shaft end in the integral drive axle gear transmission box housing is replaced with the third small transmission sprocket. The transmission sprockets are meshed with a set of transmission chains to transmit power, and the intermediate chain guide wheel assists the chain to run smoothly. The integral drive axle chain and sprocket transmission box housing and the integral drive axle gear transmission box housing have the same shape, the same installation position, the same function and the same installation position of each shaft in the transmission box housing.

To adapt to the output positions of the left and right drive half shafts that transmit power to the left and right respectively, which are installed in the left and right constant velocity ball cage universal joints at the left end of the universal joint output shaft splines of the left and right universal joint output shaft bearing seats of the right-angle transmission box body of the universal joint output shaft, the position of the overall drive axle gear (or sprocket chain) transmission box shell can be preferably welded to the left end of the overall drive axle tube or preferably welded to the right end of the overall drive axle tube. The installation position of the drive axle gear (or sprocket chain) transmission box shell welded to the left end of the overall drive axle tube or the right end of the overall drive axle tube can be in a horizontal state parallel to the ground, a vertical state, or any position convenient for the installation of the drive half shafts. Among them, the horizontal position for power transmission is the best demonstration example.

The new multi-purpose shaft drive system for all-terrain vehicles includes an ordinary vertical or horizontal engine, a transfer case with overdrive gears, and a new multi-purpose shaft drive case, which are integrated into a single structure and connected to an integral drive axle for power transmission. When the ordinary vertical or horizontal engine is integrated with the new multi-purpose shaft drive case, the output splined shaft at the outer end of the overdrive gear transfer case, on the right side of the bearing housing, is in a horizontal position and extends towards the input shaft large bearing seat of the rightward horizontally extending and penetrating into the input shaft bevel gear right-angle transmission box shell of the new multi-purpose shaft transmission box body, which is installed side by side and coaxially on the right, is engaged with the splines in the center splined hole of the driving bevel gear installed on the input splined shaft, and is fastened with a nut on the extended part outside the small bearing seat. The output splined shaft at the outer end of the overdrive gear transmission box body on the right side of the output shaft bearing seat is the splined shaft coaxial with the input shaft on the left side of the input shaft bevel gear right-angle transmission box shell of the new multi-purpose shaft transmission box body.

The output shaft bearing housing at the end of the overdrive gear transmission housing installed on the left side of a common vertical or horizontal engine has an output splined shaft extending horizontally to the right and laterally. This splined shaft is inserted into the input shaft bevel gear right-angle transmission box housing input shaft bearing housing of the new multi-purpose shaft transmission housing installed in parallel and coaxially on the right side. The input shaft splined shaft coaxial with the output shaft of the overdrive gear transmission housing installs the overdrive gear transmission housing and the input shaft bevel gear right-angle transmission box housing of the new multi-purpose shaft transmission housing into a joint-like integral structure, allowing the new multi-purpose shaft transmission housing to rotate around the coaxial splined shaft to transmit power in the vertical, horizontal or any direction. Preferably, the new multi-purpose shaft transmission housing is fixed in a vertical position relative to the engine and the vehicle frame to transmit power.

The end output splined shaft of the overdrive gear or sprocket chain drive housing installed on the left side of a common vertical or horizontal engine is in a horizontal position and extends laterally to the right, and it penetrates into the right side where a new type of multi-row sprocket is installed in parallel and on the same axis. The input shaft conical gear of the drive box for the purpose of the shaft transmission is a right-angle transmission box. The input shaft large bearing housing transmits power. Therefore, the new multi-purpose shaft transmission box can be matched with various types of engines as the power source.

Among them, the preferred option is to install and fix the new multi-purpose shaft transmission box in a vertical position relative to the frame to transmit power, and it is arranged and installed at the rear end of the rear drive shaft of the go-kart, UTV, ATV and other vehicle bodies and at the upper part of the frame. Therefore, the universal joint output shaft bevel gear right-angle transmission box shell of the new multi-purpose shaft transmission box has the left universal joint output shaft bearing seat and the right universal joint output shaft bearing seat, and the universal joint output splined shaft extending outward to the left and right ends (must be in a horizontal position and installed horizontally at the chassis position of the go-kart, UTV, ATV and other vehicle bodies). At the left and right ends of the universal joint output splined shaft outside the left and right universal joint output shaft bearing seats of the universal joint output shaft bevel gear right-angle transmission box shell of the new multi-purpose shaft transmission box, the left constant velocity ball cage universal joint and the right constant velocity ball cage universal joint are respectively installed, and the left power transmission half shaft and the right power transmission half shaft respectively output power horizontally to the left and right sides of the vehicle body. Among the preferred options of ordinary vertical engines, horizontal engines, CVT engines or variable frequency motors, the preferred option is selected. When a new type of multi-purpose shaft transmission box is installed as an integral structure with a power source, the splined input shaft of the new multi-purpose shaft transmission box and the splined output shaft of the universal joint maintain a parallel power transmission position.

The integral drive axle is connected to the frame of the go-kart, UTV, ATV and other vehicles through a longitudinally installed parallel four-bar linkage and a transversely installed Panhard rod. The integral drive axle is arranged and installed at the position of the rear drive shaft of the go-kart, UTV, ATV and other vehicles, and is located at the lower part of the frame in an integrated structure with the engine output shaft. There is a sufficient stroke distance between the integral drive axle and the frame. In the new multi-purpose shaft transmission structure on the upper part of the frame, the ordinary vertical or horizontal engine and CVT engine transmission box shell and the electric motor, as well as the vertical or horizontal engine and CVT engine and the electric motor with the mid-mounted longitudinal output shaft, one of them is preferably integrated with the new multi-purpose shaft transmission box body arranged in a vertical position, and is also integrated with the frame of the go-kart, UTV, ATV and other vehicles through a rubber spring support. On the lower part of the frame of the go-kart, UTV, ATV and other vehicles, the left and right bearing seats of the universal joint output shaft bevel gear right-angle transmission box shell and the universal joint output shaft splined shaft extending to the left and right are transversely arranged and installed. The left constant velocity ball cage universal joint outer cage is installed at the end of the splined shaft extending to the left from the left bearing seat of the universal joint output shaft, and the right constant velocity ball cage universal joint outer cage is installed at the end of the splined shaft extending to the right from the right bearing seat of the universal joint output shaft and is fastened with a center screw. The inner cage center splined hole of the simultaneously installed left constant velocity ball cage universal joint outer cage is inserted with a transmission half shaft extending laterally to the left of the vehicle body, and the inner cage center splined hole of the right constant velocity ball cage universal joint outer cage is inserted with a transmission half shaft extending laterally to the right of the vehicle body. The inner cages and outer cages installed at both ends of the transmission half shafts are meshed with each other, and the two transmission half shafts simultaneously output power to the left and right.

When a conventional vertical or horizontal engine, as well as a conventional CVT engine or motor with a transverse output shaft, is installed as an integrated structure with a new multi-purpose shaft transmission housing to transmit power to an integral drive axle, taking the case where the transmission housing of the drive axle is installed in a horizontal position at the left end of the drive axle tube and the drive axle gear (or chain wheel and chain) is welded to the left end of the drive axle tube as an example, it is preferred to use a single transmission half shaft that outputs power to the left. This half shaft is arranged horizontally inside the outer cage of the constant velocity ball cage universal joint on the left side of the universal joint output splined shaft. The transmission half shaft is installed in the splined hole at the center of the inner cage of the constant velocity ball cage universal joint and extends laterally to the left, passing through the drive axle gear (or chain wheel and chain) welded to the left end of the drive axle tube. The outer ball cage of the telescopic constant velocity ball cage universal joint extending outward to the right from the input shaft bearing housing on the right side of the housing meshes with the center splined hole of the inner ball cage to transmit power. The power is then transmitted through the drive axle gear transmission box shell installed at the left end of the integral drive axle tube and the various sets of transmission gears and drive shafts installed inside it to drive the wheels installed at both ends of the integral drive axle tube to rotate and move the vehicle forward.

It is also preferable to install a single force transmission half shaft that extends to the right and is arranged laterally in the outer cage of the constant velocity ball cage universal joint on the right side of the output splined shaft of the universal joint. The transmission half shaft installed in the center splined hole of the inner cage of the constant velocity ball cage universal joint extends laterally to the right and is inserted into the outer cage of the constant velocity ball cage universal joint that extends to the left from the left bearing housing of the input shaft of the drive axle gear or chain sprocket transmission box welded to the right end of the integral drive axle tube, and meshes with the center splined hole of the inner cage to transmit power. The power is then transmitted through the transmission gears and drive shafts installed in the drive axle gear transmission box shell on the right end of the integral drive axle tube to drive the wheels installed on both ends of the drive axle tube to rotate and move the vehicle forward.

In the right-angle transmission box housing of the universal joint output shaft conical gear of the new multi-purpose shaft transmission box body that uses a single drive half shaft to transmit power to the integral drive axle, there is a universal joint output shaft bearing seat on the left side and another on the right side. The middle position of the output shaft bearing housing of the universal joint can only be installed with a straight-through hard splined shaft, and cannot be equipped with an inter-axle differential assembly to install the universal joint output shaft on the outside of the conical gear right-angle transmission box housing, which is located on the left and right sides of the universal joint output shaft. The constant velocity ball cage universal joints do not have a differential function, ensuring that a single drive half shaft can smoothly transmit power.

Further, it includes a conventional CVT engine or variable-frequency motor with a transverse output shaft and a new multi-purpose shaft transmission box body that are integrated into an overall structure to form an integral drive bridge for power transmission. The output spline shaft at the end of the transverse output shaft of the conventional CVT engine transmission box shell or the end of the transversely arranged motor is horizontally positioned and extends laterally to the right, and is inserted into the input shaft large bearing housing of the input shaft bevel gear right-angle transmission box shell of the new multi-purpose shaft transmission box body that is installed side by side and coaxially on the right. It meshes with the internal splined tooth groove in the center splined hole of the bearing assembly of the driving bevel gear installed on the input spline shaft, and is fastened with a nut on the extended part of the small bearing housing. The output spline shaft at the right end of the CVT engine transmission box or the variable-frequency motor is the coaxial spline shaft of the input shaft of the input shaft bevel gear right-angle transmission box shell on the left side of the new multi-purpose shaft transmission box body.

The output splined shaft extending horizontally to the right from the right side of the bearing housing at the end of the transverse output shaft of the CVT engine transmission box or the end of the transversely arranged electric motor is inserted into the input of the input bevel gear right-angle transmission box shell of the new multi-purpose shaft transmission box body which is installed side by side and coaxially on the right. Inside the large bearing housing of the shaft, the input shaft splined shaft of the CVT engine box or variable frequency motor is installed in a joint-like integral structure with the input shaft bevel gear right-angle transmission box housing of the new multi-purpose shaft transmission box, allowing the new multi-purpose shaft transmission box to rotate around its common splined shaft to the vertical position, horizontal position or any position to transmit power; preferably, the new multi-purpose shaft transmission box is fixed in a vertical position relative to the engine and the vehicle frame to transmit power.

The end of the CVT engine transmission housing with the ordinary transverse output shaft installed or the end of the transversely arranged variable-frequency motor is in a horizontal position and extends laterally to the right, and the power is transmitted into the input shaft bearing housing of the input shaft bevel gear right-angle transmission housing of the new multi-purpose shaft transmission housing installed side by side and coaxially on the right, so the new multi-purpose shaft transmission housing can be matched with various engine types as the power source.

Preferably, the new multi-purpose shaft transmission box is installed and fixed on the frame in a vertical position to transmit power, and is arranged and installed at the rear end of the rear drive shaft of the go-kart, UTV, ATV and other vehicle bodies and at the upper position of the frame. Therefore, the universal joint output shaft bevel gear right-angle transmission box shell of the new multi-purpose shaft transmission box has the left universal joint output shaft bearing seat and the right universal joint output shaft bearing seat, and the universal joint output splined shaft extending outward to the left and right ends (which must be in a horizontal position and installed transversely on the chassis of the go-kart, UTV, ATV and other vehicle bodies), and the left universal joint output splined shaft end and the right universal joint output splined shaft end outside the left universal joint output shaft bearing seat and the right universal joint output shaft bearing seat are respectively installed with the left constant velocity ball cage universal joint and the right constant velocity ball cage universal joint, and the left power transmission half shaft and the right power transmission half shaft respectively output power to the left and right sides of the vehicle body simultaneously in a transverse direction. When the new multi-purpose shaft transmission box is installed as an integral structure with one of the preferred power sources such as a vertical engine, a horizontal engine, a CVT engine or a variable frequency motor, the input shaft splines and the universal joint output splined shaft of the new multi-purpose shaft transmission box maintain a parallel position for power transmission.

The integral drive axle is connected to the frame of the go-kart, UTV, ATV and other vehicles through a longitudinally installed parallelogram linkage and a transversely installed Panhard rod. The integral drive axle is arranged and installed at the position of the rear drive shaft of the go-kart, UTV, ATV and other vehicles. At the same time, the integral drive axle is located at the lower part of the frame, which is integrally structured with the engine output shaft, and there is a sufficient stroke distance between the integral drive axle and the frame. The new multi-purpose shaft transmission structure on the upper part of the frame has a horizontal output shaft that is either a common vertical type or the horizontal engine and CVT engine transmission box housing, as well as the electric motor, and the vertical or horizontal engine and CVT engine with a mid-mounted longitudinal output shaft and the electric motor, preferably one of the engines is integrated with a new multi-purpose shaft transmission box housing arranged in a vertical position to form an integral structure, and then installed as an integral structure with the frame of the go-kart, UTV, ATV, etc. through rubber spring mounts. The universal joint output shaft bevel gear right-angle transmission box housing of the new multi-purpose shaft transmission box is laterally arranged and installed at the lower part of the frame of the go-kart, UTV, ATV, etc. The left universal joint output shaft bearing housing and the right universal joint output shaft bearing housing extend laterally to the left and right, and the universal joint output splined shaft is installed. The left universal joint output splined shaft end extending to the left of the left universal joint output shaft bearing housing is installed with the left constant velocity ball cage universal joint outer cage, and the right universal joint output splined shaft end extending to the right of the right universal joint output shaft bearing housing is installed with the right constant velocity ball cage universal joint outer cage and fastened with a center screw. The inner cage center splined hole of the simultaneously installed left constant velocity ball cage universal joint outer cage is inserted with a transmission half shaft extending laterally to the left of the vehicle body, and the inner cage center splined hole of the right constant velocity ball cage universal joint outer cage is inserted with a transmission half shaft extending laterally to the right of the vehicle body. The inner cages and outer cages installed at both ends of the left and right transmission half shafts are meshed with each other, and the left and right transmission half shafts simultaneously output power to the left and right sides.

When a common vertical or horizontal engine, as well as a common CVT engine or motor with a transverse output shaft, is installed as an integrated structure with a new multi-purpose shaft transmission housing to drive the entire drive axle for power transmission, taking the horizontal installation position of the drive axle gear transmission housing installed at the left end of the drive axle tube as an example, it is preferred to use a single transmission half shaft that outputs power to the left. This half shaft is arranged horizontally inside the outer cage 0 of the constant velocity ball cage universal joint on the left side of the universal joint output splined shaft. The transmission half shaft installed in the center splined hole of the inner cage inside the outer cage of the constant velocity ball cage universal joint extends laterally to the left and is inserted into the outer cage of the constant velocity ball cage universal joint with a telescopic function that extends out of the right side of the input shaft bearing housing of the drive axle gear transmission housing welded to the left end of the drive axle tube. It meshes with the center splined hole of the inner cage to transmit power and drives the wheels installed at both ends of the drive axle tube to rotate through the drive axle gears or chain sprockets and chains installed in the drive axle gear or chain sprocket and chain transmission housing installed at the left end of the drive axle tube, thereby driving the vehicle forward.

It is also preferable to install a single force transmission half shaft that outputs to the right and is arranged laterally in the outer cage of the constant velocity ball cage universal joint on the right side of the universal joint output spline shaft. The transmission half shaft installed in the inner cage center spline hole of the constant velocity ball cage universal joint outer cage extends laterally to the right and is inserted into the left input shaft bearing housing of the drive axle gear transmission box shell welded to the right end of the integral drive axle housing, and extends out to the left with a telescopic function of the constant velocity ball cage universal joint. The power is transmitted to the center splined hole of the inner ball cage from the outer ball cage, and then through the drive axle gear transmission box shell installed at the right end of the integral drive axle tube, and the various sets of transmission gears and drive shafts installed inside, it drives the wheels installed at both ends of the integral drive axle tube to rotate, thus propelling the vehicle forward.

In the right-angle transmission box housing of the universal joint output shaft conical gear of the new multi-purpose shaft transmission box body that uses a single drive half shaft to transmit power to the integral drive axle, there is a universal joint output shaft bearing seat on the left side and another on the right side. The middle position of the output shaft bearing housing of the universal joint can only be installed with a straight-through hard splined shaft, and cannot be equipped with an inter-axle differential assembly to install the left and right two universal joint output shafts on the conical gear right-angle transmission box housing outside the universal joint output shaft. The constant velocity ball cage universal joints do not have a differential function, ensuring that a single drive half shaft can smoothly transmit power.

Furthermore, the structural feature of a new multi-purpose shaft transmission housing installed as an integral structure on the left side of a conventional vertical or horizontal engine or motor and applied to an integral drive axle for power transmission without using an overdrive gear (or sprocket chain) transmission housing is as follows:
The input shaft bearing housing of the input shaft bevel gear right-angle transmission box shell of the new multi-purpose shaft transmission box body is installed in parallel and coaxially outside the left output shaft bearing housing of the ordinary vertical or horizontal engine box or the left output shaft bearing housing of the horizontally arranged electric motor. The output spline shaft extending horizontally to the left from the end of the output shaft bearing housing of the engine and the electric motor is inserted into the large input shaft bearing housing inside the input shaft bevel gear right-angle transmission box shell of the new multi-purpose shaft transmission box body installed in parallel and coaxially on the left. The inner splined keyway of the center splined hole in the active conical gear bearing assembly installed on the splined shaft is meshed with the splined keyway on the outer left side of the output shaft bearing seat at the left end of the vertical or horizontal engine transmission box or the left end of the output shaft bearing seat of the horizontally installed variable frequency motor, which extends horizontally to the left. This output splined shaft is the input shaft splined shaft coaxial with the input shaft conical gear right-angle transmission box shell on the right side of the new multi-purpose shaft transmission box.

The left end output shaft bearing housing of the common vertical or horizontal engine transmission box shell or the left end output shaft bearing housing of the horizontally arranged installed motor, on the outer left side, is in a horizontal position and extends laterally to the left. The output splined shaft is inserted into the large bearing housing of the input shaft bevel gear right-angle transmission box shell of the new multi-purpose shaft transmission box body, which is installed in parallel and coaxially. The input shaft splined shaft coaxial with the output splined shaft connects the vertical or horizontal engine box shell or the variable frequency motor with the input shaft bevel gear right-angle transmission box shell of the new multi-purpose shaft transmission box body in a joint-like integral structure form, allowing the new multi-purpose shaft transmission box body to rotate around the coaxial splined shaft to the vertical position, horizontal position or any position to transmit power.

The above-mentioned end output splined shaft, which is installed on the left side of the ordinary vertical or horizontal engine block without using the overdrive gear transmission box housing structure, is in a horizontal position and extends laterally to the left, and transmits power into the large bearing housing of the input shaft bevel gear right-angle transmission box of the new multi-purpose shaft transmission box body installed side by side and coaxially on the left. Therefore, the new multi-purpose shaft transmission box can be matched with various types of engines as power sources.

Among them, the preferred installation of the new multi-purpose shaft transmission box is fixed in a vertical position relative to the engine and the frame to transmit power, and it is arranged and installed at the rear end of the rear drive shaft and the upper part of the frame of the go-kart, UTV, ATV and other vehicle bodies. Therefore, the universal joint output shaft bevel gear right-angle transmission box shell of the new multi-purpose shaft transmission box, the left universal joint output shaft bearing seat and the right universal joint output shaft bearing seat, and the universal joint output splined shaft extending outward to the left and right ends must be in a horizontal position and installed laterally on the chassis of the go-kart, UTV, ATV and other vehicle bodies. Moreover, when the new multi-purpose shaft transmission box is installed as an integrated structure with one of the preferred power sources such as a vertical engine, a horizontal engine, a CVT engine or a variable frequency motor, the input shaft splines of the new multi-purpose shaft transmission box and the universal joint output splined shaft are kept parallel to each other in the power transmission position.

The integral drive axle is connected to the frame of the go-kart, UTV, ATV and other vehicles through a longitudinally installed parallel four-bar linkage and a transversely installed Panhard rod. The integral drive axle is arranged and installed at the position of the rear drive shaft of the go-kart, UTV, ATV and other vehicles, and is located at the lower part of the frame in an integrated structure with the engine output shaft axis and the frame. There is a sufficient stroke distance between the integral drive axle and the frame. In the new multi-purpose shaft transmission structure on the upper part of the frame, the ordinary vertical or horizontal engine and CVT engine transmission box shell and the motor of the transverse output shaft, as well as the vertical or horizontal engine and CVT engine and the motor of the mid-mounted longitudinal output shaft, one of them is preferably installed in an integrated structure with the new multi-purpose shaft transmission box body arranged in a vertical position, and is also installed in an integrated structure with the frame of the go-kart, UTV, ATV and other vehicles through a rubber spring support. On the left and right sides of the universal joint output shaft bevel gear right-angle transmission box shell of the new multi-purpose shaft transmission box body at the lower part of the frame, the left and right universal joint output shaft bearing seats and the universal joint output splined shafts extending to the left and right are transversely arranged and installed on the go-kart, UTV, ATV and other vehicles. On the lower part of the frame of vehicles such as UTVs and ATVs, the left constant velocity ball cage universal joint outer cage is installed on the left end of the output splined shaft extending from the left universal joint output shaft bearing seat, and the right constant velocity ball cage universal joint outer cage is installed on the right end of the output splined shaft extending from the right universal joint output shaft bearing seat and fastened with a center screw. The inner cage center splined hole of the left constant velocity ball cage universal joint outer cage installed simultaneously is inserted with a drive half shaft extending laterally to the left of the vehicle body, and the inner cage center splined hole of the right constant velocity ball cage universal joint outer cage installed simultaneously is inserted with a drive half shaft extending laterally to the right of the vehicle body. The inner cages installed at both ends of the drive half shafts on the left and right sides mesh with the outer cages, and the two drive half shafts output power simultaneously to the left and right sides.

When a conventional vertical or horizontal engine, as well as a conventional CVT engine or motor with a transverse output shaft, is installed as an integrated structure with the new multi-purpose shaft transmission housing to drive the entire drive axle, taking the case where the drive axle gear transmission housing shell is installed horizontally at the left end of the drive axle tube as an example, it is preferred to use a single transmission half shaft that outputs power to the left. This half shaft is arranged horizontally inside the outer cage of the constant velocity ball cage universal joint on the left side of the universal joint output splined shaft. The transmission half shaft extends laterally to the left and is inserted into the outer cage of the constant velocity ball cage universal joint that extends out of the right input shaft bearing housing of the drive axle gear transmission housing shell welded at the left end of the drive axle tube, meshing with the center splined hole of the inner cage to transmit power. The power is then transmitted through the transmission gears and drive shafts installed inside the drive axle gear transmission housing shell at the left end of the drive axle tube to drive the wheels installed at both ends of the drive axle tube to rotate and move the vehicle forward.

It is also preferable to install a single force transmission half shaft that extends laterally to the right in the outer cage of the constant velocity ball joint on the right side of the universal joint output splined shaft. The transmission half shaft is installed in the center splined hole of the inner cage within the outer cage of the constant velocity ball joint and extends laterally to the right, then passes through the left input shaft bearing housing of the drive axle gear or chain sprocket transmission box shell welded to the right end of the integral drive axle tube and extends out to the left. It engages with the center splined hole of the inner cage and transmits power. The power is then transmitted through the drive axle gear or chain sprocket transmission box shell installed at the right end of the integral drive axle tube and the various sets of transmission gears and drive shafts installed therein to drive the wheels installed at both ends of the integral drive axle tube to rotate and move the vehicle forward.

In the right-angle transmission box housing of the universal joint output shaft conical gear of the new multi-purpose shaft transmission box body that uses a single drive half shaft to transmit power to the integral drive axle, there is a universal joint output shaft bearing seat on the left side and another on the right side. The middle position of the output shaft bearing housing of the universal joint can only be installed with a straight-through hard splined shaft. It is not possible to select an inter-axle differential assembly. Therefore, the two constant velocity ball cage universal joints on the outside of the conical gear right-angle transmission box housing of the universal joint output shaft do not have a differential function, ensuring that a single drive half shaft can smoothly transmit power.

Furthermore, the structural feature of the new multi-purpose shaft transmission housing installed in a split structure at the left side of the engine or motor, which is compatible with ordinary vertical or horizontal engines or motors and is applied to the integral drive axle for power transmission without using an overdrive gear (or sprocket chain) transmission housing, is as follows:
The input shaft bearing housing of the input shaft bevel gear right-angle transmission box shell of the new multi-purpose shaft transmission box body is installed in parallel and coaxially on the left side of the output shaft bearing housing of the ordinary vertical or horizontal engine box or the left side of the output shaft bearing housing of the horizontally arranged motor. The output splined shaft extends laterally to the left from the end of the output shaft bearing housing of the engine and the motor and is installed at the upper position of the rear drive shaft of the kart, UTV, ATV and other vehicle bodies. At the same time, the cylindrical shell and the input splined shaft of the input shaft bevel gear right-angle transmission box shell of the new multi-purpose shaft transmission box body installed horizontally and laterally to the right at the left side of the ordinary vertical or horizontal engine box or the left side of the horizontally arranged motor are in a position opposite to the output splined shaft extending laterally to the left from the left side of the output shaft bearing housing of the engine or the motor. Between the output splined shaft extending laterally to the left from the left side of the output shaft bearing housing of the engine or the motor and the input splined shaft extending laterally to the right and coaxially with it of the input shaft bevel gear right-angle transmission box shell of the new multi-purpose shaft transmission box body, there is an inner splined shaft sleeve that is coaxial with the two shafts and meshes with them.

The power output from the engine or motor is transmitted to the input shaft bevel gear right-angle transmission box housing of the new multi-purpose shaft transmission box through the internal tooth splined shaft sleeve meshing with the two shafts, and then to the input splined shaft at the input shaft end of the box housing, and further to the entire transmission system. Moreover, a dedicated fixed support is installed between the left end output shaft end of the ordinary vertical or horizontal engine or motor and the right input shaft end of the input shaft bevel gear right-angle transmission box housing of the new multi-purpose shaft transmission box, which is arranged in parallel and coaxially. The dedicated fixed support integrates the engine and the new multi-purpose shaft transmission box into an integral structure. The installation flange end face on the right side of the dedicated fixed support is adapted to the installation shape of the left end face of the engine or motor housing and is fastened by bolts at the corresponding positions. The flange end face on the left side of the dedicated fixed support is adapted to the flange of the input shaft large bearing housing active bevel gear cylindrical housing and the flange end face of the large bearing housing cylindrical housing of the input shaft bevel gear right-angle transmission box housing of the new multi-purpose shaft transmission box. The mating surfaces are adapted and fastened by bolts at corresponding positions. The inner splined sleeve, which is installed in the cavity of the dedicated fixed support and is coaxial with the output splined shaft of the engine or motor and the input splined shaft of the new multi-purpose shaft transmission housing, can rotate freely without interfering with other components.

When the ordinary vertical or horizontal engine or motor is not used with the overdrive gear transmission box housing, by installing a special fixed bracket between the engine or motor, the ordinary vertical or horizontal engine or motor is integrated with the new multi-purpose shaft transmission box to form an integral structure. In this case, the position of the flange end face of the special fixed bracket on the left side, which is in contact with the flange end face of the input shaft bevel gear right-angle transmission box housing outside the input shaft bearing housing, the active bevel gear cylindrical housing flange, and the large bearing housing cylindrical housing flange of the new multi-purpose shaft transmission box can be adjusted. The new multi-purpose shaft transmission box can be rotated around its input shaft or the coaxial engine output spline shaft to the vertical position, horizontal position or any angle position, and then fixed and power transmission is achieved through the corresponding bolt holes of the flange.

Preferably, the new multi-purpose shaft transmission box is fixedly installed on the frame in a vertical position to transmit power, and is arranged and installed at the rear end of the rear drive shaft of the go-kart, UTV, ATV and other vehicle bodies and at the upper part of the frame. Therefore, the universal joint output shaft bevel gear right-angle transmission box shell of the new multi-purpose shaft transmission box, the left universal joint output shaft bearing seat and the right universal joint output shaft bearing seat, and the universal joint output splined shaft extending outward to the left and right ends must be in a horizontal position and installed transversely on the chassis of the go-kart, UTV, ATV and other vehicle bodies. The left constant velocity ball cage universal joint and the right constant velocity ball cage universal joint are installed at both ends of the universal joint output splined shaft on the left and right sides of the left universal joint output shaft bearing seat and the right universal joint output shaft bearing seat, and the left power transmission half shaft and the right power transmission half shaft are respectively output to the left and right sides of the vehicle body to simultaneously output power. When the above-mentioned ordinary vertical engine, horizontal engine or horizontally arranged and installed electric motor is not used with the overdrive gear transmission box, and one of them is preferably selected as the power source, and when the new multi-purpose shaft transmission box is installed in conjunction, the input shaft splined shaft and the universal joint output splined shaft of the new multi-purpose shaft transmission box are kept in a parallel position for power transmission.

The integral drive axle is connected to the frame of the go-kart, UTV, ATV and other vehicles through a longitudinally installed parallelogram linkage and a transversely installed Panhard rod. The integral drive axle is arranged and installed at the position of the rear drive shaft of the go-kart, UTV, ATV and other vehicles. At the same time, the integral drive axle is located at the lower part of the frame, which is integrally structured with the engine output shaft, and there is sufficient space between the integral drive axle and the frame. The long stroke spacing; the new multi-purpose shaft transmission system on the upper part of the frame adopts a vertical or horizontal engine with a longitudinal output shaft, a CVT engine, and an electric motor. Preferably, one of the engines is installed as an integral structure with the new multi-purpose shaft transmission box body arranged in a vertical position, and then installed as an integral structure with the frame of the go-kart, UTV, ATV, etc. through rubber spring mounts. On the lower part of the frame, the universal joint output shaft of the new multi-purpose shaft transmission box body, the bevel gear right-angle transmission box shell, the left universal joint output shaft bearing seat, the right universal joint output shaft bearing seat, and the universal joint output splined shaft extending to the left and right are installed in a horizontal arrangement at the lower part of the frame of the go-kart, UTV, ATV, etc. The left universal joint output shaft bearing seat extends to the left, and the end of the output splined shaft is installed with the outer ball cage of the left constant velocity ball cage universal joint, and the right universal joint output shaft bearing seat extends to the right, and the end of the output splined shaft is installed with the outer ball cage of the right constant velocity ball cage universal joint and fastened with a center screw. The inner ball cage in the simultaneously installed left constant velocity ball cage universal joint is inserted with a transmission half shaft extending laterally to the left of the vehicle body, and the inner ball cage in the right constant velocity ball cage universal joint is inserted with a transmission half shaft extending laterally to the right of the vehicle body. The inner ball cages at both ends of the transmission half shafts are meshed with the outer ball cages, and the two transmission half shafts simultaneously output power to the left and right.

When a vertical engine, horizontal engine or a motor installed in a transverse position is used without a transfer gearbox and one of them is selected as the power source to be installed as an integrated structure with the new multi-purpose shaft transmission box to drive the power through the integral drive axle, taking the case where the transmission box shell of the drive axle gear or chain wheel chain is installed in a horizontal position at the left end of the drive axle tube as an example, the preferred single transmission half shaft for outputting power to the left is installed transversely in the outer ball cage of the constant velocity ball cage universal joint on the left side of the output splined shaft of the universal joint. The transmission half shaft installed in the center splined hole of the inner ball cage in the outer ball cage of the constant velocity ball cage universal joint extends laterally to the left and is inserted into the outer ball cage of the constant velocity ball cage universal joint with an extension function that extends outward from the right side of the input shaft bearing seat of the drive axle gear or chain wheel chain transmission box shell welded to the left end of the drive axle tube, and meshes with the center splined hole of the inner ball cage to transmit power. The power is then transmitted through the transmission gears and drive shafts installed in the drive axle gear or chain wheel chain transmission box shell at the left end of the drive axle tube to drive the wheels installed at both ends of the drive axle tube to rotate and move the vehicle forward.

It is also preferable to install a single transmission half shaft that outputs force to the right, arranged laterally, inside the outer cage of the constant velocity ball cage universal joint on the right side of the universal joint output spline shaft. The transmission half shaft installed in the inner cage center spline hole of the constant velocity ball cage universal joint extends laterally to the right and is inserted into the right end of the integral drive axle tube welded with the drive. The outer ball cage of the telescopic equal ball cage universal joint extending outward to the left from the bearing housing of the input shaft on the left side of the drive axle gear transmission box housing meshes with the center splined hole of the inner ball cage to transmit power. The power is then transmitted through the various sets of transmission gears and drive shafts installed in the drive axle gear transmission box housing at the right end of the integral drive axle tube to drive the wheels installed at both ends of the integral drive axle tube to rotate and move the vehicle forward.

In the right-angle transmission box housing of the universal joint output shaft conical gear of the new multi-purpose shaft transmission box body that uses a single drive half shaft to transmit power to the integral drive axle, there is a universal joint output shaft bearing seat on the left side and another on the right side. The middle position of the output shaft bearing housing of the universal joint can only be installed with a straight-through hard splined shaft, and cannot be equipped with an inter-axle differential assembly to install the left and right two universal joint output shafts on the conical gear right-angle transmission box housing outside the universal joint output shaft. Each constant-velocity ball cage universal joint does not have a differential function, ensuring that a single drive half shaft can smoothly transmit power.

Further, it includes an electric motor or a vertical or horizontal engine with a mid-mounted output shaft and a CVT engine longitudinally arranged and installed on the body of a go-kart, UTV, ATV, etc., and a new multi-purpose shaft transmission box body, which are integrated into an overall structure and are matched with an overall drive axle to transmit power. The end output shaft bearing seat of the electric motor or the vertical or horizontal engine with a mid-mounted output shaft and the CVT engine or the electric motor arranged longitudinally is in a horizontal position at the outer rear end and extends longitudinally backward, and is parallel to the longitudinal axis of the go-kart, UTV, ATV, etc. body.

The extended middle output splined shaft at the rear end of the longitudinally arranged middle output shaft engine or motor, which is in a horizontal position and extends longitudinally backward, is inserted into the input shaft bevel gear right-angle transmission box housing of the new multi-purpose shaft transmission box body, which is longitudinally arranged and installed outside the engine or motor's middle output shaft bearing seat in parallel and coaxially. Thus, the input splined shaft of the new multi-purpose shaft transmission box body's input shaft bevel gear right-angle transmission box housing is parallel to the longitudinal axis of the go-kart, UTV, ATV and other vehicle bodies.

Preferably, the new multi-purpose shaft transmission box is fixedly installed in a vertical position relative to the engine and the frame to transmit power, and is arranged and installed at the rear end of the rear drive shaft of the go-kart, UTV, ATV and other vehicle bodies and at the upper position of the frame. Therefore, the universal joint output shaft splined shaft inside the bevel gear right-angle transmission box shell of the new multi-purpose shaft transmission box, which is installed in the left universal joint output shaft bearing seat and the right universal joint output shaft bearing seat, must be in a horizontal position and arranged and installed laterally at the bottom of the go-kart, UTV, ATV and other vehicle bodies. The left end of the splined shaft of the universal joint output shaft on the left side of the bevel gear right-angle transmission box shell outside the bearing housing of the universal joint output shaft of the new multi-purpose shaft transmission box body is installed with the left constant velocity ball cage universal joint and the drive half shaft for transmitting power to the left side of the vehicle body horizontally. At the same time, the right end of the splined shaft of the universal joint output shaft outside the bearing housing of the universal joint output shaft on the right side is installed with the right constant velocity ball cage universal joint and the drive half shaft for transmitting power to the right side of the vehicle body horizontally.

Therefore, the input shaft bevel gear right-angle transmission box housing and the universal joint output shaft bevel gear right-angle transmission box housing of the new multi-purpose shaft transmission box are installed and fixed by rotating the intermediate transmission shaft support protection tube and the flange plate by 90° at the axial position of the intermediate transmission shaft, so that the input splined shaft in the input shaft bevel gear right-angle transmission box housing is installed in a longitudinal position and is parallel to the longitudinal axis of the go-kart, UTV, and ATV vehicle body. At the same time, it forms a 90° transmission phase difference with the universal joint output splined shaft installed in the universal joint output shaft bevel gear right-angle transmission box housing, which is arranged horizontally at the lower part of the vehicle body frame of the go-kart, UTV, and ATV.

When a new multi-purpose shaft transmission box is installed as an integrated structure with one of the power sources, such as a vertical engine with a longitudinally installed mid-mounted output shaft, a horizontal engine, a CVT engine, or a variable-frequency motor with a longitudinally installed position, the input shaft splines of the new multi-purpose shaft transmission box and the output splined shaft of the universal joint maintain a perpendicular power transmission position on the axial position of the intermediate transmission shaft.

A dedicated support seat for the end of the engine or motor is installed between the end output shaft bearing seat of the longitudinally arranged mid-mounted output shaft of the vertical or horizontal engine and CVT engine and the electric motor, and the input shaft bevel gear right-angle transmission box housing of the new multi-purpose shaft transmission box. The end face of the flange of the large bearing housing of the input shaft bevel gear right-angle transmission box housing and the vertical surface of the dedicated support seat for the end of the engine or motor are in close contact and fastened with bolts, thereby integrating the mid-mounted output splined shaft of the vertical or horizontal engine and CVT engine and the electric motor, which are longitudinally arranged and installed on the vehicle body of the go-kart, UTV, ATV, etc., with the new multi-purpose shaft transmission box into a single structure.

The integral drive axle is connected to the frame of the go-kart, UTV, ATV and other vehicles through a longitudinally installed parallelogram linkage and a transversely installed Panhard rod. The integral drive axle is arranged and installed at the position of the rear drive shaft of the go-kart, UTV, ATV and other vehicles. At the same time, the integral drive axle is located at the lower part of the frame and in line with the center of the engine output shaft which is integrally installed with the frame, and there is sufficient space between the integral drive axle and the frame. The long stroke spacing; the new multi-purpose shaft transmission system is installed on the upper part of the frame, featuring a vertical or horizontal engine with CVT and an electric motor, and preferably one of the engines is integrated with the new multi-purpose shaft transmission box body in a vertical position, and then installed as an integral structure with the frame of the go-kart, UTV, ATV, etc. through rubber spring mounts. On the lower part of the frame, the universal joint output shaft bevel gear right-angle transmission box shell of the new multi-purpose shaft transmission box body is laterally arranged, with the left and right universal joint output shaft bearing seats and the universal joint output splined shafts extending to both sides. The left universal joint output splined shaft end extending from the left universal joint output shaft bearing seat is equipped with a left constant velocity ball cage universal joint outer cage, and the right universal joint output splined shaft end extending from the right universal joint output shaft bearing seat is equipped with a right constant velocity ball cage universal joint outer cage, which are fastened with a center screw. The inner cage center splined hole of the left constant velocity ball cage universal joint outer cage is inserted with a transmission half shaft extending laterally to the left side of the vehicle body, and the inner cage center splined hole of the right constant velocity ball cage universal joint outer cage is inserted with a transmission half shaft extending laterally to the right side of the vehicle body. The inner cages at both ends of the transmission half shafts are meshed with the outer cages, and the two transmission half shafts simultaneously output power to both sides.

When a vertical or horizontal engine with a mid-mounted output shaft, a CVT engine, and an electric motor arranged longitudinally are integrated with a new multi-purpose shaft transmission box to form an integral structure for power transmission through an integral drive axle, taking the case where the transmission box shell is installed in a horizontal position at the left end of the integral drive axle tube and equipped with a drive axle gear or chain and sprocket as an example, it is preferred to install a single transmission half shaft that outputs power to the left horizontally inside the outer cage of the constant velocity ball joint on the left side of the output splined shaft of the universal joint. The transmission half shaft extends leftward and horizontally and is inserted into the outer cage of the constant velocity ball joint with telescopic function that extends out of the right side of the input shaft bearing housing of the drive axle gear or chain and sprocket transmission box shell welded to the left end of the integral drive axle tube, engaging with the center splined hole of the inner cage and transmitting power. The power is then transmitted through the transmission gears and drive shafts installed inside the drive axle gear or chain and sprocket transmission box shell at the left end of the integral drive axle tube to drive the wheels installed at both ends of the integral drive axle tube and move the vehicle.

It is also preferable to install a single transmission half shaft that outputs force to the right, arranged laterally, inside the outer cage of the constant velocity ball cage universal joint on the right side of the universal joint output spline shaft. The transmission half shaft installed in the inner cage center spline hole of the constant velocity ball cage universal joint extends laterally to the right and is inserted into the welded right end of the integral drive axle tube. The outer ball cage of the telescopic equal ball cage universal joint extending outward to the left from the bearing housing of the input shaft on the left side of the drive axle gear transmission box housing meshes with the center splined hole of the inner ball cage to transmit power, and the power is transmitted through the various sets of transmission gears and drive shafts installed in the drive axle gear transmission box housing at the right end of the integral drive axle tube to drive the wheels installed at both ends of the integral drive axle tube to rotate and drive the vehicle forward.

In the right-angle transmission box housing of the universal joint output shaft conical gear of the new multi-purpose shaft transmission box body that uses a single drive half shaft to transmit power to the integral drive axle, there is a universal joint output shaft bearing seat on the left side and another on the right side. The middle position of the output shaft bearing housing of the universal joint can only be fitted with a straight-through hard splined shaft. It is not possible to select and install an inter-axle differential assembly on the universal joint output shaft that is located outside the conical gear right-angle transmission box housing of the universal joint output shaft. The constant velocity ball cage universal joints do not have a differential function, ensuring that a single drive half shaft can smoothly transmit power.

Further, the features of including an electric motor longitudinally arranged and installed on the body of a go-kart, UTV, ATV, etc., and a vertical or horizontal engine with a mid-mounted output shaft, a CVT engine, and a new multi-purpose shaft transmission box body installed in a split structure, and a complete drive axle for power transmission are:
The motor installed in a longitudinal arrangement on the body of a go-kart, UTV, ATV, etc., or the output shaft of a mid-mounted vertical or horizontal engine and CVT engine, the rear end of the bearing seat of the output shaft is in a horizontal position and extends backward, and the mid-mounted output splined shaft is parallel to the longitudinal axis of the body of the go-kart, UTV, ATV, etc.

The short-structured output splined shaft that is arranged longitudinally and extends horizontally and rearward from the output shaft bearing housing at the end of the longitudinally arranged mid-mounted engine or motor requires the installation of a universal joint coupling between the input shaft of the input shaft bevel gear right-angle transmission box housing of the new type of multi-purpose shaft transmission housing and the input shaft that extends forward.

The mid-mounted output splined shaft, which is arranged longitudinally and extends horizontally and rearward from the outer end of the output shaft bearing housing of the longitudinally arranged engine or motor, is in a corresponding installation position with the input shaft of the new multi-purpose shaft transmission box, which is arranged side by side and coaxially with the outer end of the output shaft bearing housing of the engine or motor. The input shaft of the new multi-purpose shaft transmission box has a conical gear right-angle transmission box housing, and the input shaft extends forward. A universal joint coupling is installed between the end of the mid-mounted output splined shaft and the end of the input splined shaft that extends forward from the input shaft of the new multi-purpose shaft transmission box. Therefore, the input shaft of the new multi-purpose shaft transmission box is kept parallel to the longitudinal axis of the kart, UTV, ATV and other vehicle bodies.

Preferably, the new multi-purpose shaft transmission box is fixedly installed in a vertical position relative to the engine motor and the frame to transmit power, and is arranged and installed at the rear end of the rear drive shaft and the upper part of the frame of the go-kart, UTV, ATV and other vehicle bodies. Therefore, the universal joint output shaft bevel gear right-angle transmission box shell of the new multi-purpose shaft transmission box, the left universal joint output shaft bearing seat and the right universal joint output shaft bearing seat, and the universal joint output splined shaft extending outward to the left and right ends must be in a horizontal position and arranged and installed in the chassis position of the go-kart, UTV, ATV and other vehicle bodies. At the same time, the left constant velocity ball cage universal joint is installed at the end of the universal joint output splined shaft on the left side of the left universal joint output shaft bearing seat, and the transmission half shaft for transmitting power to the left is arranged and installed to output power laterally to the left side of the vehicle body. Similarly, the right constant velocity ball cage universal joint is installed at the end of the universal joint output splined shaft on the right side of the right universal joint output shaft bearing seat, and the transmission half shaft for transmitting power to the right is arranged and installed to output power laterally to the right side of the vehicle body.

Therefore, the input shaft bevel gear right-angle transmission box housing and the universal joint output shaft bevel gear right-angle transmission box housing of the new multi-purpose shaft transmission box are installed and fixed by rotating the intermediate transmission shaft support protection tube and the flange plate by 900 at the axial position of the intermediate transmission shaft, so that the input splined shaft in the input shaft bevel gear right-angle transmission box housing is installed in a longitudinal position and is parallel to the longitudinal axis of the go-kart, UTV, ATV and other vehicle bodies. At the same time, it has a 90° transmission phase difference with the universal joint output splined shaft 0 installed in the universal joint output shaft bevel gear right-angle transmission box housing, which is arranged laterally at the lower part of the frame of the go-kart, UTV, ATV and other vehicle bodies.

When a new multi-purpose shaft transmission box is installed as an integrated structure with one of the power sources, such as a vertical engine with a longitudinally installed mid-mounted output shaft, a horizontal engine, a CVT engine, or a variable-frequency motor with a longitudinally installed position, the splined input shaft and the splined output shaft of the universal joint of the new multi-purpose shaft transmission box maintain a mutually perpendicular power transmission position in the axial direction of the intermediate transmission shaft.

The dedicated support bracket for the vertical or horizontal engine and CVT engine or motor arranged longitudinally and the new multi-purpose shaft transmission box body is: a dedicated extended support seat for the engine or motor end is installed between the end output splined shaft of the vertically or horizontally arranged engine and CVT engine or motor and the input shaft bevel gear right-angle transmission box housing coaxially installed with it. The flange end face of the input shaft large bearing housing active bevel gear cylindrical shell on the horizontal direction of the input shaft end outside the input shaft bevel gear right-angle transmission box housing is in close contact with the vertical surface of the dedicated extended support seat for the engine or motor end and is fastened with bolts. Among them, the mid-mounted output shaft The universal joint coupling installed between the splined shaft at the end of the engine or motor and the input splined shaft at the input end of the conical gear right-angle transmission box housing of the input shaft is installed in the suitable cavity in the middle of the dedicated extended support seat to prevent interference during rotation. The above installation method adds a universal joint coupling between the vertical or horizontal engine with a mid-mounted output shaft and the CVT engine or the vertically arranged motor installed on the vehicle body of the go-kart, UTV, ATV, etc., and the conical gear right-angle transmission box housing of the input shaft of the new multi-purpose shaft transmission box, and integrates them into an overall structure through the dedicated extended support seat.

The integral drive axle is connected to the frame of the go-kart, UTV, ATV and other vehicles through a longitudinally installed parallel four-bar linkage and a transversely installed Panhard rod. The integral drive axle is arranged and installed at the position of the rear drive shaft of the go-kart, UTV, ATV and other vehicles, and is located at the lower part of the frame, which is integrally structured with the engine output shaft. There is a sufficient stroke distance between the integral drive axle and the frame. In the new multi-purpose shaft transmission system on the upper part of the frame, a vertical or horizontal engine with a longitudinal output shaft, a CVT engine, and an electric motor are adopted. Preferably, one of them is integrally structured with the new multi-purpose shaft transmission box body arranged in a vertical position and is also integrally structured with the frame of the go-kart, UTV, ATV and other vehicles through a rubber spring support. On the lower part of the frame, the universal joint output shaft bevel gear right-angle transmission box shell of the new multi-purpose shaft transmission box body, the left universal joint output shaft bearing seat and the right universal joint output shaft bearing seat, and the universal joint output splined shaft extending to the left and right are transversely arranged and installed at the lower part of the frame of the go-kart, UTV, ATV and other vehicles. The left universal joint output shaft bearing seat on the left side of the left universal joint output shaft bearing seat has an output splined shaft end head, on which a left constant velocity ball cage universal joint outer cage is installed. The right universal joint output shaft bearing seat on the right side of the right universal joint output shaft bearing seat has an output splined shaft end head, on which a right constant velocity ball cage universal joint outer cage is installed and fastened with a center screw. The inner cage center splined hole of the simultaneously installed left constant velocity ball cage universal joint outer cage has a transmission half shaft extending to the left side of the vehicle body installed, and the inner cage center splined hole of the right constant velocity ball cage universal joint outer cage has a transmission half shaft extending to the right side of the vehicle body installed. The inner cages and outer cages at both ends of the transmission half shafts are meshed with each other, and the two transmission half shafts simultaneously output power to the left and right sides.

When a vertical or horizontal engine with a mid-mounted output shaft, a CVT engine, and an electric motor are installed in a split structure with a new multi-purpose shaft transmission box to drive an integral drive axle for power transmission, taking the case where the left end of the integral drive axle tube is installed with a drive axle gear or chain wheel and the transmission box shell is in a horizontal installation position as an example, it is preferred to use a single The drive half shaft that outputs power to the left is arranged laterally inside the outer cage of the constant velocity ball cage universal joint on the left side of the output splined shaft of the universal joint. The drive half shaft, installed in the center splined hole of the inner cage inside the outer cage of the constant velocity ball cage universal joint, extends laterally to the left and is inserted into the outer cage of the constant velocity ball cage universal joint with telescopic function that extends out of the right side of the input shaft bearing housing of the drive axle gear or chain sprocket transmission box shell welded to the left end of the integral drive axle housing. It meshes with the center splined hole of the inner cage and transmits power. The power is then transmitted through the various sets of transmission gears and drive shafts installed inside the drive axle gear or chain sprocket transmission box shell at the left end of the integral drive axle housing to drive the wheels installed at both ends of the drive axle housing to rotate and move the vehicle forward.

It is also preferable to install a single force transmission half shaft that extends horizontally to the right in the outer ball cage of the constant velocity ball joint on the right side of the output splined shaft of the universal joint. The transmission half shaft installed in the center splined hole of the inner ball cage within the outer ball cage of the constant velocity ball joint extends horizontally to the right and is inserted into the outer ball cage of the constant velocity ball joint that extends to the left from the input shaft bearing seat on the left side of the drive axle gear transmission box housing welded to the right end of the integral drive axle tube, meshing with the center splined hole of the inner ball cage to transmit power. The power is then transmitted through the various sets of transmission gears and drive shafts installed in the drive axle gear transmission box housing at the right end of the integral drive axle tube to drive the wheels installed at both ends of the integral drive axle tube to rotate and move the vehicle forward.

In the right-angle transmission box housing of the universal joint output shaft conical gear of the new multi-purpose shaft transmission box body that uses a single drive half shaft to transmit power to the integral drive axle, there is a universal joint output shaft bearing seat on the left side and another on the right side. The middle position of the bearing housing of the output shaft of the universal joint can only be installed with a straight-through hard splined shaft. It is not possible to select and install an inter-axle differential assembly to enable the two sides of the universal joint output shaft installed outside the conical gear right-angle transmission box housing of the universal joint output shaft. The constant velocity ball cage universal joints do not have a differential function, ensuring that a single drive half shaft can smoothly transmit power.

Further, it includes the feature of being integrally structured and installed with a new multi-purpose shaft transmission box, independent suspension knuckle, and steering knuckle for power transmission, which is compatible with ordinary vertical or horizontal engines and ordinary CVT engines with a transverse output shaft, as well as electric motors installed in a transverse arrangement, and vertical or horizontal engines with a CVT and an electric motor installed in a longitudinal arrangement.

The universal joint output shaft bevel gear right-angle transmission box shell at both ends of the new multi-purpose shaft transmission box body integrated with various types of engine motors in the present invention is equipped with universal joint output spline shafts extending outward to the left and right in the universal joint output shaft bearing seats at both ends. At the left and right ends of the universal joint output spline shafts, two equal-speed ball cage universal joints are simultaneously installed, and the drive half shafts for outputting power laterally to the left and right are installed on both sides, thus enabling the output of power laterally to the left and right. Therefore, it can be integrated with various types of engine motors. The new multi-purpose integral-structured shaft transmission housing is also suitable for power transmission in the independent suspension knuckle steering knuckle.

The ordinary vertical or horizontal engine with a horizontal output shaft and the ordinary CVT engine motor equipped with an overdrive gear transmission box in the new multi-purpose shaft transmission system on the upper part of the frame, as well as the vertical or horizontal engine with a longitudinal output shaft and the CVT engine and motor in the middle position, preferably one of these engines is integrally installed with the input shaft bevel gear right-angle transmission box of the new multi-purpose shaft transmission box body in a vertical position, and is also integrally installed with the frame of the go-kart, UTV, ATV, etc. through rubber spring mounts. The left and right universal joint output shaft bearing seats of the new multi-purpose shaft transmission box body's universal joint output shaft bevel gear right-angle transmission box shell are laterally arranged and installed at the lower part of the frame of the go-kart, UTV, ATV, etc. The left constant velocity ball cage universal joint outer ball cage is simultaneously installed on the left end of the output splined shaft extending out of the left universal joint output shaft bearing seat, and the right constant velocity ball cage universal joint outer ball cage is simultaneously installed on the right end of the output splined shaft extending out of the right universal joint output shaft bearing seat and fastened with a center screw. The inner ball cage of the left constant velocity ball cage universal joint installed in the new multi-purpose shaft transmission box body's universal joint output shaft bearing seat is inserted into the center splined hole of the inner ball cage, and the transmission half shaft extending laterally to the left side of the vehicle body is installed. The inner ball cage installed at the right end of the transmission half shaft is meshed with the left constant velocity ball cage universal joint outer ball cage to transmit power to the left. The transmission half shaft extends laterally to the left and is installed in the center splined hole of the inner ball cage of the constant velocity ball cage universal joint with telescopic function installed in the left end of the independent suspension knuckle steering knuckle shaft hole on the left side of the vehicle body. The inner ball cage of the right constant velocity ball cage universal joint installed in the new multi-purpose shaft transmission box body's universal joint output shaft bearing seat is inserted into the center splined hole of the inner ball cage, and the transmission half shaft extending laterally to the right side of the vehicle body is installed. The inner ball cage installed at the left end of the transmission half shaft is meshed with the outer ball cage to transmit power to the right. The transmission half shaft extends laterally to the right and is installed in the center splined hole of the inner ball cage of the constant velocity ball cage universal joint with telescopic function installed in the right end of the independent suspension knuckle steering knuckle shaft hole on the right side of the vehicle body. The two knuckle steering knuckles on the left and right sides of the vehicle body, which are coaxial, are connected to the frame through a double A-arm, multi-link trailing arm or longitudinal swing arm, etc., and are preferably connected by a double A-arm. The two coaxial knuckle steering knuckles on the left and right sides of the vehicle body are arranged and installed at the position of the rear drive shaft of the go-kart, UTV, ATV, etc. The centerlines of the two coaxial knuckle steering knuckles are located at the lower part of the frame where the engine output shaft is integrally installed with the frame, and there is a sufficient stroke distance between the centerlines of the two coaxial knuckle steering knuckles and the frame. Insert the splined shaft of the constant velocity ball cage universal joint on the left side into the splined hole at the center of the knuckle shaft steering knuckle installed on the left side of the vehicle body, and integrate it with the left independent suspension knuckle shaft steering into a single structure. At the same time, the power transmission half shaft that outputs force to the left drives the constant velocity ball cage universal joint with telescopic function extending to the right from the knuckle shaft steering knuckle installed on the left side of the vehicle body to rotate. Similarly, insert the splined shaft of the constant velocity ball cage universal joint on the right side into the splined hole at the center of the knuckle shaft steering knuckle installed on the right side of the vehicle body, and integrate it with the right independent suspension knuckle shaft steering into a single structure. At the same time, the power transmission half shaft that outputs force to the right drives the constant velocity ball cage universal joint with telescopic function extending to the left from the knuckle shaft steering knuckle installed on the right side of the vehicle body to rotate. This simultaneously drives the two wheels installed on the left and right independent suspension knuckle shaft steering knuckles to rotate, propelling the vehicle forward.

In the middle position of the conical gear right-angle transmission box shell of the universal joint output shaft of the independent suspension knuckle of the vehicle, between the left universal joint output shaft bearing seat and the right universal joint output shaft bearing seat, an inter-axle differential can be optionally installed, so that the left constant velocity ball cage universal joint and the drive half shaft transmitting force to the left, which are installed on the left end of the universal joint output splined shaft extending outward from the left and right ends of the left and right universal joint output shaft bearing seats, and the right constant velocity ball cage universal joint and the drive half shaft transmitting force to the right, which are installed on the right end of the universal joint output splined shaft, as well as the left and right tires, have a differential function.

The above-mentioned new multi-purpose shaft transmission system for all-terrain vehicles is suitable for the power transmission structure form with the engine located at the rear and the rear axle drive.

Further, the feature of the new multi-purpose shaft transmission housing is that it is applied to the chassis of go-karts, UTVs, ATVs, etc., in the dual-axle four-wheel drive system, and it is used to distribute power to the front and rear dual drive axles when matched with various types of engines.

The longitudinally arranged electric motor installed on the vehicle body of go-karts, UTVs, ATVs, etc., and the vertical or horizontal engines with a mid-mounted longitudinal output shaft, as well as the CVT engine, are equipped with a new multi-purpose vertical shaft transmission box, which is installed in an integrated structure and can distribute power to the front and rear dual drive axles of the four-wheel drive system.

When one of the engines, such as an electric motor installed longitudinally on the body of a go-kart, UTV, ATV, etc., or a vertical engine, horizontal engine, or CVT engine with a mid-mounted longitudinal output shaft, is integrated with a new multi-purpose shaft transmission box body with a vertical input shaft bevel gear right-angle transmission box housing, the mid-mounted output splined shaft extending rearward and longitudinally from the bearing housing at the end of the engine or motor is parallel to the longitudinal axis of the go-kart, UTV, ATV, etc. body; the longitudinal arrangement The end output shaft bearing housing of the installed mid-mounted output shaft engine or motor is in a horizontal position and extends longitudinally backward. The mid-mounted output splined shaft is inserted into the input shaft bevel gear right-angle transmission box housing of the new multi-purpose shaft transmission box body, which is longitudinally installed outside the end output shaft bearing housing of the engine or motor and is coaxially arranged. It meshes with the internal teeth of the center splined hole of the driving bevel gear coaxially installed on the input shaft splined shaft. The input shaft splined shaft is fixed with a nut on the extended screw part outside the input shaft small bearing housing in the input shaft bevel gear right-angle transmission box housing of the new multi-purpose shaft transmission box body. Therefore, the input shaft splined shaft of the input shaft bevel gear right-angle transmission box housing of the new multi-purpose shaft transmission box body is parallel to the longitudinal axis of the go-kart, UTV, ATV and other vehicle bodies. In order to install the universal joint output shaft bevel gear right-angle transmission box housing of the new multi-purpose shaft transmission box body as a middle transfer case that can output power to the front and rear of the go-kart, UTV, ATV and other vehicle bodies, the universal joint output shaft bevel gear right-angle transmission box housing, the universal joint output shaft bearing housing and seat, and the extended universal joint output splined shaft must be arranged and installed in a longitudinal and horizontal position at the bottom of the engine. The universal joint output shaft bearing housing at the front end of the universal joint output shaft bevel gear right-angle transmission box housing of the new multi-purpose shaft transmission box body drives the front drive axle, and the universal joint output shaft bearing housing at the rear end drives the rear drive axle. It is installed as an integral structure with the engine or motor, so that the universal joint output shaft bearing housing at the front end and the rear end of the universal joint output shaft bevel gear right-angle transmission box housing of the new multi-purpose shaft transmission box body and the extended universal joint output splined shaft at both ends are parallel to the longitudinal axis of the go-kart, UTV, ATV and other vehicle bodies. At the same time, the input shaft splined shaft of the input shaft bevel gear right-angle transmission box housing and the universal joint output splined shaft of the universal joint output shaft bevel gear right-angle transmission box housing of the new multi-purpose shaft transmission box body are installed in the same vertical plane with the longitudinal axis of the go-kart, UTV, ATV and other vehicle bodies, and the three axes are parallel. The front end of the extended universal joint output splined shaft at the front end of the universal joint output shaft bevel gear right-angle transmission box housing is installed with a constant velocity ball cage universal joint outer cage and the drive half shaft that transmits power to the front drive axle, and the rear end of the extended universal joint output splined shaft at the rear end of the universal joint output shaft bevel gear right-angle transmission box housing is installed with a constant velocity ball cage universal joint outer cage and the drive half shaft that transmits power to the rear drive axle, simultaneously transmitting power to the front and rear drive axles.

Further, it includes a common vertical engine or horizontal engine equipped with an overdrive gear transmission box and a new multi-purpose shaft transmission box, which are installed as an integrated structure. This is applied to the front and rear dual-axle four-wheel drive system, providing forward drive. The transmission structure of the intermediate power transfer case for distributing power in the rear dual drive axles is described as follows: The output splined shaft, which is horizontally positioned and extends laterally to the right from the outer end of the output shaft bearing seat on the left side of the ordinary vertical or horizontal engine box, is inserted into the large bearing seat of the input shaft of the new multi-purpose shaft transmission case, which is installed side by side and coaxially on the right. It meshes with the internal splines of the center splined hole of the driving bevel gear installed on the input splined shaft. The input splined shaft of the new multi-purpose shaft transmission case, which is coaxial with the input bevel gear right-angle transmission case, extends outwards and is fastened with a nut on the threaded part outside the small bearing seat of the input shaft. Therefore, the input shaft of the new multi-purpose shaft transmission case, which is coaxial with the splined shaft and arranged laterally, is installed on the chassis of go-karts, UTVs, ATVs, etc. By installing the overdrive gear or chain sprocket and chain transmission case on the left side of the ordinary vertical or horizontal engine box, the output splined shaft, which is horizontally positioned and extends laterally to the right from the outer end of the output shaft bearing seat, connects the engine and the input bevel gear right-angle transmission case of the new multi-purpose shaft transmission case in a joint-like integral structure. This enables the new multi-purpose shaft transmission case to rotate around the input splined shaft, which is coaxial with the overdrive gear transmission case and extends laterally to the right from the outer end of the output shaft bearing seat, to any position, including horizontal, vertical, or any other direction, for power transmission.

The preferred structure for transmitting power by using the new multi-purpose shaft transmission box in a vertical installation mode and applying it to the power distribution of the front and rear drive axles through the intermediate power transfer box is as follows: Since the end output splined shaft of the overdrive gear transmission box installed on the left side of the ordinary vertical or horizontal engine box is in a horizontal position and extends laterally to the right, and is inserted into the input shaft large bearing housing of the input shaft conical gear direct drive box shell of the new multi-purpose shaft transmission box installed in parallel and coaxially on the right side, the input shaft conical gear right-angle drive box shell of the new multi-purpose shaft transmission box, with its input shaft large bearing housing and input shaft splined shaft in a horizontal position and laterally arranged, is installed on the body of the four-wheel drive kart, UTV, or ATV with front and rear double axles, and is parallel to the drive shafts of the front and rear drive axles. To enable the universal joint output shaft conical gear right-angle drive box shell of the new multi-purpose shaft transmission box to output power in both the front and rear directions of the kart, UTV, or ATV body, the universal joint output shaft bearing housing and universal joint output splined shaft of the universal joint output shaft conical gear right-angle drive box shell of the new multi-purpose shaft transmission box must be arranged in a horizontal position and longitudinally on the bottom of the engine and integrated with the engine as a single structure, so that the universal joint output shaft at the front end of the universal joint output shaft conical gear right-angle drive box shell can transmit power. The bearing seat of the output shaft of the universal joint at the front end and the bearing seat of the output shaft of the universal joint at the rear end, as well as the universal joint output splined shaft extending forward and backward, are installed in the same vertical plane as the longitudinal axis of the vehicle body of the go-kart, UTV, ATV, etc., with the two shafts parallel to each other. The front end of the universal joint output splined shaft is equipped with a front end constant velocity ball cage universal joint and a transmission half shaft extending forward to transmit power to the front drive axle, while the rear end is equipped with a rear end constant velocity ball cage universal joint and a transmission half shaft extending backward to transmit power to the rear drive axle. Therefore, the input shaft bevel gear right-angle transmission box shell of the new multi-purpose shaft transmission box and the output shaft of the universal joint bevel gear right-angle transmission box shell of the new multi-purpose shaft transmission box must be installed and fixed by rotating the intermediate transmission shaft protection support tube and the flange plate by 90 degrees at the axial position of the intermediate transmission shaft, so that the input splined shaft in the input shaft bevel gear right-angle transmission box shell of the new multi-purpose shaft transmission box, which is arranged horizontally, and the universal joint output splined shaft in the output shaft of the universal joint bevel gear right-angle transmission box shell of the new multi-purpose shaft transmission box, which is arranged longitudinally at the bottom of the engine, have a 90-degree transmission phase difference at the axial position of the intermediate transmission shaft.

When the new multi-purpose shaft transmission box is used in conjunction with various types of engines and applied to the power transmission of the front and rear dual-axle four-wheel drive, distributing power to the front and rear dual drive axles through the intermediate power transfer box, the intermediate transmission shaft and the intermediate transmission shaft protection support tube of the new multi-purpose shaft transmission box can be as short as possible according to their own needs, without causing transmission interference between the half shaft and the constant velocity ball cage universal joint. This allows the universal joint output shaft bevel gear right-angle transmission box of the new multi-purpose straight shaft transmission box to have its front and rear universal joint output shaft bearing seats close to the bottom of the engine, thereby reducing the overall height of the engine and the new multi-purpose shaft transmission box which is integrally installed with the engine.

Further, the transmission structure of a new type of multi-purpose shaft transmission box body is provided, which is installed in an integrated structure form with an electric motor and a conventional CVT engine with a horizontal output shaft installed on the body of a go-kart, UTV, ATV, etc., and is applied to a double-axle four-wheel drive system to distribute power to the front and rear drive axles. The output shaft bearing seat on the right side of the transmission box body of the electric motor and the conventional CVT engine with a horizontal output shaft is in a horizontal position and extends laterally to the right. The output splined shaft is inserted into the input shaft bevel gear right-angle transmission box housing of the new type of multi-purpose shaft transmission box body, which is installed side by side and coaxially on the right side, and meshes with the internal splines of the center splined hole of the driving bevel gear installed on the input splined shaft. The input splined shaft passes through the new type of multi-purpose shaft transmission box body. The input shaft bevel gear right-angle transmission box housing of the input shaft small bearing seat is fastened with a nut on the extended screw part. Therefore, the input shaft bevel gear right-angle transmission box housing of the CVT engine transmission box and the output spline shaft at the right end of the motor are coaxial with the input shaft spline of the new multi-purpose shaft transmission box housing. By installing the output shaft splines of the ordinary CVT engine transmission box and the motor end in a horizontal position and extending laterally to the right, the CVT engine transmission box or the motor is installed with the input shaft bevel gear right-angle transmission box housing of the new multi-purpose shaft transmission box in a joint-like integral structure form. This enables the input shaft bevel gear right-angle transmission box housing of the new multi-purpose shaft transmission box to rotate around the input shaft spline coaxial with the output shaft splines at the right end of the CVT engine transmission box or the motor to the horizontal position, vertical position or any direction position to transmit power.

The preferred ordinary CVT engine motor is equipped with a new multi-purpose shaft transmission box body, which is applied to the power transmission of the intermediate power transfer box for distributing power to the front and rear drive axles. The power is transmitted in a vertical arrangement. Since the end output splined shaft of the ordinary CVT engine transmission box or motor extends laterally to the right and is inserted into the input shaft large bearing seat of the input shaft bevel gear direct drive box shell of the new multi-purpose shaft transmission box body installed side by side and coaxially on the right, the input shaft large bearing seat and the input shaft splined shaft of the input shaft bevel gear right-angle drive box shell of the new multi-purpose shaft transmission box body are arranged horizontally and laterally on the body of the four-wheel drive kart UTV ATV with front and rear double axles, and are parallel to the drive shafts of the front and rear drive axles. In order to enable the universal joint output shaft bevel gear right-angle drive box shell of the new multi-purpose shaft transmission box body to output power to the front and rear drive axles of the kart UTV ATV, etc., the universal joint output shaft bearing seat and the universal joint output splined shaft of the universal joint output shaft bevel gear right-angle drive box shell of the new multi-purpose shaft transmission box body must be arranged horizontally and longitudinally at the bottom of the engine or motor and be integrated with the engine or motor. The front universal joint output bearing seat, the rear universal joint output shaft bearing seat, and the universal joint output splined shaft extending forward and backward of the universal joint output shaft bevel gear right-angle drive box shell must be in the same vertical plane as the longitudinal axis of the kart UTV ATV, etc., and be parallel to each other. At the front end of the universal joint output splined shaft extending forward and backward, a front constant velocity ball cage universal joint is installed, and a transmission half shaft for forward power output is installed to transmit power to the front drive axle. At the rear end of the universal joint output splined shaft extending forward and backward, a rear constant velocity ball cage universal joint is installed, and a transmission half shaft for rearward power output is installed to transmit power to the rear drive axle. Therefore, the new multi-purpose shaft transmission box body must be the input shaft bevel gear right-angle transmission box shell of the shaft transmission box body and the universal joint output shaft bevel gear right-angle transmission box shell of the new multi-purpose shaft transmission box body rotate the intermediate transmission shaft protection support tube and the flange plate at the axial position of the intermediate transmission shaft for installation and fixation, so that the input shaft splines in the input shaft bevel gear right-angle transmission box shell of the new multi-purpose shaft transmission box body are coaxial, in a horizontal position and laterally integrated with the engine and motor, and the universal joint output splines in the universal joint output shaft bevel gear right-angle transmission box shell of the new multi-purpose shaft transmission box body installed longitudinally at the bottom of the engine and motor have a 90° transmission phase difference at the axial position of the intermediate transmission shaft. When the new multi-purpose shaft transmission box body is used in conjunction with various types of engines and applied to the power distribution to the front and rear double drive axles in the power transfer box for the front and rear double drive axles, the intermediate transmission shaft and the intermediate transmission shaft protection support tube of the new multi-purpose shaft transmission box body can use shorter models as needed without causing transmission interference with the drive half shaft and the constant velocity ball cage universal joint, so that the universal joint output shaft bearing seat of the universal joint output shaft bevel gear right-angle transmission box of the new multi-purpose straight shaft transmission box body is close to the bottom of the engine to reduce the overall height of the engine and the new multi-purpose shaft transmission box body integrated with the engine.

The constant velocity ball cage universal joint used in the novel multi-purpose shaft drive system of the present invention serves as an exemplary illustration. In this drive system, it is not specifically limited to the constant velocity ball cage universal joint. To reduce the actual production and usage costs, the exemplary constant velocity ball cage universal joint in the present invention can be replaced with a cross-axis universal joint or a flexible universal joint coupling, or other types of universal joints for power transmission.

In the present invention, the three sets of transmission gear groups installed in the integral drive axle gear transmission box housing when the integral drive axle transmits power are for demonstration purposes. In this transmission system, it is not specifically limited to three sets of transmission gear combinations. During production and use, the number of transmission gears or sprocket groups installed in the integral drive axle gear transmission box housing can be increased or decreased according to actual working conditions to achieve the best transmission matching.

In the present invention, when the new multi-purpose shaft transmission box is used in conjunction with a conventional vertical or horizontal engine, the three sets of transmission gears installed in the overdrive gear transmission box shell between the engine and the new multi-purpose shaft transmission box serve as an exemplary illustration. In this transmission system, it is not specifically limited to three sets of transmission gears. During production and use, the number of overdrive gears or sprocket chain transmission gears installed in the transmission box shell can be increased or decreased according to actual working conditions to achieve the best transmission matching.

Compared with the existing technology, the present utility model has the following technical effects:
1. The engine and the drive axle are installed separately. The engine is mounted on the frame, reducing the unsprung mass of the drive axle and significantly enhancing the rebound response of the drive axle on uneven roads and the riding comfort of the occupants.
2. The integral drive axle is flexibly connected to the vehicle frame chassis through longitudinal parallel four-link and transverse Panhard rod. The integral drive axle can jump along with the road undulations and form a cross-axis condition with the front axle. The suspension structure in combination with this transmission system enables each wheel to better adhere to the undulating road surface while ensuring the smooth transmission of engine power to the road.
3. By eliminating the large integral cage-type rear suspension swing arm that is typically attached to the engine in the drive axle using this transmission system, it can be combined with the integral through-frame structure, making the overall vehicle design more aesthetically pleasing.
4. This transmission system employs a closed conical gear and shaft transmission method. The overall structure is simple and practical, significantly enhancing the power transmission efficiency and service life of the transmission system, while reducing the substantial initial investment and subsequent maintenance costs.
5. Good applicability; this transmission system can be adapted to various types of engines and CVT engine motors, including those with overdrive gears (or sprocket chains) transmission boxes, as well as those with mid-mounted output shafts, whether they are vertical or horizontal.
6. This transmission system can significantly enhance the technological competitiveness of domestic all-terrain vehicles and other products in the international market.

### DESCRIPTION OF DRAWINGS

The present invention will be described with reference to the accompanying drawings, in which:
Figure 1 is a structural schematic diagram of the new multi-purpose shaft transmission box of the present invention;
Figure 2 is a left view of the overall structure of the new multi-purpose shaft transmission box of the present invention, which is installed in conjunction with the overdrive gear transmission box for vertical or horizontal engines and applied to the overall drive axle transmission.
Figure 3 is a rear view of the new multi-purpose shaft transmission box of the present invention, which is installed in an integrated structure with the vertical or horizontal engine and the overdrive gear transmission box for application in the overall drive axle transmission.
Figure 4 shows the rear view of the new multi-purpose shaft transmission box of the present invention, which is installed as an integrated structure with the vertical or horizontal engine and the overdrive gear transmission box for the application in the independent suspension knuckle shaft steering knuckle transmission.
Figure 5 is a right view of the new type of purpose shaft transmission box body for the CVT engine or motor of the present invention installed as an integral structure and applied to the integral drive axle transmission.
Figure 6 is a rear view of the new multi-purpose shaft transmission box body for the CVT engine or motor of the present invention installed as an integrated structure and applied to the overall drive axle transmission.
Figure 7 is a rear view of the new multi-purpose shaft transmission box body for the CVT engine or motor of the present invention, which is installed as an integrated structure and applied to the drive of the independent suspension knuckle shaft steering knuckle.
Figure 8 is a left view of the new multi-purpose shaft transmission box body with a longitudinally installed input shaft for vertical or horizontal engines with a centrally located output shaft, which is installed as an integral structure and applied to the transmission of an integral drive axle in the present invention.
Figure 9 is a left view of the split structure of the new multi-purpose shaft transmission box body with a longitudinally installed input shaft for vertical or horizontal engines with a centrally located output shaft, which is applied to the overall drive axle transmission in the present invention.
Figure 10 is a rear view of the new multi-purpose shaft transmission housing of the present invention, which is installed as an integrated structure with a longitudinally installed motor and a longitudinally installed input shaft, applied to the transmission of an integral drive axle.
Figure 11 shows the left view of the overall structure of the new multi-purpose shaft transmission box body installed in a longitudinal position for the vertical engine with a mid-mounted output shaft, which is applied to the intermediate transfer box for distributing power to the front and rear dual drive axles.

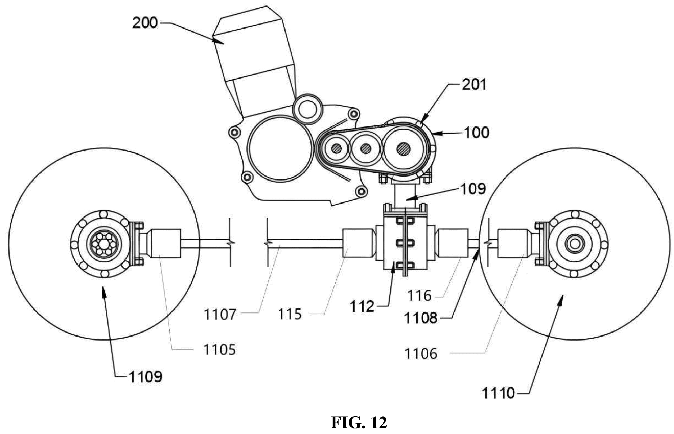

Figure 12 is a left view of the overall structure of the intermediate transfer case transmission of the present invention, which is applied to the power distribution to the front and rear double drive axles, with the overdrive gear transmission box installed on the ordinary vertical engine and the new multi-purpose shaft transmission box.

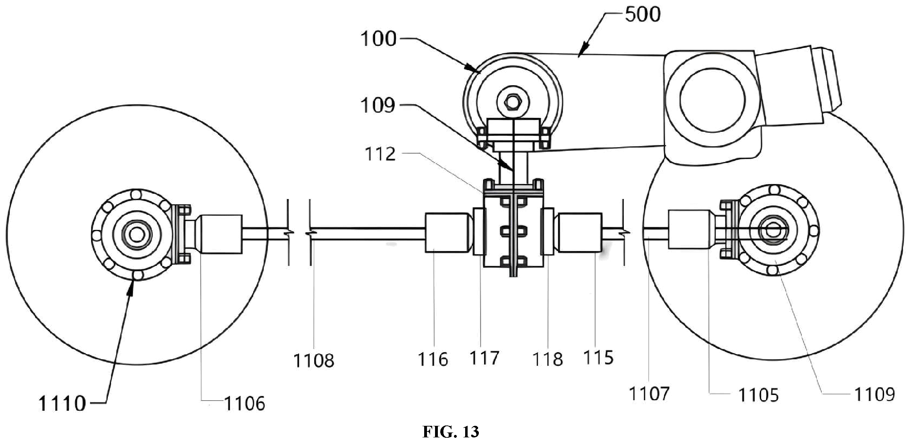

Figure 13 shows a right view of the overall structure of the new type of purpose shaft transmission box body installed in conjunction with a common CVT engine, which is applied to the intermediate transfer box transmission for distributing power to the front and rear dual drive axles in accordance with the present invention.

Reference numerals: 001 - End output shaft bearing housing;
100 - Input shaft conical gear right-angle transmission box housing;
101 - Input shaft coaxial splined shaft;
102 - Driving bevel gear;
103 - Large bearing housing for input shaft
104 - Small bearing housing for input shaft
105 - Driven conical gear cylindrical housing;
106 - Driven bevel gear;
107 - Driven bevel gear bearing housing
108 - Intermediate drive shaft;
109 - Intermediate drive shaft support protective tube;
110 - Flange of the cylindrical housing of the conical gear bearing housing at the end
111 - End active conical gear;
112 - Universal joint output shaft bevel gear right-angle transmission box housing;
113 One-way joint output spline shaft;
114 - Intermediate sliding tooth sleeve;
115 - Left constant velocity ball cage universal joint outer ball cage;
116 - Right constant velocity ball cage universal joint outer ball cage;
117 - Right side universal joint output shaft bearing housing;
118 - Left universal joint output shaft bearing housing;
119 - Left driven bevel gear;
120 - Right side driven bevel gear;
200 - Vertical or horizontal engines with transverse output shafts;
201 - Overbridge gear (or sprocket chain) transmission box housing;
205 - Outer ball cage of the telescopic constant velocity ball cage universal joint extending to the right;
206 - Left end drive axle gear (or sprocket chain) transmission box housing;
207 - Tyres;
208 - Integral Drive Axle
209 - Drive half shaft for power output to the left;
210 - Drive half shaft for rightward power output;
211 - First large gear of drive axle transmission
212 - The second intermediate drive gear;
213 - Third transmission pinion of the first input shaft;
215 - Outer ball cage of the telescopic constant velocity ball cage universal;
216 - Right-end drive axle gear (or sprocket chain) transmission box housing;
218 - First drive gear of the input shaft;
219 - the second intermediate transmission gear
220 - Third drive gear on the output shaft;
405 - Left independent suspension rightward-extending telescopic constant velocity ball cage universal joint;
407 - Tyre;
415 - Right side independent suspension constant velocity ball cage universal joint;
500 - CVT engine with transverse output shaft;
507 - Tire
600 - Electric motor with horizontal output shaft;
607 - Tires;
800 - Vertical or horizontal engines with a longitudinally positioned output shaft in the middle;
806 - Tire
907 - Tires;
908 - Universal Joint Coupling
1000 - Electric motor installed in longitudinal position;
1007 - Tyre;
1105 - Universal joint of the input shaft of the front drive axle;
1106 - Universal joint of the input shaft of the rear drive axle;
1107 - Drive half shaft for forward power output;
1108 - Drive half shaft for transmitting power backward;
1109 - Front drive axle;
1110 - Rear drive axle. Figure caption

### EMBODIMENTS OF THE PRESENT INVENTION

The following will describe in detail and clearly the technical solutions of the embodiments of the present invention with reference to the accompanying drawings. It is obvious that the described embodiments are only part of the embodiments of the present invention, not all of them. All other embodiments obtained by ordinary skilled persons in the art without making creative efforts based on the embodiments of the present invention fall within the scope of protection of the present invention.

### Example 1:

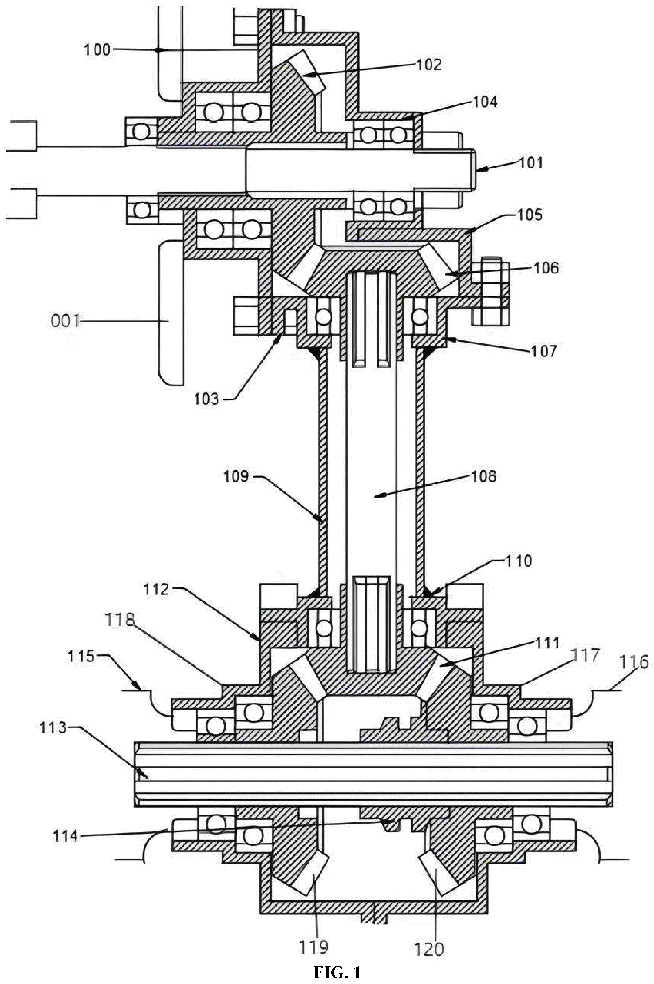

The new multi-purpose shaft drive housing shown in Figure 1 is composed of three parts: the input shaft bevel gear right-angle drive housing, the intermediate transmission shaft support and protection tube, and the universal joint output shaft bevel gear right-angle drive housing. Among them, the input shaft bevel gear right-angle drive housing 100 and the coaxial splined shaft 101 installed inside, as well as the input shaft. The active bevel gear 102 bearing assembly, the intermediate transmission shaft support and protection tube 109 of suitable length, the intermediate transmission shaft 108 installed in the tube cavity and the driven bevel gear 106 at the end of the intermediate transmission shaft, the universal joint output shaft bevel gear right-angle transmission box shell 112 and the bearing assembly of the active bevel gear 111 at the end of the intermediate transmission shaft, the left output shaft driven bevel gear 119 and the right output shaft driven bevel gear 120, as well as the universal joint output splined shaft 113 at the end are combined to form the structure; the input shaft bevel gear right-angle transmission box shell 100 is composed of multiple cylindrical shells of different diameters. The input shaft bevel gear right-angle transmission box shell 100 of the new multi-purpose shaft transmission box includes the large bearing housing 103 cylindrical shell and the active bevel gear cylindrical shell, the small bearing housing 104 cylindrical shell and the driven bevel gear cylindrical shell 105 of the intermediate transmission shaft and the driven bevel gear bearing housing 107 cylindrical shell of the intermediate transmission shaft, which are combined to form an irregular input shaft bevel gear right-angle transmission box shell 100. The large bearing housing 103 cylindrical shell and the active bevel gear cylindrical shell are welded together in the horizontal position, and the driven bevel gear cylindrical shell 105 of the intermediate transmission shaft is welded to the large bearing housing 103 cylindrical shell and the small bearing housing 104 cylindrical shell in the vertical direction. The flange of the active bevel gear cylindrical shell is fastened to the flange of the large bearing housing 103 cylindrical shell with bolts in the horizontal direction, and the flange of the driven bevel gear bearing housing 107 cylindrical shell of the intermediate transmission shaft is fastened to the flange of the driven bevel gear cylindrical shell 105 of the intermediate transmission shaft with bolts in the vertical direction. The input shaft bevel gear right-angle transmission box shell 100 of the new multi-purpose shaft transmission box is equipped with the input shaft coaxial splined shaft 101, the active bevel gear 102 assembly of the input shaft and the intermediate transmission shaft 108, and the driven bevel gear 106 assembly at the end of the intermediate transmission shaft. The splined shaft at the end of the output shaft on the right side of the overdrive gear or chain and sprocket transmission box shell 201 installed on the left side of the vertical or horizontal engine 200, or the splined shaft at the end of the output shaft on the right side of the CVT engine 500 or the electric motor 600 with the horizontal output shaft, which is in a horizontal position and extends to the right, is inserted into the input shaft bevel gear right-angle transmission box shell 100 of the new multi-purpose shaft transmission box, which is installed in parallel and coaxially. Two sets of large bearings are installed in the large bearing housing 103 cylindrical shell in the horizontal direction of the input shaft bevel gear right-angle transmission box shell 100, and the internal splined shaft sleeve that can mesh with the input shaft coaxial splined shaft 101 is installed in the large bearing holes. The inner end of the internal splined shaft sleeve is welded with the active bevel gear 102, forming an integrated internal splined shaft with the active bevel gear 102 assembly. Two sets of small bearings are installed in the small bearing housing 104 cylindrical shell in the horizontal direction of the input shaft bevel gear right-angle transmission box shell 100. On both sides of the small bearing hole, there are adjustment shims for the clearance. The output shaft extending horizontally to the right from the end of the output shaft bearing seat 001 on the left side of the vertical or horizontal engine 200 (with overdrive gears or chain sprocket and chain) transmission box shell 201, or the output shaft extending horizontally to the right from the end of the output shaft bearing seat 001 on the right side of the CVT engine 500 with a horizontal output shaft or the electric motor 600 with a horizontal output shaft transmission box shell, is preferably the right end output shaft of one of these engines. It is inserted into the internal splined hole of the driving bevel gear 102 installed in the large bearing hole of the input shaft bevel gear right-angle transmission box shell 100 of the new multi-purpose shaft transmission box. The splined part of the input shaft splined shaft 101, which is coaxial with the output shaft splines, meshes with it and transmits power. The smooth part of the same shaft then passes through the bearing holes of the two sets of small bearings installed in the cylindrical shell of the input shaft small bearing seat 104 and is fastened with a large nut at the exposed screw part at the end of the cylindrical shell of the input shaft small bearing seat 104. In the above structure, the input shaft bevel gear right-angle transmission box shell 100 of the new multi-purpose shaft transmission box is installed as an integral structure with the overdrive gear or chain sprocket and chain transmission box shell 201 of the vertical or horizontal engine 200, or with the transmission box shell of the CVT engine 500 or the electric motor 600 with a horizontal output shaft. The output shaft extending horizontally to the right from the end of the output shaft bearing seat 001 on the left side of the vertical or horizontal engine 200 (with overdrive gears or chain sprocket and chain) transmission box shell 201, or the output shaft extending horizontally to the right from the end of the output shaft bearing seat 001 on the right side of the CVT engine 500 with a horizontal output shaft or the electric motor 600 with a horizontal output shaft transmission box shell, is the input shaft splined shaft 101 coaxial with the input shaft in the input shaft bevel gear right-angle transmission box shell 100.

The intermediate transmission shaft support and protection tube 109 of the new multi-purpose shaft transmission box is composed of multiple sets of cylindrical shell tubes of different diameters and lengths, including: the cylindrical shell of the driven conical gear bearing seat 107 for the intermediate transmission shaft in the vertical direction, the cylindrical shell of the intermediate transmission shaft support and protection tube 109 with an appropriate length, and the cylindrical shell of the driven conical gear bearing seat 110 at the end of the intermediate transmission shaft, which are combined into a coaxial intermediate transmission shaft support and protection tube 109. In the vertical direction, the flange of the cylindrical shell 105 of the driven conical gear of the input shaft conical gear right-angle transmission box housing is fastened to the flange of the cylindrical shell of the driven conical gear bearing seat 107 of the intermediate transmission shaft support and protection tube with bolts. In the vertical direction, the flange of the cylindrical shell of the driven conical gear bearing seat 110 at the end of the intermediate transmission shaft of the intermediate transmission shaft support and protection tube 109 is fastened to the flange at the top of the universal joint output shaft conical gear right-angle transmission box housing 112 with bolts. The driven conical gear 106 at the end of the intermediate transmission shaft, which is installed in a vertical direction, is installed in the cylindrical shell of the driven conical gear bearing seat 107 in the vertical direction, while the horizontal position of the input shaft and the splined shaft 101 coaxial with it in the input shaft conical gear right-angle transmission box housing 100 are arranged in a vertical installation direction. The driving bevel gear 102 on the input shaft installed on the splined shaft 101 coaxial with the input shaft meshes with the driven bevel gear 106 at the end of the intermediate transmission shaft installed vertically to transmit power. The intermediate transmission shaft 108 of suitable length is installed in the tube cavity of the intermediate transmission shaft support and protection tube 109, which is installed perpendicularly to the splined shaft 101 coaxial with the input shaft in a horizontal position. The upper end of the splined head of the intermediate transmission shaft 108 is inserted into the input shaft bevel gear right-angle transmission box housing 100 and meshes with the splined slot in the center splined hole of the driven bevel gear 106 meshing with the driving bevel gear 102. The lower end of the splined head of the intermediate transmission shaft 108 is inserted into the universal joint output shaft bevel gear right-angle transmission box housing 112 and meshes with the splined slot in the center splined hole of the driving bevel gear 111 at the end of the intermediate transmission shaft, which meshes with the left driven bevel gear 119 and the right driven bevel gear 120 installed on the horizontal universal joint output splined shaft 113 to transmit power.

The conical gear right-angle transmission box shell 112 of the universal joint output shaft of the new multi-purpose shaft transmission box is composed of multiple cylindrical shells of different diameters, including: the cylindrical shell of the left universal joint output shaft bearing seat 118 in the horizontal position, the cylindrical shell of the right universal joint output shaft bearing seat 117 in the horizontal position, the cylindrical shell 112 of the universal joint output shaft conical gear in the middle position, and the cylindrical shell 110 of the end conical gear of the intermediate transmission shaft installed in the vertical position. On the left side of the conical gear right-angle transmission box shell 112 of the universal joint output shaft, there is a cylindrical shell of the left universal joint output shaft bearing seat 118, and on the right side, there is a cylindrical shell of the right universal joint output shaft bearing seat 117. At the top of the cylindrical shell 112 of the conical gear right-angle transmission box of the universal joint output shaft, a cylindrical shell 110 of the end conical gear bearing seat of the intermediate transmission shaft is installed in the vertical direction. The flange plate at the bottom end of the intermediate transmission shaft support and protection tube 109 of the cylindrical shell 110 of the end conical gear bearing seat is fastened to the flange plate at the top of the conical gear right-angle transmission box shell 112 of the universal joint output shaft with bolts.

The end driving bevel gear 111 of the intermediate transmission shaft 108, which is installed vertically in the universal joint output bevel gear right-angle transmission box housing 112, is the driving bevel gear 111 that meshes with the intermediate transmission shaft 108 in the universal joint output bevel gear right-angle transmission box housing 112. The end driving bevel gear 111 that meshes with the intermediate transmission shaft 108 is installed in the cylindrical housing of the end bevel gear bearing seat 110 of the intermediate transmission shaft 108, and it meshes with the left driven bevel gear 119 and the right driven bevel gear 120 installed on the universal joint output splined shaft 113 in the horizontal position within the universal joint output bevel gear right-angle transmission box housing 112 to transmit power.

In the horizontal left and right cylindrical shells of the universal joint output shaft bevel gear right-angle transmission box housing 112, there are two sets of bearings installed respectively. In the bearing holes of these two sets of bearings, the left driven bevel gear 119 and the right driven bevel gear 120 are installed respectively. The end universal joint output splined shaft 113 is inserted into the center holes of the left and right driven bevel gears 119 and 120. In the middle position of the end universal joint output splined shaft 113, the middle sliding gear sleeve 114 is installed. The center holes of the left and right driven bevel gears 119 and 120 are smooth holes without internal splined grooves, while the center hole of the middle sliding gear sleeve 114 has an internal splined groove structure and meshes with the end universal joint output splined shaft 113. At the same time, the sliding gear sleeve can slide left and right, meshing with the inner teeth of the left driven bevel gear 119 or the right driven bevel gear 120 on the end universal joint output splined shaft 113, thereby enabling the end output shaft driven bevel gears and the end universal joint output splined shaft 113 to rotate in both forward and reverse directions, providing the vehicle with the function of forward and reverse gears. Meanwhile, on the left end of the end universal joint output splined shaft 113 outside the left universal joint output shaft bearing housing 118, the left constant velocity ball cage universal joint outer cage 115 is installed, and on the right end of the end universal joint output splined shaft 113 outside the right universal joint output shaft bearing housing 117, the right constant velocity ball cage universal joint outer cage 116 is installed, simultaneously transmitting power to both left and right sides, providing convenient conditions for the subsequent installation of the drive half shafts.

The semi-axle differential can be optionally installed in the conical gear right-angle transmission box housing 112 of the universal joint output shaft, enabling the left and right universal joint output shaft splined ends 113, which are equipped with two equal-speed ball cage universal joints, to have differential function. Inside the conical gear right-angle transmission box housing 112, two sets of bearings are respectively installed in the left universal joint output shaft bearing seat 118 and the right universal joint output shaft bearing seat 117 at the horizontal position. The edges of the protrusions on both sides of the differential housing are respectively installed in the bearing holes of these two sets of bearings. Inside the differential housing, a differential gear assembly is installed, and outside the differential housing, a conical gear 111 for the end output shaft differential driven gear is installed, which meshes with the vertical intermediate transmission shaft 108. Meanwhile, two splined half shafts for left and right power output are respectively inserted into the bearing holes of the left universal joint output shaft bearing seat 118 and the right universal joint output shaft bearing seat 117, and these two splined half shafts are respectively inserted into the center splined holes of the left and right differential conical gears installed inside the differential housing and mesh with each other. Additionally, in the splined half shaft of the universal joint output shaft, The left end is equipped with the left constant velocity ball cage universal joint outer cage 115, and the right end of the universal joint output shaft splined half shaft is installed with the right constant velocity ball cage universal joint outer cage 116, simultaneously transmitting power to both the left and right ends.

A new multi-purpose shaft drive system for all-terrain vehicles, characterized by a structure with an overdrive gear or sprocket chain transmission box housing, includes:
When the common vertical or horizontal engine 200 is installed as an integral structure with the input shaft bevel gear right-angle transmission box housing 100, a set of overdrive gears or chain and sprocket transmission box 201 must be added between the common vertical or horizontal engine 200 and the new multi-purpose shaft transmission box. The power output from the engine 200 is smoothly transferred to the input shaft splined shaft 101 of the input shaft bevel gear right-angle transmission box housing 100 of the new multi-purpose shaft transmission box. Meanwhile, the output splined shaft on the right side of the bearing housing 001 at the end of the overdrive gears (or chain and sprocket transmission box 201) is in a horizontal position and extends horizontally to the right, which is the input shaft splined shaft 101 of the new multi-purpose shaft transmission box. It can assist the new multi-purpose shaft transmission box to rotate to a horizontal position, a vertical position, or any angle position to transmit power.

The shell 201 of the overdrive gear or sprocket chain transmission box is formed by welding an elliptical shell in longitudinal section and a rectangular shell in cross section, with the two ends of the rectangular shell being semi-cylindrical shells, into an elliptical shell with a suitable length, thickness and internal gear combination or sprocket chain combination installation space. It is installed horizontally on the outside of the output shaft box on the left side of the vertical or horizontal engine 200 and fastened with bolts at a position opposite to the engine output splined shaft on the left side of the engine, thus integrating the vertical or horizontal engine 200 and the overdrive gear (or sprocket chain transmission box 201 into a single structure. The splined output shaft on the left side of the vertical or horizontal engine 200 is inserted into the center splined hole on the right side of the first set of input shaft transmission gears (or sprockets 218 in the overdrive gear (or sprocket chain transmission box 201, engaging and transmitting power.

Taking the overdrive gear transmission box as an example, inside the overdrive gear or chain wheel and chain transmission box housing 201, there are multiple sets of transmission gears arranged in sequence and meshing with each other, including the first set of overdrive gears 218, the second intermediate transmission gear 219, and the third end output shaft transmission gear 220 of the overdrive gear transmission box. On the inner walls of the left and right sides of the overdrive gear transmission box housing 201 at the input shaft end, there are two sets of first input shaft bearing seats installed. Inside these two sets of bearing seats, there are two sets of bearings and the first set of input shaft transmission gears 218. On the right side of the center splined hole of the first transmission gear 218, the splined output shaft on the left side of the vertical or horizontal engine 200 is inserted and installed. On the inner walls of the left and right sides of the overdrive gear transmission box housing 201 at the middle position, there are two sets of intermediate transmission gear bearing seats installed respectively. Inside these bearing seats, there are two sets of bearings and the second intermediate transmission gear 219. Inside the housing, there are bearings and a transmission gear shaft, along with a second intermediate transmission gear 219 assembly installed on the gear shaft. On the inner walls of the left and right sides of the housing at the end of the output shaft, there are end output shaft bearing seats 001, within which bearings and an end output splined shaft, along with a third end output shaft transmission gear 220 assembly installed on the splined shaft, are installed. The end output splined shaft is in a horizontal position and extends laterally to the right out of the end right output shaft bearing seat 001 of the overdrive gear transmission housing 201 and then enters the input shaft bevel gear right-angle transmission housing 100 of the new multi-purpose shaft transmission housing, which is coaxially installed side by side on the right, and meshes with the center splined hole of the input shaft driving bevel gear 102 to transmit power.

Taking the overpass sprocket chain drive box as an example, the transmission structure inside the overpass sprocket chain drive box is improved from the overpass gear drive box. Specifically, the first transmission gear 218 installed on the first input shaft 1 at the input end of the overpass gear drive box 201 is replaced with the first transmission sprocket; the second transmission gear 219 installed in the middle of the overpass gear drive box is replaced with the second intermediate chain guide roller; the third transmission gear 220 installed on the output spline shaft at the end is replaced with the third transmission sprocket at the end. Inside the overpass sprocket chain drive box, the first transmission sprocket on the first input shaft and the third transmission sprocket at the end of the output shaft are meshed with each other through a transmission chain to transmit power, and the second intermediate chain guide roller assists the chain to run smoothly. The shell shape, installation position and function of the overpass gear drive box and the overpass sprocket chain drive box are the same, and the installation positions of each shaft inside the transmission box shell are also the same.

A new multi-purpose shaft drive system for all-terrain vehicles, featuring an integrated drive axle, is characterized by:
The integral drive axle 208 is composed of a tubular axle housing of suitable length and an elliptical drive axle gear or sprocket chain drive box housing installed at the left or right end of the axle housing, forming an integral drive axle housing. An integral drive shaft is inserted and installed inside the axle housing of the integral drive axle 208. The left end drive axle gear or sprocket chain drive box housing 206 welded at the left end of the axle housing or the right end drive axle gear or sprocket chain drive box housing 216 welded at the right end of the axle housing is formed by welding the two ends of a rectangular housing with semi-cylindrical housing ends, resulting in an elliptical cross-section of suitable length, which is suitable for installing a transmission gear assembly or a transmission sprocket chain assembly.

Take the installation of the drive axle gear transmission box housing at the left end of the integral drive axle tube as an example;
Inside the left-end drive axle gear transmission box housing 206 installed at the left end of the integral drive axle 208, there are multiple sets of transmission gears arranged in sequence and meshing with each other. On the inner walls on both sides of the integral drive axle 208 at the end position of the left-end drive axle gear transmission box housing 206, there are left and right symmetrical drive axle tube bearing seats welded. Inside these symmetrical bearing seats, there is an integral drive shaft inserted, and on this integral drive shaft, there is a first large drive shaft transmission gear 211 installed. On both sides of the first large gear, there are bearings installed on the integral drive shaft, and these bearings are also installed in the left and right symmetrical drive axle tube bearing seats on the inner walls of the left-end drive axle gear transmission box housing 206, keeping the first large gear 211 in the middle of the two bearing seats for transmission. On the inner walls of the left-end drive axle gear transmission box housing 206 at the middle position, there are left and right symmetrical bearing seats for the intermediate transmission gear assembly. Inside these two bearing seats, there are bearings and intermediate transmission gear shafts installed, and on the intermediate transmission gear shafts, there is a second intermediate transmission gear 212 installed in the middle of the two bearing seats. On the inner walls of the left-end drive axle gear or chain wheel and chain transmission box housing 206 at the input shaft end, there are left and right symmetrical input shaft bearing seats. Inside the bearing holes of these two bearing seats, there is an input splined shaft with an extendable function of the constant velocity ball cage universal joint outer cage 205 inserted and extending to the right. On the input splined shaft, there is a third input shaft transmission pinion gear 213 installed in the middle of the two bearing seats. The splined shaft of the constant velocity ball cage universal joint outer cage 205 extending to the right at the right end of the input shaft of the left-end drive axle gear transmission box housing 206 passes through the bearing seat at the input shaft end of the left-end drive axle gear transmission box housing 206, and the extended part on the left is fastened with a nut. Inside the bearing seats at both ends of the integral drive axle 208, there are left and right two sets of bearings installed to fix the integral drive shaft inside the tube cavity of the integral drive axle 208. At both ends of the integral drive shaft, there are splines, allowing the installation of flange plates for fixing wheel tires and flange plates for fixing brake discs. The extended parts of the flange plates at both ends of the integral drive shaft are fastened with nuts. Outside the integral drive axle tube, there are welded longitudinal and transverse push-pull rod brackets, shock absorber spring brackets, brake pump brackets, and other accessories to control the movement posture of the integral drive axle.

To expand the broader applicability of the integral drive axle, according to the vehicle usage requirements, the first large gear installed on the integral drive shaft within the left-end drive axle gear transmission box housing 206 at the left end of the integral drive axle tube 208 can be replaced with a differential transmission large gear assembly 211 with differential function, and the integral drive shaft installed within the integral drive axle tube can be replaced with two drive axle half shafts suitable for the differential assembly, one on the left and the other on the right. The large gear assembly 211 of the differential drive is installed in the gear transmission box housing 206 of the drive axle, in the middle position between the two symmetrical axle tube bearing seats on the left and right. The flange edges on both sides of the differential housing are respectively embedded in the left and right axle tube bearing seats of the drive axle gear transmission box housing. Inside the differential housing, there is a differential bevel gear assembly. The splined shafts of the left and right drive axle half shafts that are inserted into both ends of the drive axle 208 tube are respectively inserted into the splined shaft holes at the centers of the left and right differential bevel gears in the differential housing and mesh with each other to transmit power. Bearings are installed in the bearing seats at both ends of the drive axle 208 tube to fix the left and right drive axle half shafts, enabling the left and right drive axle half shafts to have a differential function.

Take the installation of the drive axle sprocket chain drive box housing at the left end of the integral drive axle tube as an example;
The transmission chain and sprocket assembly in the integral drive axle chain and sprocket transmission box housing is an improvement of the transmission gear structure in the integral drive axle gear transmission box housing. Specifically, the first large drive gear 211 installed on the integral drive shaft at the middle position between the left and right symmetrical drive axle tube bearing seats in the left end drive axle gear transmission box housing 206 of the integral drive axle 208 is replaced with a first large sprocket. The second intermediate transmission gear 212 installed on the intermediate transmission gear shaft at the middle position in the integral drive axle gear transmission box housing is replaced with an intermediate chain guide wheel. The third small drive gear 213 installed on the input shaft splined shaft, which is installed with the outer cage 205 of the constant velocity ball cage universal joint, between the left and right symmetrical input shaft bearing seats in the left end drive axle gear transmission box housing 206 is replaced with a third small sprocket. The transmission sprockets are meshed with a set of transmission chains to transmit power, and the intermediate chain guide wheel assists in the smooth operation of the chain.

The housing of the chain and sprocket transmission box of the integral drive axle and the housing of the gear transmission box of the integral drive axle have the same shape, the same installation position, the same function and the same installation position of each shaft in the transmission box housing.

To accommodate the output positions of the left and right drive shafts 209 and 210 that extend laterally to the left and right, respectively, from the left and right ends of the output shaft splined shaft 113 of the universal joint output shaft bevel gear right-angle transmission housing 112, the left drive axle gear (or sprocket chain) transmission housing 206 can be preferably welded to the left end of the overall drive axle 208 bridge tube, or the right drive axle gear (or sprocket chain) transmission housing 216 can be preferably welded to the right end of the overall drive axle 208 bridge tube; the left drive axle gear (or sprocket chain transmission housing 206) welded to the left end of the overall drive axle 208 bridge tube or the right drive axle gear (or sprocket chain transmission housing 216) welded to the right end of the overall drive axle 208 bridge tube are both in a horizontal position parallel to the ground. The installation position of the state can also be in a vertical position or at any position convenient for installing the half shaft for transmission, among which the preferred example is the horizontal position for power transmission.

A new multi-purpose shaft transmission system for all-terrain vehicles includes the features of being installed as an integrated structure with a common vertical or horizontal engine, a transfer case with overdrive gears or sprocket chains, and a new multi-purpose shaft transmission case, and transmitting power to the integral drive axle.

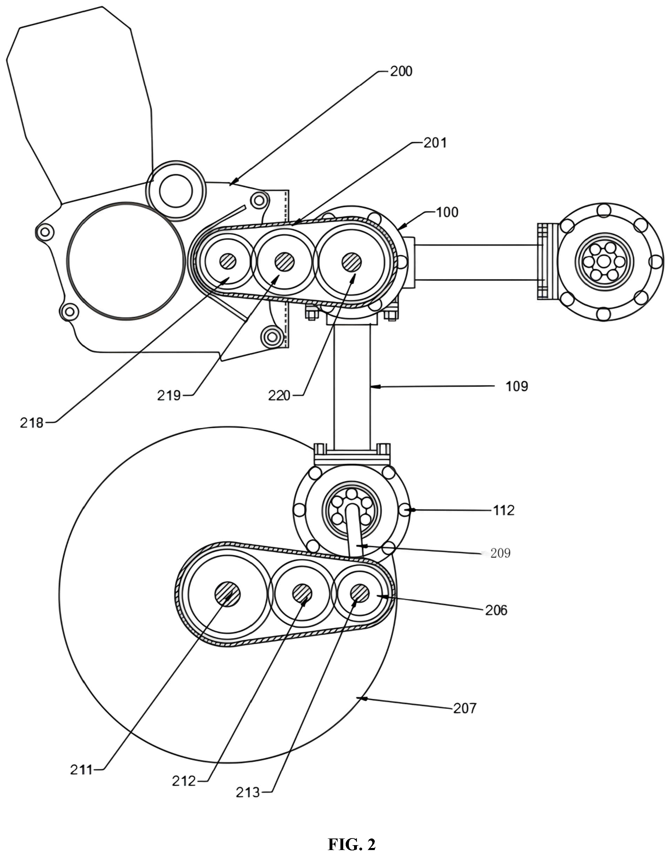

When the vertical or horizontal engine 200 with the lateral output shaft as shown in Figure 2 is installed as an integrated structure with the new multi-purpose shaft transmission box, the output splined shaft on the outer right side of the outer end output shaft bearing seat 001 of the overdrive gear or chain and sprocket transmission box 201 is in a horizontal position and extends laterally to the right, and is inserted into the bearing hole of the large bearing seat 103 of the input shaft bevel gear right-angle transmission box shell 100 of the new multi-purpose shaft transmission box installed side by side and coaxially on the right. It meshes with the splined slot in the center splined hole of the driving bevel gear 102 installed on the input shaft splined shaft 101 and is fastened with a nut on the extended part of the small bearing seat 104. The output splined shaft on the outer right side of the outer end output shaft bearing seat 001 of the overdrive gear or chain and sprocket transmission box 201 is the input shaft splined shaft 101 on the left side of the input shaft bevel gear right-angle transmission box shell 100.

The output shaft bearing housing 001 at the end of the overdrive gear or sprocket chain drive housing 201 installed on the left side of the vertical or horizontal engine 200 on the transverse output shaft is located outside, and the output splined shaft extending horizontally to the right penetrates into the input shaft bevel gear right-angle drive box housing 100 of the new multi-purpose shaft drive box installed in parallel and coaxially on the right side, and the input shaft coaxial splined shaft 101 of the new multi-purpose shaft drive box is installed with the overdrive gear or sprocket chain drive housing 201 in a joint-like integral structure form, allowing the new multi-purpose shaft drive box to be rotated around the input shaft coaxial splined shaft 101 to transmit power in the vertical direction, horizontal direction or any direction. Preferably, the new multi-purpose shaft drive box is fixed in a vertical position between the engine and the frame to transmit power.

The end output splined shaft of the overdrive gear or sprocket chain drive housing 201 installed on the left side of the horizontal output shaft of the vertical or horizontal engine 200 is in a horizontal position and extends laterally to the right, and is inserted into the large bearing housing 103 of the input shaft bevel gear right-angle drive housing 100 installed side by side and coaxially on the right to transmit power. Therefore, the new multi-purpose shaft drive housing can be matched with various types of engines as power sources.

Among them, the preferred option is to install and fix the new multi-purpose shaft transmission box in a vertical position relative to the frame to transmit power, and it is arranged and installed at the rear end of the rear drive shaft of the go-kart, UTV, ATV and other vehicle bodies and on the upper part of the frame. Therefore, the left universal joint output shaft bearing seat 118 and the right universal joint output shaft bearing seat 117 of the new multi-purpose shaft transmission box body's universal joint output shaft bevel gear right-angle transmission box shell 112, as well as the universal joint output splined shaft 113 extending outward to both left and right ends, must be installed horizontally and laterally at the chassis position of vehicles such as go-karts, UTVs, and ATVs. Moreover, on both ends of the universal joint output splined shaft 113 outside the left universal joint output shaft bearing seat 118 and the right universal joint output shaft bearing seat 117, the left constant velocity ball cage universal joint outer cage 115 and the right constant velocity ball cage universal joint outer cage 116 are respectively installed, and the transmission half shaft 209 extending leftward and the transmission half shaft 210 extending rightward simultaneously output power laterally to both sides of the vehicle body. When the new multi-purpose shaft transmission box body is installed as an integrated structure with a preferred power source among ordinary vertical engines, horizontal engines, CVT engines, or variable-frequency electric motors, the input shaft common splined shaft 101 and the universal joint output splined shaft 113 of the new multi-purpose shaft transmission box body maintain a parallel power transmission position.

The integral drive axle 208 is connected to the frame of the go-kart, UTV, ATV and other vehicles through a longitudinally installed parallel four-bar linkage and a transversely installed Panhard rod. The integral drive axle 208 is arranged and installed at the position of the rear drive shaft of the go-kart, UTV, ATV and other vehicles, and is located at the lower part of the frame in an integrated structure with the engine output shaft axis and the frame. There is a sufficient stroke distance between the integral drive axle 208 and the frame. In the new multi-purpose shaft transmission structure on the upper part of the frame, the vertical or horizontal engine 200 with a transverse output shaft, the CVT engine transmission 500 box housing with a transverse output shaft, and the motor 600 with a transverse output shaft, as well as the vertical or horizontal engine 800 with a longitudinal output shaft and the CVT engine, and the motor 1000 with a longitudinal output shaft, one of the engines is preferably integrated with the new multi-purpose shaft transmission box housing installed in a vertical position, and is also integrated with the frame of the go-kart, UTV, ATV and other vehicles through a rubber spring support. On the lower part of the frame, the universal joint output shaft bevel gear right-angle transmission box housing 112 of the new multi-purpose shaft transmission box is transversely installed, with the left universal joint output shaft bearing housing 118 and the right universal joint output shaft bearing housing 117, and the universal joint output splined shaft 113 extending to the left and right sides. The left universal joint output splined shaft 113 extending from the left universal joint output shaft bearing housing 118 is equipped with a left constant velocity ball cage universal joint outer cage 115 at its end, and the right universal joint output splined shaft 113 extending from the right universal joint output shaft bearing housing 117 is equipped with a right constant velocity ball cage universal joint outer cage 116 at its end, which is fastened with a center screw. The left constant velocity ball cage universal joint outer cage 115 is equipped with a left drive half shaft 209 for power output to the left side of the vehicle, and the right constant velocity ball cage universal joint outer cage 116 is equipped with a right drive half shaft 210 for power output to the right side of the vehicle. The inner ball cage center splined hole in the outer ball cage 116 of the universal joint is inserted with the drive half shaft 210 that transmits power to the right side of the vehicle body. The inner ball cages installed at both ends of the drive half shaft are meshed with the outer ball cages, and the two drive half shafts simultaneously transmit power to the left and right sides.

When a vertical or horizontal engine with a transverse output shaft, or a CVT engine or motor with a transverse output shaft, is installed as an integrated structure with a new multi-purpose shaft transmission housing to drive the entire drive axle, taking the case where the transmission housing 206 of the entire drive axle 208 is installed in a horizontal position at the left end of the drive axle gear or chain wheel and chain as an example, it is preferred to use a single leftward power transmission half shaft 209, which is horizontally arranged in the outer cage 115 of the constant velocity ball cage universal joint on the left side of the universal joint output splined shaft 113. The leftward power transmission half shaft 209 is installed in the center splined hole of the inner cage in the outer cage 115 of the constant velocity ball cage universal joint and extends leftward and horizontally, then enters the outer cage 205 of the constant velocity ball cage universal joint with telescopic function that extends out of the right side of the input shaft bearing housing of the transmission housing 206 of the left end of the drive axle gear or chain wheel and chain of the entire drive axle 208, and meshes with the center splined hole of the inner cage to transmit power. The power is then transmitted through the various sets of transmission gears and drive shafts installed in the transmission housing 206 of the left end of the drive axle gear or chain wheel and chain of the entire drive axle 208 to drive the wheels 207 installed at both ends of the drive axle 208 to rotate and move the vehicle forward.

It is also preferable to install a single transmission half shaft 210 that outputs power to the right horizontally in the outer ball cage 116 of the constant velocity ball cage universal joint on the right side of the universal joint output splined shaft 113. The transmission half shaft 210 installed in the inner ball cage center splined hole of the constant velocity ball cage universal joint outer ball cage 116 extends laterally to the right and is inserted into the outer ball cage 215 with telescopic function that extends out of the left bearing housing of the input shaft on the left side of the drive axle gear or sprocket chain drive box housing 216 welded to the right end of the integral drive axle tube 208. It meshes with the center splined hole of the inner ball cage and transmits power. The power is then transmitted through the various sets of transmission gears and drive shafts installed in the drive axle gear or sprocket chain drive box housing 216 at the right end of the integral drive axle tube 208 to drive the wheels 207 installed at both ends of the integral drive axle tube 208 to rotate and drive the vehicle forward.

In the new multi-purpose shaft transmission housing for the integral drive axle that uses a single drive half shaft to transfer power, the universal joint output shaft bevel gear right-angle transmission housing 112 can only be equipped with the straight-through hard splined shaft 113 between the left universal joint output shaft bearing seat 118 and the right universal joint output shaft bearing seat 117, and cannot be equipped with an inter-axle differential assembly. This ensures that the two constant velocity ball cage universal joints on the universal joint output shaft outside the universal joint output shaft bevel gear right-angle transmission housing do not have a differential function, allowing the single drive half shaft to transfer power smoothly.

Example 2: A new multi-purpose shaft drive system for all-terrain vehicles includes a common CVT engine or variable-frequency motor with a transverse output shaft and a new multi-purpose shaft drive box, which are integrated into an overall structure and are used in conjunction with an integral drive axle to transmit power. The feature is:
The output splined shaft at the right end of the CVT engine 500 transmission box housing or the motor 600 of the transverse output shaft, which is in a horizontal position and extends laterally to the right, is inserted into the large bearing housing 103 of the input shaft bevel gear right-angle transmission box housing 100 of the new multi-purpose shaft transmission box, where it meshes with the internal splined slot in the center splined hole of the bearing assembly of the driving bevel gear 102 to transmit power. The smooth shaft part coaxial with it passes through the bearing holes of the two sets of small bearings installed in the cylindrical shell of the small bearing housing 104 and is fastened with a large nut at the exposed screw part at the end of the cylindrical shell of the small bearing housing 104. The output splined shaft at the right end of the CVT engine 500 transmission box or the motor 600 of the transverse output shaft is the coaxial splined shaft 101 of the input shaft on the left side of the input shaft bevel gear right-angle transmission box housing 100 of the new multi-purpose shaft transmission box.

The right side of the output shaft bearing housing 001 at the end of the CVT engine 500 transmission box shell or at the end of the horizontally arranged and installed horizontal output shaft of the motor 600 is in a horizontal position and extends laterally to the right. The output splined shaft is inserted into the large bearing housing 103 of the input shaft bevel gear right-angle transmission box shell 100 of the new multi-purpose shaft transmission box, which is installed side by side and coaxially on the right. The input shaft coaxial splined shaft 101 connects the CVT engine 500 or the motor 600 with the input shaft bevel gear right-angle transmission box shell 100 of the new multi-purpose shaft transmission box in a joint-like integral structure form, allowing the new multi-purpose shaft transmission box to rotate around the input shaft coaxial splined shaft 101 to a vertical position, a horizontal position, or any position to transmit power. Preferably, the new multi-purpose shaft transmission box is fixed in a vertical position relative to the engine and the frame to transmit power.

The CVT engine 500 transmission box end where the transverse output shaft is installed or the end output splined shaft of the motor 600 arranged transversely with the transverse output shaft installed is in a horizontal position and extends laterally to the right, and transmits power into the large bearing housing 103 of the input shaft bevel gear right-angle transmission box 100 of the new multi-purpose shaft transmission box installed side by side and coaxially on the right. Therefore, the new multi-purpose shaft transmission box can be matched with various engine types as power sources.

Among them, the preferred option is to install and fix the new multi-purpose shaft transmission box in a vertical position relative to the frame to transmit power, and it is arranged and installed at the rear end of the rear drive shaft of the go-kart, UTV, ATV and other vehicle bodies and on the upper part of the frame. Therefore, the left universal joint output shaft bearing seat 118 and the right universal joint output shaft bearing seat 117 of the new multi-purpose shaft transmission box body's universal joint output shaft bevel gear right-angle transmission box shell 112, as well as the universal joint output splined shaft 113 extending outward to both left and right ends, must be installed horizontally and laterally at the chassis position of the go-kart, UTV, ATV, etc. Moreover, on the left and right ends of the universal joint output splined shaft 113 outside the left universal joint output shaft bearing seat 118 and the right universal joint output shaft bearing seat 117, the left constant velocity ball cage universal joint outer cage 115 and the right constant velocity ball cage universal joint outer cage 116 are respectively installed, and the left power transmission half shaft 209 and the right power transmission half shaft 210 respectively output power laterally to the left and right sides of the vehicle body. When the new multi-purpose shaft transmission box body is installed as an integrated structure with a preferred power source among the vertical engine horizontal engine 200, the CVT engine or the electric motor with a horizontal output shaft, the input shaft common splined shaft 101 and the universal joint output splined shaft 113 of the new multi-purpose shaft transmission box body maintain a parallel power transmission position.

The integral drive axle 208 is connected to the frame of the go-kart, UTV, ATV and other vehicles through a longitudinally installed parallel four-bar linkage and a transversely installed Panhard rod. The integral drive axle 208 is arranged and installed at the position of the rear drive shaft of the go-kart, UTV, ATV and other vehicles, and is located at the lower part of the frame in an integrated structure with the engine output shaft axis and the frame. There is a sufficient stroke distance between the integral drive axle 208 and the frame. The new multi-purpose shaft transmission structure on the upper part of the frame includes a vertical or horizontal engine 200 with a transverse output shaft, a CVT engine 500 with a transverse output shaft, and an electric motor 600 with a transverse output shaft. One of these engines is preferably integrated with the new multi-purpose shaft transmission box body arranged in a vertical position and then installed in an integrated structure with the frame of the go-kart, UTV, ATV and other vehicles through a rubber spring support. On the lower part of the frame, the universal joint output shaft bevel gear right-angle transmission box housing 112 of the new multi-purpose shaft transmission box is transversely arranged and installed at the lower part of the frame of the go-kart, UTV, ATV and other vehicles. The left universal joint output shaft bearing seat 118 and the right universal joint output shaft bearing seat 117 of the housing 112 and the universal joint output splined shaft 113 extending to the left and right are transversely arranged and installed. The left constant velocity ball cage universal joint outer cage 115 is installed at the end of the output splined shaft 113 extending to the left from the left universal joint output shaft bearing seat 118, and the right constant velocity ball cage universal joint outer cage 116 is installed at the end of the output splined shaft 113 extending to the right from the right universal joint output shaft bearing seat 117 and is fastened with a center screw. The left constant velocity ball cage universal joint outer cage 115 is provided with a transmission half shaft 209 for left power output in the inner cage center splined hole, and the right constant velocity ball cage universal joint outer cage 116 is provided with a transmission half shaft 209 for right power output in the inner cage center splined hole. A drive half shaft 210 that outputs force to the right is inserted into the splined hole at the center of the cage. The inner and outer ball cages installed at both ends of the drive half shaft mesh with each other, and the two drive half shafts simultaneously output power to the left and right sides.

When a vertical or horizontal engine with a transverse output shaft, or a conventional CVT engine or motor with a transverse output shaft, is installed as an integrated structure with a new multi-purpose shaft transmission housing to drive the entire drive axle, taking the horizontal installation position of the transmission housing 206 at the left end of the drive axle tube 208 (with a drive axle gear or chain sprocket) as an example, a single leftward power transmission half shaft 209 is preferably used, which is horizontally arranged and installed in the outer ball cage 115 of the left constant velocity ball cage universal joint on the left side of the universal joint output splined shaft 113. The leftward power transmission half shaft 209 installed in the center splined hole of the inner ball cage in the left constant velocity ball cage universal joint 115 extends leftward and enters the outer ball cage 205 with telescopic function that extends out of the right input shaft bearing housing of the left end drive axle gear or chain sprocket transmission housing 206 welded to the left end of the drive axle tube 208, and meshes with the center splined hole of the inner ball cage to transmit power. The power is then transmitted through the transmission gears and drive shafts installed in the left end drive axle gear or chain sprocket transmission housing 206 to drive the wheels 207 installed at both ends of the drive axle tube 208 to rotate and drive the vehicle forward.

It is also preferable to install a single rightward force transmission half shaft 210 laterally in the right constant velocity ball cage universal joint outer cage 116 on the right side of the universal joint output splined shaft 113. The rightward power transmission half shaft 210 installed in the inner cage center splined hole of the right constant velocity ball cage universal joint outer cage 116 extends laterally to the right and is inserted into the left input shaft bearing housing of the right end drive axle gear or chain sprocket transmission box housing 216 welded to the right end of the integral drive axle tube 208, and meshes with the inner cage center splined hole to transmit power. The power is then transmitted through the various sets of transmission gears and drive shafts installed in the right end drive axle gear or chain sprocket transmission box housing 216 to drive the wheels 207 installed at both ends of the integral drive axle tube 208 to rotate and drive the vehicle forward.

In the new multi-purpose shaft transmission housing with a single drive half shaft for power transmission in an integral drive axle, the straight hard splined shaft 113 can only be installed in the middle position between the left universal joint output shaft bearing housing 118 and the right universal joint output shaft bearing housing 117 in the bevel gear right-angle transmission housing 112 of the universal joint output shaft. The differential between the two constant velocity ball cage universal joints on the universal joint output shaft outside the bevel gear right-angle transmission housing cannot be selected, ensuring that the single drive half shaft can smoothly transmit power.

Example 3: A new multi-purpose shaft drive system for all-terrain vehicles includes a conventional vertical or horizontal engine or motor. When the overdrive gear (or sprocket chain) transmission box is not in use, the new multi-purpose shaft drive box is installed at the left side of the engine or motor in an integrated structure and is applied to the integral drive axle for power transmission. The structural feature is:
The input shaft bevel gear right-angle transmission box housing 100 of the new multi-purpose shaft transmission box is installed in parallel and coaxially outside the end output shaft bearing housing 001 on the left side of the vertical or horizontal engine 200 or the left side of the horizontally arranged motor 600. The output splined shaft extending horizontally to the left from the end output shaft bearing housing 001 of the horizontal output shaft engine 200 or the horizontal output shaft motor 600 is inserted into the large bearing housing 103 of the input shaft of the new multi-purpose shaft transmission box installed in parallel and coaxially on the left side. It meshes with the internal splined teeth in the center splined hole of the bearing assembly of the driving bevel gear 102 to transmit power. The coaxial smooth shaft part then passes through the bearing holes of the two sets of small bearings installed in the cylindrical shell of the input shaft small bearing housing 104 and is fastened with a large nut at the exposed screw part at the end of the cylindrical shell of the input shaft small bearing housing 104.

The horizontal output shaft of the vertical or horizontal engine 200 transmission box body left end output shaft bearing seat 001 or the left end output shaft bearing seat 001 of the motor 600 of the horizontal output shaft, which is in a horizontal position and extends laterally to the left, is the input shaft splined shaft 101 coaxial with the input shaft of the new multi-purpose shaft transmission box body input shaft bevel gear right-angle transmission box shell 100 on the right side.

The horizontal output shaft's left end bearing housing 001 of the vertical or horizontal engine 200 transmission box shell or the left end bearing housing 001 of the horizontal output shaft end of the motor 600 is horizontally positioned and extends laterally to the left. The output splined shaft is inserted into the large bearing housing 103 of the input shaft bevel gear right-angle transmission box shell 100 of the new multi-purpose shaft transmission box, which is installed in parallel and coaxially. The input shaft splined shaft 101 of the new multi-purpose shaft transmission box is coaxial with the engine box shell 200 or the variable frequency motor 600, forming a joint-like integral structure. This enables the new multi-purpose shaft transmission box to rotate around the input shaft splined shaft 101 to a vertical position, a horizontal position, or any position to transmit power.

The above-mentioned end output splined shaft, which is in a horizontal position and extends laterally to the left without using an overdrive gear or chain and sprocket transmission, is installed at the left end of the ordinary vertical or horizontal engine 200 box and is inserted into the input shaft bevel gear right-angle transmission box 100 of the new multi-purpose shaft transmission box body installed side by side and coaxially on the left. The input shaft large bearing housing 103 transmits power, so the new multi-purpose shaft transmission box can be matched with various types of engines as power sources.

Among them, the preferred installation of the new multi-purpose shaft transmission box is fixed in a vertical position relative to the engine and the frame to transmit power, and is arranged and installed at the rear end of the rear drive shaft of the go-kart, UTV, ATV and other vehicle bodies and at the upper position of the frame. Therefore, the universal joint output shaft bevel gear right-angle transmission box shell 112 of the new multi-purpose shaft transmission box, the left universal joint output shaft bearing seat 118 and the right universal joint output shaft bearing seat 117, and the universal joint output splined shaft 113 extending outward to the left and right must be in a horizontal position and installed transversely at the chassis position of the go-kart, UTV, ATV and other vehicle bodies. The left constant velocity ball cage universal joint outer cage 115 and the left power transmission half shaft 209 for outputting power to the left, and the right constant velocity ball cage universal joint outer cage 116 and the right power transmission half shaft 210 for outputting power to the right are respectively installed at the left and right ends of the universal joint output splined shaft 113 outside the left universal joint output shaft bearing seat 118 and the right universal joint output shaft bearing seat 117, and simultaneously output power to the left and right sides of the vehicle body. When the new multi-purpose shaft transmission box is installed as an integral structure with a preferred power source among the vertical engine with a horizontal output shaft, the horizontal engine, the CVT engine with a horizontal output shaft, or the electric motor with a horizontal output shaft, the input shaft splined shaft 101 and the universal joint output splined shaft 113 of the new multi-purpose shaft transmission box maintain a parallel position for power transmission.

The integral drive axle 208 is connected to the frame of the go-kart, UTV, ATV and other vehicles through a longitudinally installed parallel four-bar linkage and a transversely installed Panhard rod. The integral drive axle 208 is arranged and installed at the position of the rear drive shaft of the go-kart, UTV, ATV and other vehicles, and is located at the lower part of the frame in an integrated structure with the engine output shaft axis and the frame. Meanwhile, there is a sufficient stroke distance between the integral drive axle 208 and the frame. The new multi-purpose shaft transmission structure on the upper part of the frame is equipped with a vertical or horizontal engine 200 with a transverse output shaft, a CVT engine 500 with a transverse output shaft, or an electric motor 600 with a transverse output shaft. One of these engines is preferably integrated with the new multi-purpose shaft transmission box body arranged in a vertical position and then installed in an integrated structure with the frame of the go-kart, UTV, ATV and other vehicles through a rubber spring support. On the lower part of the frame, the universal joint output shaft bevel gear right-angle transmission box housing 112 of the new multi-purpose shaft transmission box is transversely installed, with the left universal joint output shaft bearing seat 118 and the right universal joint output shaft bearing seat 117, and the universal joint output splined shaft 113 extending to the left and right sides, all located at the lower part of the frame of the go-kart, UTV, ATV and other vehicles. The universal joint output splined shaft 113 extending to the left side of the left universal joint output shaft bearing seat 118. The left end of the left constant velocity ball cage universal joint outer cage 115 is installed at the left end of the left universal joint output shaft splined shaft 113, and the right end of the right universal joint output shaft splined shaft 113 is installed with the right constant velocity ball cage universal joint outer cage 116 and fastened with a center screw. The inner cage center splined hole of the left constant velocity ball cage universal joint outer cage 115 is inserted with the left drive half shaft 209 for power output to the left, and the inner cage center splined hole of the right constant velocity ball cage universal joint outer cage 116 is inserted with the right drive half shaft 210 for power output to the right. The inner cages installed at both ends of the drive half shafts on the left and right are meshed with the outer cages, and the two drive half shafts output power to the left and right simultaneously.

When a vertical or horizontal engine with lateral power output, or a common CVT engine or motor with a lateral output shaft, is installed as an integrated structure with a new multi-purpose shaft transmission box body to drive the overall drive axle for power transmission, taking the horizontal installation position of the transmission box shell 206 at the left end of the overall drive axle 208 (with a drive axle gear or chain wheel and chain installed) as an example, it is preferable to use a single leftward power output transmission half shaft 209, which is laterally arranged and installed inside the outer ball cage 115 of the left equal-speed ball cage universal joint on the left side of the universal joint output splined shaft 113. The leftward power output transmission half shaft 209 is laterally extended to the left and inserted into the outer ball cage 205 with telescopic function on the right side of the input shaft bearing seat of the left end drive axle gear or chain wheel and chain transmission box shell 206 welded to the left end of the overall drive axle 208, engaging with the center splined hole of the inner ball cage and transmitting power. The power is then transmitted through the various sets of transmission gears and drive shafts installed in the left end drive axle gear or chain wheel and chain transmission box shell 206 to drive the wheels 207 installed at both ends of the overall drive axle 208 to rotate and drive the vehicle forward.

It is also preferable to install a single transmission half shaft 210 that outputs force to the right, which is arranged laterally within the outer ball cage 116 of the constant velocity ball joint on the right side of the output splined shaft 113 of the universal joint. The transmission half shaft 210 installed in the center splined hole of the inner ball cage within the outer ball cage 116 on the left side of the constant velocity ball joint extends laterally to the right and is inserted into the left input shaft bearing housing of the right end drive axle gear or sprocket chain drive box housing 216 welded to the right end of the integral drive axle tube 208, and meshes with the center splined hole of the inner ball cage to transmit power. The power is then transmitted through the various sets of transmission gears and drive shafts installed within the right end drive axle gear or sprocket chain drive box housing 216 to drive the wheels 207 installed at both ends of the integral drive axle tube 208 to rotate and drive the vehicle forward.

The universal joint output shaft bevel gear right-angle transmission box housing 112 of the new multi-purpose shaft transmission box body that uses a single drive half shaft to transfer power to the integral drive axle has a left universal joint output shaft bearing seat 118 and a right one. The middle position of the side universal joint output shaft bearing housing 117 can only be installed with the straight-through hard splined shaft 113, and the combination of the differential between shafts cannot be selected. This ensures that the two constant velocity ball cage universal joints on the outside of the universal joint output shaft cone gear right-angle transmission box housing do not have a differential function, guaranteeing that a single drive half shaft can smoothly transmit power.

Example 4: A new multi-purpose shaft transmission system for all-terrain vehicles includes a vertical or horizontal engine or motor with a transverse output shaft. When the overdrive gear (or sprocket chain) transmission box is not in use, the new multi-purpose shaft transmission box installed at the left side of the engine or motor is in a split structure and is applied to the structure feature of transmitting power to the integral drive axle.

The input shaft bearing housing 103 of the input shaft bevel gear right-angle transmission box housing 100 of the new multi-purpose shaft transmission box is installed in parallel and coaxially outside the left output shaft bearing housing of the vertical or horizontal engine 200 or the left output shaft bearing housing of the motor of the horizontal output shaft. The output splined shaft extending laterally to the left from the end output shaft bearing housing 001 of the vertical or horizontal engine 200 or the end output shaft bearing housing 001 of the motor 600 on the left side of the horizontal output shaft is laterally arranged and installed at the upper position of the rear drive shaft of the go-kart, UTV, ATV and other vehicle bodies. At the same time, the input shaft large bearing housing 103 and the input shaft coaxial splined shaft 101 of the input shaft bevel gear right-angle transmission box housing 100 of the new multi-purpose shaft transmission box on the left side of the vertical or horizontal engine 200 box or the left side of the motor are horizontally installed and extend laterally to the right, and are in a relatively installed position with the output splined shaft extending laterally to the left from the end output shaft bearing housing 001 on the left side of the vertical or horizontal engine 200 box or the end output shaft bearing housing 001 on the left side of the motor. Between the output splined shaft extending laterally to the left from the end output shaft bearing housing 001 on the left side of the vertical or horizontal engine 200 box or the end output shaft bearing housing 001 on the left side of the motor and the coaxial splined shaft 101 extending laterally to the right of the input shaft bevel gear right-angle transmission box housing 100 of the new multi-purpose shaft transmission box, there is an inner splined shaft sleeve that is coaxial with the two shafts and meshes with each other.

The power output from the engine 200 or the motor on the transverse output shaft is transmitted to the co-axial splined shaft 101 at the input end of the input shaft bevel gear right-angle transmission box housing 100 of the new multi-purpose shaft transmission box through the internal splined shaft sleeve meshing with the two shafts, and then to the entire transmission system. Moreover, a dedicated fixed support is installed between the two sets of boxes at the left end of the output shaft of the vertical or horizontal engine 200 or the motor on the transverse output shaft and the right end of the input shaft of the input shaft bevel gear right-angle transmission box housing 100, which is installed in parallel and coaxially. The seat is used to integrate the horizontal output shaft of the engine or motor with the new multi-purpose shaft transmission box body into a single structure. The installation flange end face on the right side of the dedicated fixed support is adapted to the installation shape of the left end face of the vertical or horizontal engine 200 with a horizontal output shaft or the left end face of the motor box body with a horizontal output shaft, and is fastened by bolts at the corresponding positions. The flange end face on the left side of the dedicated fixed support is adapted to the flange end faces of the input shaft large bearing housing 103 cylindrical shell outside the input shaft bevel gear right-angle transmission box shell 100 and the active bevel gear cylindrical shell, and is fastened by bolts at the corresponding positions. In the cavity of the dedicated fixed support, an internal spline shaft sleeve that is coaxial with the output spline shaft of the engine or motor and the input spline shaft of the new multi-purpose shaft transmission box and meshes with both shafts is installed and can rotate freely without interfering with other components.

When the vertical or horizontal engine 200 with a transverse output shaft or the transverse output shaft motor is installed in an integrated structure with the new multi-purpose shaft transmission box without using an overdrive gear or a sprocket chain transmission box housing 201, the position of the flange end face of the input shaft large bearing housing 103 cylindrical shell and the active bevel gear cylindrical shell outside the input shaft bevel gear right-angle transmission box housing 100, which is in contact with the left flange end face of the dedicated fixed support installed between the engine or motor, can be adjusted. The new multi-purpose shaft transmission box can be rotated to a vertical position, a horizontal position, or any angle position around the input shaft co-axial splined shaft 101 or the coaxially installed engine output splined shaft, and then fixed and power transmission can be achieved by installing bolts through the corresponding flange holes.

Among them, the preferred embodiment is to install and fix the new multi-purpose shaft transmission box in a vertical position relative to the frame to transmit power, and it is arranged and installed at the rear end of the rear drive shaft of the go-kart, UTV, ATV and other vehicle bodies and at the upper position of the frame. Therefore, the left universal joint output shaft bearing seat 118 and the right universal joint output shaft bearing seat 117 of the universal joint output shaft conical gear right-angle transmission box shell 112 of the new multi-purpose shaft transmission box and the universal joint output splined shaft 113 extending outward to the left and right ends must be in a horizontal position and installed laterally at the chassis position of the go-kart, UTV, ATV and other vehicle bodies. Moreover, the left constant velocity ball cage universal joint outer cage 115 and the right constant velocity ball cage universal joint outer cage 116 are installed at both ends of the universal joint output splined shaft 113 outside the left universal joint output shaft bearing seat 118 and the right universal joint output shaft bearing seat 117, and the left drive half shaft 209 and the right drive half shaft 210 for outputting power to the left and right respectively are simultaneously outputting power laterally to the left and right sides of the vehicle body. The above-mentioned horizontal output shaft is vertical to the vertical output shaft. When either a horizontal engine of 200 or a motor with a lateral output shaft is used as the power source without a transfer case and one of them is preferred, and when a new multi-purpose shaft transmission box is installed in conjunction with it, the input shaft splined shaft 101 and the universal joint output splined shaft 113 of the new multi-purpose shaft transmission box are kept in a parallel power transmission position.

The integral drive axle 208 is connected to the frame of the go-kart, UTV, ATV, etc. through a longitudinally installed parallel four-bar linkage and a transversely installed Panhard rod. The integral drive axle 208 is arranged and installed at the position of the rear drive shaft of the go-kart, UTV, ATV, etc., and is located at the lower part of the frame in an integrated structure with the engine output shaft axis and the frame. There is a sufficient stroke distance between the integral drive axle 208 and the frame. In the new multi-purpose shaft transmission system on the upper part of the frame, a vertical or horizontal engine 200 with a transverse output shaft and a transverse output shaft motor are used. Preferably, one of the engines is installed in an integrated structure with the new multi-purpose shaft transmission box body arranged in a vertical position, and is also installed in an integrated structure with the frame of the go-kart, UTV, ATV, etc. through a rubber spring support. On the lower part of the frame, the universal joint output shaft bevel gear right-angle transmission box housing 112 of the new multi-purpose shaft transmission box is transversely installed, with the left universal joint output shaft bearing seat 118 and the right universal joint output shaft bearing seat 117 and the universal joint output splined shaft 113 extending to the left and right sides. The left universal joint output splined shaft 113 extending from the left universal joint output shaft bearing seat 118 is equipped with a left constant velocity ball cage universal joint outer cage 115 at its left end, and the right universal joint output splined shaft 113 extending from the right universal joint output shaft bearing seat 117 is equipped with a right constant velocity ball cage universal joint outer cage 116 at its right end, which is fastened with a center screw. The left constant velocity ball cage universal joint outer cage 115 and the right constant velocity ball cage universal joint outer cage 116 are respectively installed with a left drive half shaft 209 and a right drive half shaft 210, which extend to the left and right sides of the vehicle body to output power. The inner cages of the left and right constant velocity ball cage universal joints are meshed with the outer cages, and the left and right drive half shafts simultaneously output power to the left and right sides.

When a vertical engine with lateral power output, a horizontal engine or an electric motor with lateral power output is installed as an integrated structure with a new multi-purpose shaft transmission box without using an overdrive gear transmission box, and one of the power sources is preferably selected to transmit power through an integral drive axle, taking the left end of the integral drive axle 208 as an example, the left end drive axle gear or chain wheel and chain) transmission box shell 206 is installed in a horizontal position. Preferably, a single leftward power output transmission half shaft 209 is arranged laterally on the left side of the output splined shaft 113 of the constant velocity ball cage universal joint. Inside the outer ball cage (115), the left transmission half shaft 209, which is installed in the center splined hole of the inner ball cage within the left constant velocity ball cage universal joint outer ball cage 115 and outputs power to the left, extends laterally to the left and enters the outer ball cage 205 with telescopic function of the left end drive axle gear or sprocket chain drive box housing 206, which is welded to the left end of the integral drive axle tube 208 and extends out of the right side of the input shaft bearing housing. It meshes with the center splined hole of the inner ball cage and transmits power. The power is then transmitted through the various sets of transmission gears and drive shafts installed in the left end drive axle gear or sprocket chain drive box housing 206, which is installed at the left end of the integral drive axle tube 208, to drive the wheels 207 installed at both ends of the integral drive axle tube 208 to rotate and move the vehicle forward.

It is also preferable to install a single transmission half shaft 210 that outputs force to the right, which is arranged laterally within the right constant velocity ball cage universal joint outer cage 116 on the right side of the universal joint output spline shaft 113. The transmission half shaft 210 that outputs power to the right extends laterally to the right and is inserted into the left input shaft bearing housing of the right end drive axle gear or chain sprocket chain transmission box housing 216 welded to the right end of the integral drive axle tube 208, and engages with the center spline hole of the inner cage of the extendable constant velocity ball cage universal joint outer cage 215 extending to the left, thereby transmitting power. The power is then transmitted through the various sets of transmission gears and drive shafts installed in the right end drive axle gear or chain sprocket chain transmission box housing 216 on the right end of the integral drive axle tube 208 to drive the wheels 207 installed at both ends of the integral drive axle tube 208 to rotate and drive the vehicle forward.

In the new multi-purpose shaft transmission housing for the integral drive axle, the universal joint output shaft splined shaft 113 can only be installed with a straight-through hard splined shaft between the left universal joint output shaft bearing seat 118 and the right universal joint output shaft bearing seat 117 in the universal joint output shaft bevel gear right-angle transmission housing 112. The installation of an inter-axle differential assembly is not an option, ensuring that the two constant velocity ball cage universal joints on the universal joint output shaft outside the universal joint output shaft bevel gear right-angle transmission housing do not have a differential function, thus guaranteeing the smooth transmission of power through the single drive half shaft.

Example 5: A new multi-purpose shaft drive system for all-terrain vehicles includes an electric motor or a vertical or horizontal engine with a mid-mounted output shaft or a CVT engine longitudinally arranged and installed on the body of a go-kart, UTV, ATV, etc., and a new multi-purpose shaft drive box is integrally installed to form a structure that is matched with an integral drive axle for power transmission.

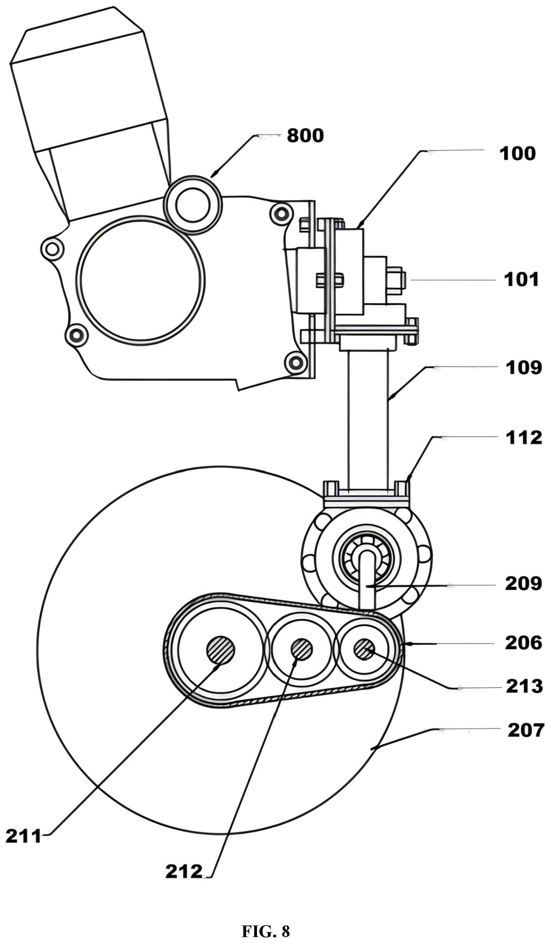

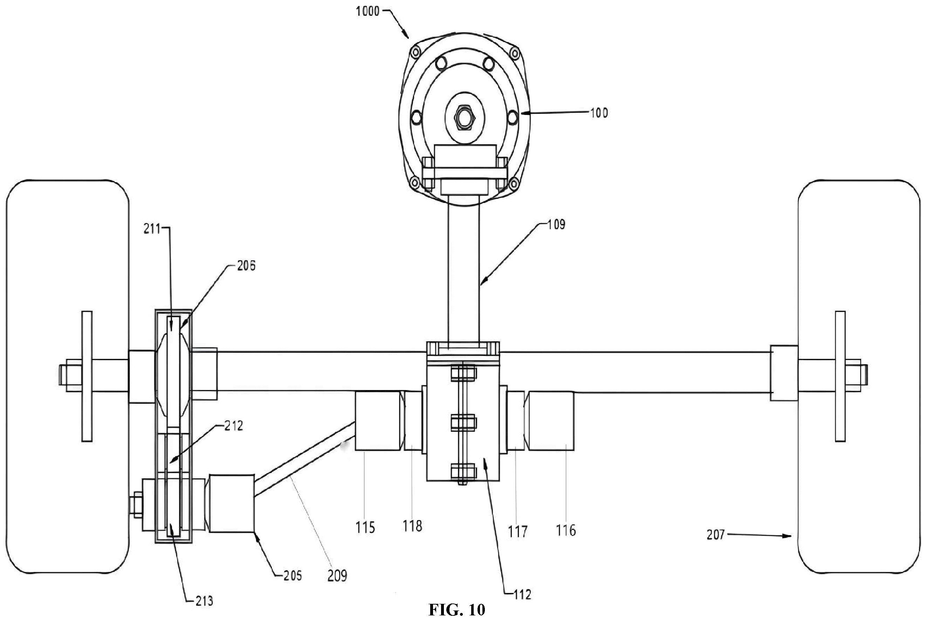

As shown in Figures 8 and 10, the engine 800 with a mid-mounted longitudinal output shaft, which is vertically or horizontally arranged and installed on the body of a go-kart, UTV, ATV, etc., or the motor 1000 arranged longitudinally, has a mid-mounted output splined shaft extending horizontally and rearward from the bearing housing 001 at the end of the output shaft. This is installed on the body of a go-kart, UTV, ATV, etc. The longitudinal axis of the body is parallel; preferably, one of the engines is integrally installed with the input shaft bevel gear of the new multi-purpose longitudinal installation position of the vertical-axis transmission box housing 100 in a right-angle transmission box shell.

The extended mid-mounted longitudinal output splined shaft, which is in a horizontal position and extends longitudinally backward from the outer end of the output shaft bearing housing 001 of the vertically or horizontally installed mid-mounted longitudinal output shaft engine 800 or the electric motor 1000 installed in a longitudinal position, is inserted into the input shaft large bearing housing 103 of the input shaft bevel gear right-angle transmission box housing 100 of the new multi-purpose shaft transmission box body installed in parallel and coaxially with the mid-mounted longitudinal output shaft of the vertically or horizontally installed engine 800 or the electric motor 1000 installed in a longitudinal position, and meshes with the internal splined teeth of the center splined hole of the input shaft bevel gear 102 bearing assembly. This combines the vertically or horizontally installed mid-mounted longitudinal output shaft engine 800 or the electric motor 1000 installed in a longitudinal position with the new multi-purpose shaft transmission box body input shaft bevel gear right-angle transmission box housing 100 installed in a longitudinal position into an integrated structure. The extended output splined shaft in a horizontal position and extending longitudinally backward from the outer end of the output shaft bearing housing 001 of the vertically or horizontally installed mid-mounted longitudinal output shaft engine 800 or the electric motor 1000 installed in a longitudinal position is the coaxial splined shaft 101 of the input shaft of the new multi-purpose shaft transmission box body input shaft bevel gear right-angle transmission box housing 100 installed in a longitudinal position.

The input shaft splined shaft 101 is fastened with a nut on the extended screw section outside the input shaft small bearing housing 104 within the input shaft bevel gear right-angle transmission box housing 100 of the new multi-purpose shaft transmission box. The input shaft splined shaft 101 connects the mid-mounted longitudinal output shaft of the vertical or horizontal engine 800 or the longitudinally installed motor 1000 with the input shaft bevel gear right-angle transmission box housing 100 of the new multi-purpose shaft transmission box in a joint-like integral structure.

Therefore, the input shaft splined shaft 101 of the new multi-purpose conical gear right-angle transmission housing 100 for the input shaft is parallel to the longitudinal axis of the kart, UTV, ATV and other vehicle bodies.

Among them, the preferred embodiment is to fix the new multi-purpose shaft transmission box in a vertical position relative to the engine and the frame for power transmission, and install it at the rear end of the rear drive shaft and the upper part of the frame of the go-kart, UTV, ATV and other vehicles. Therefore, the universal joint output shaft splined shaft 113 installed inside the left universal joint output shaft bearing seat 118 and the right universal joint output shaft bearing seat 117 of the universal joint output shaft bevel gear right-angle transmission box shell 112 of the new multi-purpose shaft transmission box must be in a horizontal position and arranged laterally on the chassis of the go-kart, UTV, ATV and other vehicles. And at the left end outside the left universal joint output shaft bearing seat 118 of the universal joint output shaft bevel gear right-angle transmission box shell 112 of the new multi-purpose shaft transmission box, the universal joint output shaft splined shaft 113 The left end of the left constant velocity ball cage universal joint 115 and the left drive half shaft 209 for outputting power to the left side of the vehicle body are installed at the left end of the universal joint output splined shaft 113 outside the right end of the right universal joint output shaft bearing seat 117, while the right end of the universal joint output splined shaft 113 is installed with the right constant velocity ball cage universal joint 116 and the right drive half shaft 210 for outputting power to the right side of the vehicle body.

Therefore, the input shaft bevel gear right-angle transmission box housing 100 of the new multi-purpose shaft transmission box and the universal joint output shaft bevel gear right-angle transmission box housing 112 are installed and fixed by rotating the flange 110 of the end bevel gear bearing housing cylindrical shell 90 degrees in the axial position of the intermediate transmission shaft 108, so that the input shaft co-axial splined shaft 101 in the input shaft bevel gear right-angle transmission box housing 100 is installed in a longitudinal position and is parallel to the longitudinal axis of the go-kart, UTV, and ATV vehicle body, and the universal joint output splined shaft 113 installed in the universal joint output shaft bevel gear right-angle transmission box housing 112 is arranged in a transverse position. When the new multi-purpose shaft transmission box is installed as an integrated structure with a mid-mounted longitudinal output shaft vertical or horizontal engine 800 or a motor 1000 in a longitudinal position, the input shaft co-axial splined shaft 101 and the universal joint output splined shaft 113 of the new multi-purpose shaft transmission box are in a perpendicular power transmission position in the axial position of the intermediate transmission shaft 108.

A dedicated support seat for the end of the engine or motor is installed between the end output shaft bearing seat 001 of the vertically or horizontally installed mid-mounted longitudinal output shaft engine 800 and the input shaft bevel gear right-angle transmission box housing 100 of the coaxially installed new multi-purpose shaft transmission box. The flange end face of the cylindrical housing of the driving bevel gear of the input shaft large bearing housing 103 outside the input shaft bevel gear right-angle transmission box housing 100 in the horizontal direction and the vertical surface of the dedicated support seat fixedly installed at the end of the transmission box housing of the mid-mounted longitudinal output shaft engine 800 or the vertically installed motor 1000 are in close contact and fastened with bolts, thereby integrating the vertically or horizontally installed mid-mounted output splined shaft engine 800 and the CVT engine 800 or the motor 1000 installed on the vehicle body of the go-kart, UTV, ATV, etc. with the new multi-purpose shaft transmission box into a single structure.

The integral drive axle 208 is connected to the frame of the go-kart, UTV, ATV and other vehicles through a longitudinally installed parallelogram linkage and a transversely installed Panhard rod. The integral drive axle 208 is arranged and installed at the position of the rear drive shaft of the go-kart, UTV, ATV and other vehicles. At the same time, the integral drive axle 208 is located at the lower part of the frame and in line with the center of the engine output shaft which is integrally installed with the frame, and the integral drive axle 208 is connected to the frame. There is a sufficiently long travel distance between them; in the new multi-purpose shaft drive system on the upper part of the frame, a vertical or horizontal engine 800 with a longitudinal output shaft and a longitudinally installed electric motor 1000 are adopted, preferably among them. This engine is integrated with a new multi-purpose shaft transmission box body arranged in a vertical position, and the entire structure is installed on the frame of go-karts, UTVs, ATVs, etc. through rubber spring mounts. At the lower part of the frame, the universal joint output shaft conical gear right-angle transmission box shell 112 of the new multi-purpose shaft transmission box is laterally arranged, with the left universal joint output shaft bearing seat 118 and the right universal joint output shaft bearing seat 117, and the universal joint output splined shaft 113 extending to both sides. The left universal joint output splined shaft 113 extending from the left universal joint output shaft bearing seat 118 is equipped with a left constant velocity ball cage universal joint outer cage 115 at its end, and the right universal joint output splined shaft 113 extending from the right universal joint output shaft bearing seat 117 is equipped with a right constant velocity ball cage universal joint outer cage 116 at its end, which is fastened with a center screw. The left constant velocity ball cage universal joint outer cage 115 and the right constant velocity ball cage universal joint outer cage 116 are respectively fitted with a transmission half shaft 209 for power output to the left side of the vehicle body and a transmission half shaft 210 for power output to the right side of the vehicle body, which are inserted into the inner ball cage center splined holes. The inner cages at both ends of the transmission half shafts are meshed with the outer cages, and the two transmission half shafts simultaneously output power to both sides of the vehicle body.

When a vertical or horizontal engine with a mid-mounted output shaft, a CVT engine, and an electric motor arranged longitudinally are integrated with a new multi-purpose shaft transmission box to form an integral structure and drive the integral drive axle to transmit power, taking the case where the transmission box housing 206 is installed in a horizontal position at the left end of the integral drive axle 208 (with the left end drive axle gear or chain wheel and chain) as an example, it is preferred to install a single leftward power output transmission half shaft 209 horizontally in the outer ball cage 115 of the left equal-speed ball cage universal joint on the left side of the universal joint output splined shaft 113. The leftward power output transmission half shaft 209 extends laterally to the left and is inserted into the outer ball cage 205 with telescopic function of the left equal-speed ball cage universal joint that extends outward from the right side of the input shaft bearing housing of the left end drive axle gear or chain wheel and chain transmission box housing 206, engaging with the center splined hole of the inner ball cage and transmitting power. The power is then transmitted through the transmission gears and drive shafts installed in the left end drive axle gear or chain wheel and chain transmission box housing 206 of the integral drive axle 208 to drive the wheels 207 installed at both ends of the integral drive axle 208 to rotate and drive the vehicle forward.

It is also preferable to install a single transmission half shaft 210 that outputs force to the right, which is arranged laterally within the outer cage 116 of the constant velocity ball cage universal joint on the right side of the universal joint output spline shaft 113. The transmission half shaft 210 that outputs power to the right extends laterally to the right and is inserted into the outer cage 215 of the constant velocity ball cage universal joint with telescopic function that extends out of the left bearing housing of the left input shaft of the right end drive axle gear or chain sprocket transmission box housing 216 welded to the right end of the integral drive axle tube 208. It meshes with the central spline hole of the inner cage and transmits power. The power is then transmitted through the various sets of transmission gears and drive shafts installed in the right end drive axle gear or chain sprocket transmission box housing 216 to drive the wheels 207 installed at both ends of the integral drive axle tube 208 to rotate and drive the vehicle forward.

In the new multi-purpose shaft transmission housing for the integral drive axle that uses a single drive half shaft to transfer power, within the bevel gear right-angle transmission housing 112 of the universal joint output shaft, only a straight-through hard splined shaft 113 can be installed between the left universal joint output shaft bearing housing 118 and the right universal joint output shaft bearing housing 117. The installation of an inter-axle differential assembly is not an option. This ensures that the two constant velocity ball cage universal joints on the universal joint output shaft outside the bevel gear right-angle transmission housing do not have a differential function, guaranteeing smooth power transmission through the single drive half shaft.

Example 6: A new multi-purpose shaft drive system for all-terrain vehicles includes an electric motor longitudinally arranged and installed on the body of a go-kart, UTV, ATV, etc., a vertical or horizontal engine with a mid-mounted output shaft, a CVT engine, and a new multi-purpose shaft drive box installed in a split structure, which is matched with an integral drive axle to transmit power.

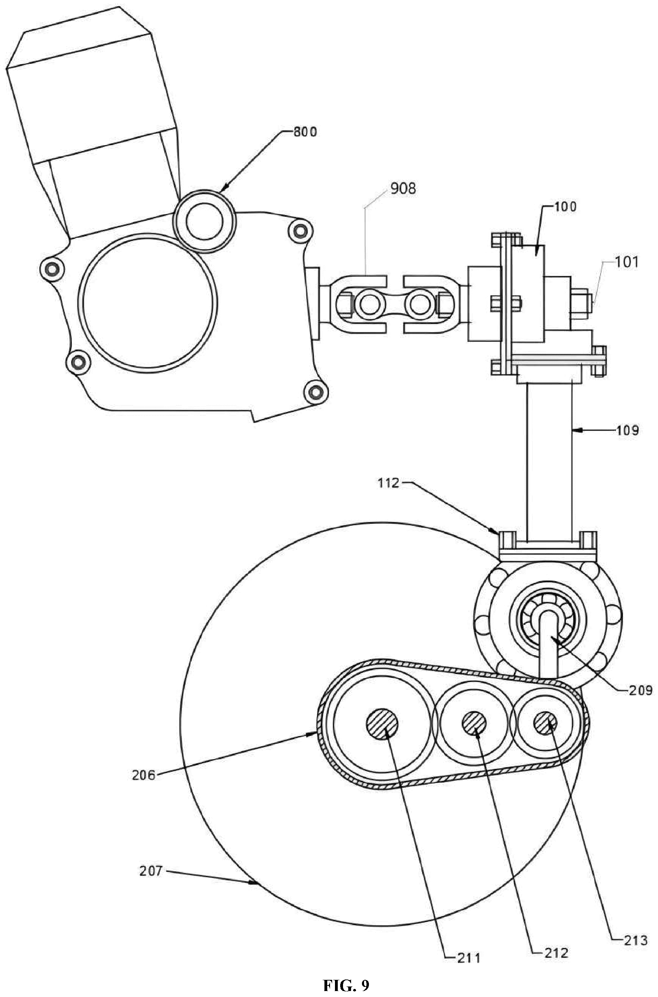

As shown in Figure 9, the rear end of the output shaft bearing housing 001 of the electric motor 1000 installed in the longitudinal position on the chassis of go-karts, UTVs, ATVs, etc., or the output shaft of the vertical or horizontal engine 800 with a mid-mounted longitudinal output shaft is in a horizontal position and extends backward, and is parallel to the longitudinal axis of the chassis of go-karts, UTVs, ATVs, etc. Preferably, one of the engines is integrally installed with the input shaft bevel gear right-angle transmission box housing 100 of the new multi-purpose shaft transmission box body in a vertical position and longitudinally installed.

The short-structured output splined shaft, which is in a horizontal position and extends longitudinally backward from the bearing housing 001 at the end of the mid-mounted longitudinal output shaft of the vertically or horizontally installed engine 800 or the longitudinally positioned electric motor 1000, requires the installation of a universal joint coupling 908 between the input shaft 101 extending forward from the input shaft bevel gear right-angle transmission box housing 100 of the new multi-purpose shaft transmission box body installed longitudinally.

The output splined shaft extending horizontally and rearward from the bearing housing 001 at the end of the vertical or horizontal engine 800 or the motor 1000 installed in a longitudinal position, which is located outside the bearing housing 001 of the engine 800 or the motor 1000, is in a relative installation position with the input shaft splined shaft 101 extending forward from the input shaft bevel gear right-angle transmission box housing 100 of the new multi-purpose shaft transmission box body installed in parallel and coaxially with it. A universal joint coupling 908 is installed between the end of the output splined shaft of the engine 800 or the motor 1000 and the end of the input shaft splined shaft 101 of the new multi-purpose shaft transmission box body, thus keeping the input shaft 101 of the new multi-purpose shaft transmission box body parallel to the longitudinal axis of the kart, UTV, ATV and other vehicle bodies.

The preferred embodiment of the new multi-purpose shaft transmission housing is fixedly installed in a vertical position relative to the engine motor and the frame to transmit power, and is arranged and installed at the rear end of the rear drive shaft and the upper part of the frame of the go-kart, UTV, ATV and other vehicle bodies. Therefore, the universal joint output shaft bevel gear right-angle transmission housing 112 of the new multi-purpose shaft transmission housing, the left universal joint output shaft bearing seat 118 and the right universal joint output shaft bearing seat 117, and the universal joint output splined shaft 113 extending outward to the left and right ends must be in a horizontal position and arranged and installed in the chassis position of the go-kart, UTV, ATV and other vehicle bodies. At the same time, the left constant velocity ball cage universal joint outer cage 115 is installed at the left end of the universal joint output splined shaft 113 outside the left universal joint output shaft bearing seat 118, and the left drive half shaft 209 for outputting power to the left is arranged and installed to output power laterally to the left side of the vehicle body. Similarly, the right constant velocity ball cage universal joint outer cage 115 is installed at the right end of the universal joint output splined shaft 113 outside the right universal joint output shaft bearing seat 117, and the right drive half shaft 210 for outputting power to the right is arranged and installed to output power laterally to the right side of the vehicle body.

Therefore, the input shaft bevel gear right-angle transmission box housing 100 of the new multi-purpose shaft transmission box and the universal joint output shaft bevel gear right-angle transmission box housing 112 are installed and fixed by rotating the flange 110 of the end bevel gear bearing seat cylindrical housing 90° at the axial position of the intermediate transmission shaft 108, so that the input shaft splined shaft 101 in the input shaft bevel gear right-angle transmission box housing 100 is installed in a longitudinal position and is parallel to the longitudinal axis of the go-kart, UTV, ATV and other vehicle bodies, and the universal joint output splined shaft 113 installed in the universal joint output shaft bevel gear right-angle transmission box housing 112, which is installed laterally on the lower part of the frame of the go-kart, UTV, ATV and other vehicle bodies, has a 90° transmission phase difference at the axial position of the intermediate transmission shaft 108.

When a vertical engine or a horizontal engine 800 with a longitudinally installed mid-mounted longitudinal output shaft and an electric motor 1000 in a longitudinal installation position are used as power sources, and when a new multi-purpose shaft transmission box is installed as an integrated structure, the input shaft splined shaft 101 and the universal joint output splined shaft 113 of the new multi-purpose shaft transmission box maintain a perpendicular power transmission position in the axial position of the intermediate transmission shaft 108.

The vertical or horizontal engine 800 with a mid-mounted longitudinal output shaft installed on the body of go-karts, UTVs, ATVs, etc., and the electric motor 1000 installed in a longitudinal position are separately installed with dedicated brackets on the new multi-purpose shaft transmission box body. Between the end of the transmission box shell of the mid-mounted longitudinal output shaft vertical or horizontal engine 800 or the electric motor 1000 installed in a longitudinal position and the input shaft bevel gear right-angle transmission box shell 100 coaxially installed, there is a dedicated extended support seat for the end of the engine or electric motor. The flange end face of the active bevel gear cylindrical shell of the input shaft large bearing seat 103 on the outer end of the input shaft of the input shaft bevel gear right-angle transmission box shell 100 in the horizontal direction is attached to the vertical surface of the dedicated extended support seat for the end of the engine or electric motor and fastened with bolts. The universal joint coupling 908 installed between the output splined shaft at the end of the mid-mounted longitudinal output shaft vertical or horizontal engine 800 or the electric motor 1000 installed in a longitudinal position and the input shaft splined shaft 101 at the input shaft end of the input shaft bevel gear right-angle transmission box shell 100 is installed in a suitable cavity in the middle of the dedicated extended support seat to prevent interference during rotation.

The above-mentioned installation method involves installing a universal joint coupling 908 between the vertical or horizontal engine 800 or the longitudinally installed electric motor 1000, which is longitudinally arranged on the chassis of go-karts, UTVs, ATVs, etc., and the input shaft bevel gear right-angle transmission box housing 100 of the new multi-purpose shaft transmission box body, and integrating them into a single structure through a specially designed extended support seat.

The integral drive axle 208 is connected to the frame of the go-kart, UTV, ATV and other vehicles through a longitudinally installed parallel four-bar linkage and a transversely installed Panhard rod. The integral drive axle 208 is arranged and installed at the position of the rear drive shaft of the go-kart, UTV, ATV and other vehicles. At the same time, the integral drive axle 208 is located at the lower part of the frame and in line with the engine output shaft axis of the engine 800 installed as an integral structure with the frame, and there is a sufficient stroke distance between the integral drive axle 208 and the frame. In the new multi-purpose shaft transmission system on the upper part of the frame, a vertical or horizontal engine 800 with a mid-mounted longitudinal output shaft or a longitudinally installed electric motor 1000 is adopted. Preferably, one of the engines is installed as an integral structure with the new multi-purpose shaft transmission box, and is further connected through The rubber spring bearing is integrated with the frame of the go-kart, UTV, ATV and other vehicle bodies to form an integral structure. On the lower part of the frame, the universal joint output shaft conical gear right-angle transmission box shell 112 of the new multi-purpose shaft transmission box is laterally arranged and installed. The left universal joint output shaft bearing seat 118 and the right universal joint output shaft bearing seat 117 of the box, as well as the universal joint output splined shaft 113 extending to both sides, are installed at the lower part of the frame of the go-kart, UTV, ATV and other vehicle bodies. The left constant velocity ball cage universal joint outer ball cage 115 is installed at the end of the left extending output splined shaft 113 on the left universal joint output shaft bearing seat 118, and the right constant velocity ball cage universal joint outer ball cage 116 is installed at the end of the right extending output splined shaft 113 on the right universal joint output shaft bearing seat 117 and fastened with a center screw. The transmission half shaft 209 for outputting power to the left side of the vehicle body and the transmission half shaft 210 for outputting power to the right side of the vehicle body are respectively inserted into the center splined holes of the inner ball cages inside the left constant velocity ball cage universal joint outer ball cage 115 and the right constant velocity ball cage universal joint outer ball cage 116. The inner ball cages and outer ball cages at both ends of the transmission half shafts are meshed with each other, and the two transmission half shafts simultaneously output power to both sides.

When a vertical or horizontal engine with a mid-mounted output shaft, a CVT engine, and an electric motor are installed in a split structure with a new multi-purpose shaft transmission box and are used to drive the overall drive axle to transmit power, taking the horizontal installation position of the transmission box shell 206 on the left end of the overall drive axle 208 as an example, a single leftward power output half shaft 209 is preferably used. It is horizontally arranged and installed in the outer ball cage 115 of the constant velocity ball cage universal joint on the left side of the output splined shaft 113 of the universal joint. The half shaft 209 installed in the center splined hole of the inner ball cage in the outer ball cage 115 on the left side of the constant velocity ball cage universal joint extends leftward and horizontally and is inserted into the outer ball cage 205 with telescopic function on the right side of the input shaft bearing seat of the left end drive axle gear or chain sprocket transmission box shell 206 welded to the left end of the overall drive axle 208, meshing with the center splined hole of the inner ball cage and transmitting power. The power is then transmitted through the transmission gears and drive shafts installed in the left end drive axle gear or chain sprocket transmission box shell 206 to drive the wheels 207 installed at both ends of the overall drive axle 208 to rotate and drive the vehicle forward.

It is also preferable to install the single rightward force transmission half shaft 210 laterally in the right side constant velocity ball cage universal joint outer cage 116 of the universal joint output spline shaft 113. The rightward power transmission half shaft 210 installed in the inner cage center spline hole of the right side constant velocity ball cage universal joint outer cage 116 extends laterally to the right and is inserted into the left input shaft bearing housing of the right end drive axle gear or sprocket chain drive box housing 216 welded to the right end of the integral drive axle 208, and extends into the left side of the telescopic function constant velocity ball cage universal joint outer cage 215. The center splined holes of the cage mesh with each other to transmit power, and the power is transmitted through the right-end drive axle gear or sprocket chain installed at the right end of the integral drive axle tube 208 and the various sets of transmission gears and drive shafts installed in the transmission box housing 216 to drive the wheels 207 installed at both ends of the integral drive axle tube 208 to rotate and drive the vehicle forward.

n the new multi-purpose shaft transmission housing for the integral drive axle that uses a single drive half shaft to transfer power, the universal joint output shaft bevel gear right-angle transmission housing 112 can only be equipped with a straight-through hard splined shaft 113 between the left universal joint output shaft bearing housing 118 and the right universal joint output shaft bearing housing 117. The installation of an inter-axle differential assembly is not an option. This ensures that the two constant velocity ball cage universal joints on the universal joint output shaft outside the universal joint output shaft bevel gear right-angle transmission housing do not have a differential function, guaranteeing smooth power transmission through the single drive half shaft.

Example 7: A new multi-purpose shaft drive system for all-terrain vehicles includes a new multi-purpose shaft drive box body that is integrally structured and matched with an independent suspension knuckle shaft steering knuckle to transmit power, featuring a conventional vertical or horizontal engine with a transverse output shaft, a conventional CVT engine with a transverse output shaft, a vertical or horizontal engine with a CVT and a longitudinal output shaft, or an electric motor with a longitudinal arrangement.

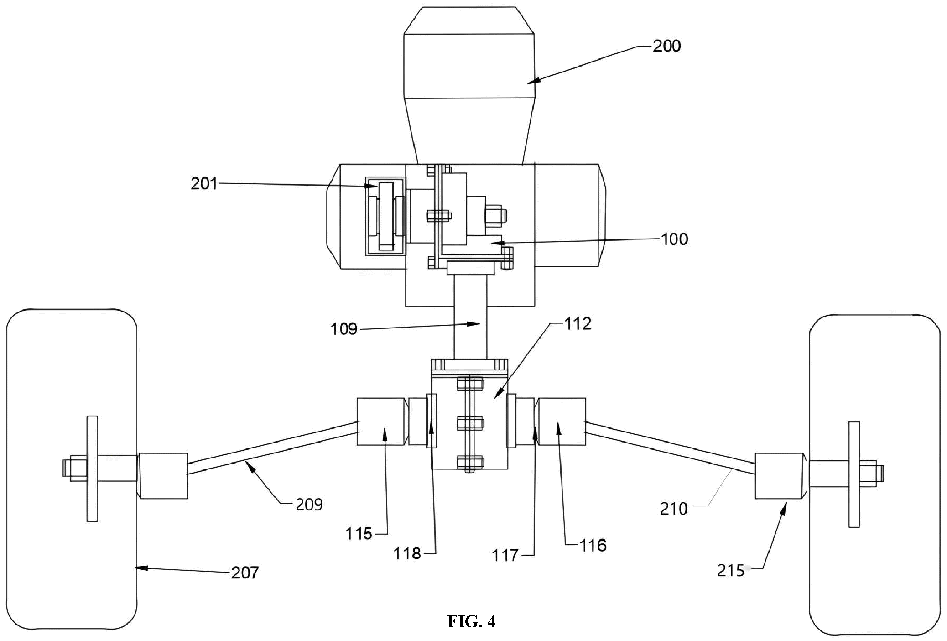

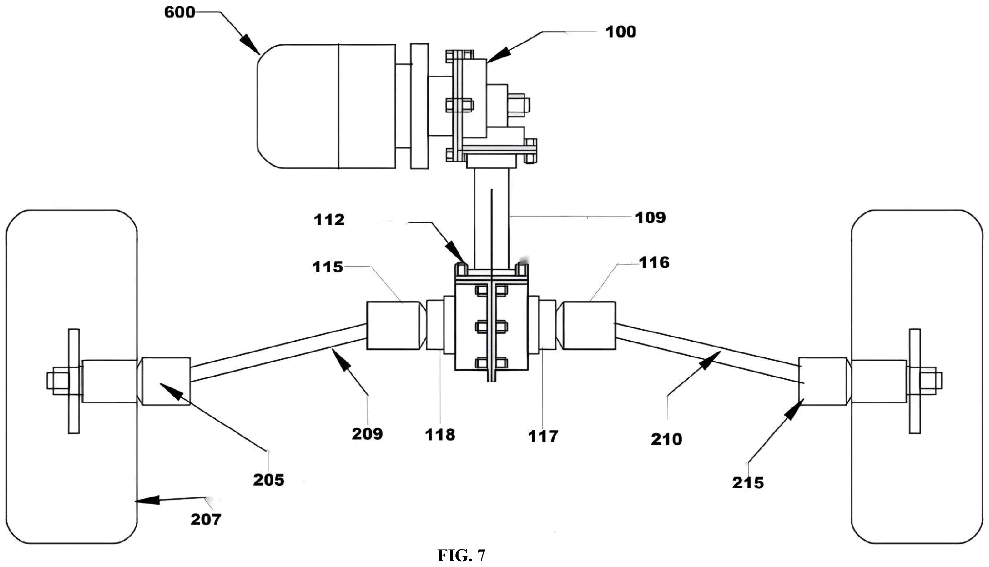

As shown in Figures 4 and 7, the new multi-purpose shaft transmission box body integrated with various types of engine and motor in the present invention is equipped with a universal joint output shaft bevel gear right-angle transmission box shell. At both ends of the shell, there are universal joint output shaft bearing seats, in which universal joint output spline shafts extending to the left and right are installed. At both ends of the universal joint output spline shafts, left and right constant velocity ball cage universal joints are simultaneously installed, and the transmission half shafts for outputting power laterally to the left and right are installed. Therefore, the new multi-purpose shaft transmission box body integrated with various types of engine and motor is also applicable to the power transmission of independent suspension knuckle shaft steering knuckles.

A vertical or horizontal engine 200 with a lateral output shaft, a CVT engine 500 with a lateral output shaft, or an electric motor 600 with a lateral output shaft, all of which are equipped with an overdrive gear transmission box in the new multi-purpose shaft transmission system on the upper part of the vehicle frame, has its output splined shaft extending horizontally to the right from the outer right side of the end output shaft bearing housing 001, and is inserted into the inner splined gear slot of the center splined hole of the bearing assembly of the driving bevel gear 102 installed on the input splined shaft 101 of the input shaft bevel gear right-angle transmission box housing 100 of the new multi-purpose shaft transmission box body, which is coaxially and side-by-side installed on the right. It is fastened with a nut on the outer extension part of the input shaft small bearing housing 104. The input shaft splined shaft 101 coaxial with the input shaft transmits the power of the vertical or horizontal engine 200, the CVT engine 500 with a lateral output shaft, or the electric motor 600 with a lateral output shaft. The input shaft bevel gear right-angle transmission box shell 100 of the new multi-purpose shaft transmission box body is integrally formed in a joint-like structure.

The rear end of the output shaft bearing housing 001 of the vertical or horizontal engine 800 described in or the motor 1000 installed in a longitudinal position, preferably the end output shaft of one of the engines, is in a horizontal position and extends longitudinally backward. The output splined shaft is inserted into the input shaft bevel gear right-angle transmission box housing 100 of the new multi-purpose shaft transmission box, which is installed in parallel and coaxially at the rear end, and meshes with the internal splined teeth of the center splined hole of the bearing assembly of the driving bevel gear 102 installed on the input shaft splined shaft 101. It is fastened with a nut at the extended part outside the small bearing housing 104. The input shaft splined shaft 101 coaxial with the output shaft of the vertical or horizontal engine 800 or the motor 1000 installed in a longitudinal position is installed in the input shaft bevel gear right-angle transmission box housing 100 of the new multi-purpose shaft transmission box to form a joint-like integral structure. The output splined shaft at the end of the engine or variable frequency motor is the input shaft splined shaft 101 at the front end of the input shaft bevel gear right-angle transmission box housing 100 of the new multi-purpose shaft transmission box. This enables the new multi-purpose shaft transmission box to rotate around the input shaft splined shaft 101 to a vertical position, a horizontal position, or any position to transmit power. Preferably, the new multi-purpose shaft transmission box is fixed in a vertical position relative to the engine and the frame to transmit power.

The above structure is integrated with the frame of the go-kart, UTV, ATV, etc. through rubber spring mounts. The new multi-purpose shaft transmission box body is installed under the frame of the go-kart, UTV, ATV, etc. The left and right universal joint output shaft bearing seats 118 and 117 of the right-angle transmission box shell 112 of the new multi-purpose shaft transmission box body are arranged laterally and installed under the frame of the go-kart, UTV, ATV, etc. The left end of the output splined shaft 113 extending out of the left universal joint output shaft bearing seat 118 is equipped with a left constant velocity ball cage universal joint outer cage 115, and the right end of the output splined shaft 113 extending out of the right universal joint output shaft bearing seat 117 is equipped with a right constant velocity ball cage universal joint outer cage 116, which are fastened with a center screw. The inner cage center splined hole of the left constant velocity ball cage universal joint outer cage 115 installed in the universal joint output shaft bearing seat 112 of the new multi-purpose shaft transmission box body is inserted with a left transmission half shaft 209 for transmitting power to the left side of the vehicle. The inner cage installed at the right end of the transmission half shaft 209 is meshed with the left constant velocity ball cage universal joint outer cage 115 to transmit power to the left. The left transmission half shaft 209 extends laterally to the right of the left independent suspension knuckle steering knuckle shaft hole and is meshed with the inner cage center splined hole of the left constant velocity ball cage universal joint outer cage 405 with telescopic function installed therein to transmit power. At the same time, the inner cage center splined hole of the right constant velocity ball cage universal joint outer cage 116 installed in the universal joint output shaft bearing seat 112 of the new multi-purpose shaft transmission box body is inserted with a right transmission half shaft 210 for transmitting power to the right side of the vehicle. The inner cage installed at the left end of the transmission half shaft 210 is meshed with the right constant velocity ball cage universal joint outer cage 116 to transmit power to the right. The right transmission half shaft 210 extends laterally to the left of the right independent suspension knuckle steering knuckle shaft hole and is meshed with the inner cage center splined hole of the right constant velocity ball cage universal joint outer cage 406 with telescopic function installed therein to transmit power. A drive half shaft 210 is inserted into the hole and is installed to output power to the right side of the vehicle body. The inner ball cage and the outer ball cage installed at the left end of the drive half shaft 210 are meshed with each other. The drive half shaft 210, which outputs power to the right, extends laterally to the right and is installed in the center splined hole of the outer ball cage 415 of the left and right independent suspension knuckle shaft steering knuckle of the vehicle body's right side, which has a telescopic function and an equal-speed ball cage universal joint. The left and right knuckle shaft steering knuckles, which are installed on both sides of the vehicle body of go-karts, UTVs, ATVs, etc., and are coaxial, are connected to the frame through one of the preferred connection methods such as double A-type arms, multi-link trailing arms, or longitudinal swing arms. The left and right knuckle shaft steering knuckles, which are coaxial and installed on both sides of the vehicle body, are arranged and installed at the position of the rear drive shaft of the vehicle body. The centerlines of the left and right coaxial knuckle shaft steering knuckles are located at the lower part of the engine output shaft and the frame, which are installed as an integral structure. There is a sufficient stroke distance between the centerlines of the left and right coaxial knuckle shaft steering knuckles and the frame. At the same time, the splined shaft of the left equal-speed ball cage universal joint 405 is inserted into the center splined hole of the left knuckle shaft steering knuckle installed on the left side of the vehicle body, and is installed as an integral structure with the left independent suspension knuckle shaft steering. At the same time, the drive half shaft 209, which outputs power to the left, drives the left equal-speed ball cage universal joint 405, which extends to the right from the center splined hole of the left knuckle shaft steering knuckle installed on the left side of the vehicle body and has a telescopic function, to rotate. At the same time, the splined shaft of the right equal-speed ball cage universal joint 415 is inserted into the center splined hole of the right knuckle shaft steering knuckle installed on the right side of the vehicle body, and is installed as an integral structure with the right independent suspension knuckle shaft steering. At the same time, the drive half shaft 210, which outputs power to the right, drives the right equal-speed ball cage universal joint 415, which extends to the left from the center splined hole of the right knuckle shaft steering knuckle installed on the right side of the vehicle body and has a telescopic function, to rotate. At the same time, the left and right wheels installed on the left and right independent suspension knuckle shaft steering knuckles on both sides of the vehicle body are driven to rotate simultaneously to drive the vehicle forward.

The intermediate position within the conical gear right-angle transmission box housing 112 of the universal joint output shaft of the described independent suspension knuckle can be optionally equipped with an inter-axle differential, enabling the left end of the universal joint output splined shaft 113 extending outward from the left universal joint output shaft bearing seat 118 and the left constant velocity ball cage universal joint outer cage 115 and the left drive half shaft 209 that transmits power to the left, as well as the right end of the universal joint output splined shaft 113 extending outward from the right universal joint output shaft bearing seat 117 and the right constant velocity ball cage universal joint outer cage 116 and the right drive half shaft 210 that transmits power to the right, to have a differential function between the left and right tires.

Example 8: A new multi-purpose shaft drive system for all-terrain vehicles includes a new multi-purpose shaft drive box body, which is applied to the chassis of go-karts, UTVs, ATVs, etc., under the working conditions of being compatible with multiple types of engines, and features a dual-axle four-wheel drive system that distributes power to the front and rear dual drive axles through a power transfer case.

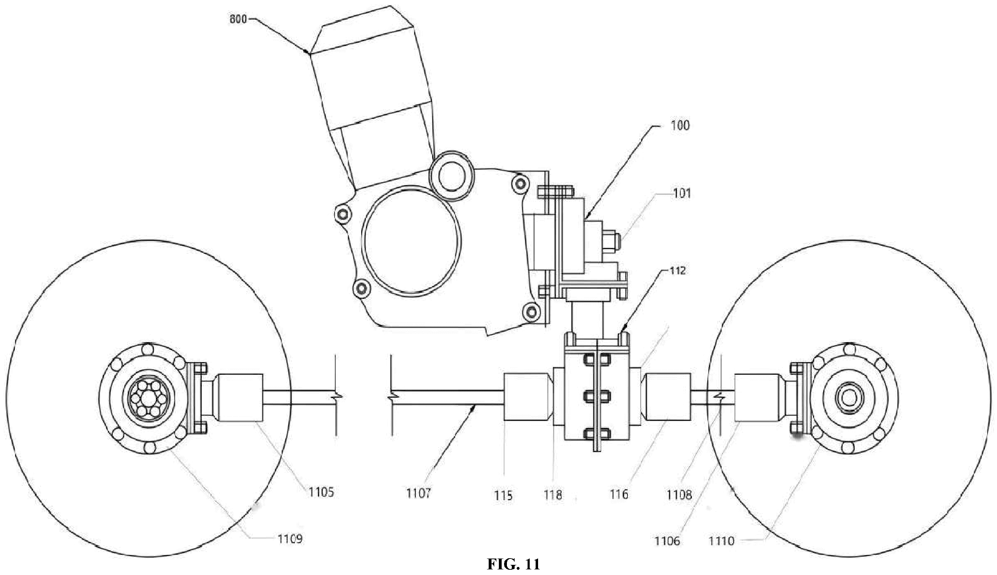

The vertical multi-purpose shaft transmission box body 1000 shown in Figure 11, which is longitudinally installed on the vehicle body of go-karts, UTVs, ATVs, etc., and is matched with a vertical-positioned vertical or horizontal engine 800 with a mid-mounted longitudinal output shaft, forms an integrated structure with a relay power transfer case that can distribute power to the front and rear dual drive axles of a four-wheel drive system.

The electric motor 1000 longitudinally installed on the body of go-karts, UTVs, ATVs, etc., and the vertical or horizontal engine 800 with a mid-mounted longitudinal output shaft are preferably integrated with the input shaft bevel gear right-angle transmission box housing 100 of the new multi-purpose shaft transmission box body in a vertical longitudinal installation position into a single structure.

The middle-mounted longitudinal output shaft of the vertical or horizontal 800 engine or the electric motor 1000 installed in a longitudinal position, with the bearing housing 001 at the end of the output shaft, extends horizontally and rearward, and is parallel to the longitudinal axis of the go-kart, UTV, ATV, and other vehicle bodies. The middle-mounted longitudinal output shaft of the vertical or horizontal 800 engine or the electric motor 1000 installed in a longitudinal position, with the bearing housing 001 at the end of the output shaft, extends horizontally and rearward, and is inserted into the input shaft large bearing housing 103 inside the input shaft bevel gear right-angle transmission box housing 100 of the new multi-purpose shaft transmission box, which is installed in parallel and coaxially outside the bearing housing 001 at the end of the output shaft. It meshes with the internal splines in the center splined hole of the driving bevel gear 102 bearing assembly. The input shaft coaxial splined shaft 101, after passing through the input shaft small bearing housing 104 inside the input shaft bevel gear right-angle transmission box housing 100 of the new multi-purpose shaft transmission box, is fastened with a nut on the extended screw part. The input shaft coaxial splined shaft 101 connects the middle-mounted longitudinal output shaft of the vertical or horizontal 800 engine or the electric motor 1000 installed in a longitudinal position and the input shaft bevel gear right-angle transmission box housing 100 of the new multi-purpose shaft transmission box into a joint-like integral structure. Therefore, the input shaft splined shaft 101 of the input shaft bevel gear right-angle transmission box housing 100 of the new multi-purpose shaft transmission box is parallel to the longitudinal axis of the go-kart, UTV, ATV, and other vehicle bodies.

In order to install the universal joint output shaft bevel gear right-angle transmission box housing 112 of the new multi-purpose shaft transmission box as an intermediate transfer case capable of outputting power in both the front and rear directions of the go-kart, UTV, ATV and other vehicle bodies, the universal joint output shaft bevel gear right-angle transmission box housing 112 of the new multi-purpose shaft transmission box, the universal joint output shaft bearing seat and the extended universal joint output splined shaft 113 must be arranged and installed longitudinally and horizontally at the bottom of the engine. The universal joint output shaft bearing seat 118 at the front end of the universal joint output shaft bevel gear right-angle transmission box housing 112 of the new multi-purpose shaft transmission box drives the front differential. The power is transmitted from the output shaft of the universal joint at the rear end of the bearing housing 117 to the rear drive axle, and it is integrated with the engine 800 or the electric motor 1000. The universal joint output shaft bevel gear right-angle transmission box housing 112, the bearing housing 118 at the front end of the universal joint output shaft and the bearing housing 117 at the rear end, as well as the universal joint output splined shaft 113 extending forward and backward, are all parallel to the longitudinal axis of the kart, UTV, or ATV vehicle body. The input shaft splined shaft 101 of the input shaft bevel gear right-angle transmission box housing 100 and the universal joint output splined shaft 113 of the universal joint output shaft bevel gear right-angle transmission box housing 112 are both in the same vertical plane and parallel to the longitudinal axis of the kart, UTV, or ATV vehicle body. At the front end of the universal joint output splined shaft 113 extending forward from the bearing housing 118 at the front end of the universal joint output shaft bevel gear right-angle transmission box housing 112, the outer ball cage 115 of the constant velocity ball cage universal joint is installed, and the drive half shaft 1107 for transmitting power to the front drive axle 1109 is also installed. At the rear end of the universal joint output splined shaft 113 extending backward from the bearing housing 117 at the rear end of the universal joint output shaft bevel gear right-angle transmission box housing 112, the outer ball cage 116 of the constant velocity ball cage universal joint is installed, and the drive half shaft 1108 for transmitting power to the rear drive axle 1110 is also installed. Power is simultaneously transmitted to the front and rear drive axles.

Example 9: A new multi-purpose shaft transmission system for all-terrain vehicles includes a common vertical engine and a horizontal engine, both equipped with a transmission box housing with overdrive gears or sprocket chain drive. The new multi-purpose shaft transmission box is installed in an integrated structure. When applied to a four-wheel drive with front and rear double axles, the transmission structure features a power distribution box for distributing power to the front and rear double drive axles.

The overdrive gear (or the outer end output shaft bearing housing 001 on the right side of the horizontal position and extending horizontally to the right of the sprocket chain drive box housing 201) installed on the left side of the vertical or horizontal engine block 200 of the transverse output shaft is inserted into the input shaft large bearing housing 103 of the input shaft bevel gear right-angle drive box housing 100 of the new multi-purpose shaft drive box body arranged in parallel and coaxially on the right side, and meshes with the internal splines in the center splined hole of the driving bevel gear 102. The input shaft coaxial splined shaft 101 passes through the input shaft small bearing housing 104 outside the input shaft bevel gear right-angle drive box housing 100 of the new multi-purpose shaft drive box body and is fastened with a nut on the extended screw part outside.

Therefore, the input shaft of the new multi-purpose shaft transmission box housing, the right-angle transmission box housing 100 of the conical gear, is arranged and installed in a horizontal position on the chassis of go-karts, UTVs, ATVs, etc. The input shaft co-axial splined shaft 101 is arranged and installed in a horizontal position on the left side of the box housing of the vertical or horizontal engine 200, and the output shaft co-axial at the right end of the overdrive gear or sprocket chain drive box housing 201 extends horizontally to the right. The splined shaft connects the engine and the input shaft bevel gear of the new multi-purpose shaft transmission box housing 100 in a joint-like integral structure, enabling the new multi-purpose shaft transmission box to rotate around its input shaft splined shaft 101, which is coaxial with the overdrive gear or sprocket chain drive box 201, to the right horizontal position, vertical position or any direction position to transmit power.

The preferred structure for transmitting power is to install the new multi-purpose shaft transmission box in a vertical position and apply it to the power distribution of the front drive axle 1109 and the rear drive axle 1110 through the intermediate power transfer case. Since the end output splined shaft of the overdrive gear or chain sprocket transmission box 201 installed on the left side of the horizontal output shaft of the vertical or horizontal engine 200 is in a horizontal position and extends laterally to the right, and is inserted into the input shaft large bearing housing 103 of the input shaft bevel gear direct drive box housing 100 of the new multi-purpose shaft transmission box installed in parallel and coaxially on the right side, the input shaft large bearing housing 103 and the input shaft co-axial splined shaft 101 of the input shaft bevel gear right-angle drive box housing 100 of the new multi-purpose shaft transmission box are arranged horizontally and laterally on the body of the four-wheel drive kart UTV ATV with front and rear double axles, and are parallel to the drive shafts of the front drive axle 1109 and the rear drive axle 1110.

In order to enable the universal joint output shaft splined shaft 113 of the new multi-purpose shaft transmission box body's universal joint output shaft bevel gear right-angle transmission box shell 112 to output power in both the front and rear directions of the go-kart, UTV, ATV and other vehicle bodies, the universal joint output shaft bearing seat and the universal joint output splined shaft 113 of the new multi-purpose shaft transmission box body's universal joint output shaft bevel gear right-angle transmission box shell 112 must be installed horizontally and longitudinally at the bottom of the vertical or horizontal engine 200 and integrated with the engine as a whole structure. The universal joint output shaft bevel gear right-angle transmission box shell 112's front universal joint output bearing seat 118 and rear universal joint output shaft bearing seat 117, as well as the universal joint output splined shaft 113 extending outwards in both the front and rear directions, should be installed in the same vertical plane as the longitudinal axis of the go-kart, UTV, ATV and other vehicle bodies, with the two shafts parallel to each other. At the front end of the universal joint output splined shaft 113, a front constant velocity ball cage universal joint 115 is installed and a transmission half shaft 1107 extending forward is installed to transmit power to the front drive axle 1109. At the rear end of the universal joint output splined shaft 113, a rear constant velocity ball cage universal joint 116 is installed and a transmission half shaft 1108 extending backward is installed to transmit power to the rear drive axle 1110. Therefore, the input shaft bevel gear right-angle transmission box shell 100 of the new multi-purpose shaft transmission box body and the universal joint output shaft bevel gear right-angle transmission box shell 112 of the new multi-purpose shaft transmission box body must be installed with the intermediate transmission shaft protection support tube 109 and the flange of the end bevel gear bearing seat cylindrical shell 110 rotated 90° in the axial position of the intermediate transmission shaft 108, so that the horizontally arranged The input shaft splined shaft 101 of the new multi-purpose shaft transmission box housing 100 with a bevel gear right-angle transmission box shell and the universal joint output splined shaft 113 of the new multi-purpose shaft transmission box housing 112 with a bevel gear right-angle transmission box shell, which is longitudinally arranged and installed at the bottom of the engine, have a 90° transmission phase difference at the axial position of the intermediate transmission shaft 108.

When the new multi-purpose shaft transmission housing is used in conjunction with various types of engines and applied to the power distribution of the front and rear double-axle four-wheel drive through the intermediate power transfer box, the intermediate transmission shaft 108 and the intermediate transmission shaft protection support tube 109 of the new multi-purpose shaft transmission housing can use the shorter models of the intermediate transmission shaft 108 and the intermediate transmission shaft protection support tube 109 as much as possible without causing transmission interference between the drive half shaft and the constant velocity ball cage universal joint. This enables the front universal joint output shaft bearing housing 118 and the rear universal joint output shaft bearing housing 117 of the universal joint output shaft bevel gear right-angle transmission housing 112 of the new multi-purpose straight shaft transmission housing to be closer to the bottom of the engine, thereby reducing the overall height of the engine and the new multi-purpose shaft transmission housing which is integrally installed with the engine.

Example 10: A new multi-purpose shaft transmission system for all-terrain vehicles includes an electric motor and a conventional transverse output shaft of a CVT engine, which are laterally arranged and installed on the body of a go-kart, UTV, ATV, etc. The new multi-purpose shaft transmission box is installed in an integrated structure. When applied to a dual-axle four-wheel drive, the transmission structure feature is to distribute power to the front and rear dual drive axles through a power transfer box.

The output spline shaft at the right end of the CVT engine 500 transmission box or the right end of the motor 600 installed on the chassis of go-karts, UTVs, ATVs, etc., which is in a horizontal position and extends laterally to the right, is inserted into the large bearing seat 103 of the input shaft bevel gear right-angle transmission box housing 100 of the new multi-purpose shaft transmission box, and meshes with the internal splines in the center spline hole of the driving bevel gear 102. The input shaft coaxial spline shaft 101 of the new multi-purpose shaft transmission box extends outside the small bearing seat 104 of the input shaft bevel gear right-angle transmission box housing 100 and is fastened with a nut at the extended screw part. Therefore, the output spline shaft at the right end of the CVT engine 500 transmission box or the right end of the motor 600 is the input shaft coaxial spline shaft 101 of the new multi-purpose shaft transmission box. Through the coaxial spline shaft of the output shaft that is in a horizontal position and extends laterally to the right at the end of the CVT engine 500 transmission box or the motor 600, the CVT engine 500 transmission box or the motor 600 is connected to the input shaft bevel gear right-angle transmission box of the new multi-purpose shaft transmission box. The box housing 100 is installed in a joint-like integral structure form, allowing the input shaft bevel gear right-angle transmission box housing 100 of the new multi-purpose shaft transmission box to rotate around its input shaft coaxial splined shaft 101, which is the output shaft coaxial splined shaft at the right end of the CVT engine 500 transmission box or the output shaft coaxial splined shaft at the right end of the electric motor 600, to the horizontal position, vertical position or any direction position for power transmission.

The preferred CVT engine 500 with a transverse output shaft or the transverse output shaft electric motor 600, when applied to the new multi-purpose shaft transmission box for distributing power to the forward drive axle 1109 and the rear drive axle 1110 through the intermediate power transfer case, adopts a vertical installation method for power transmission.

Since the end output spline shaft of the CVT engine 500 transmission housing or the electric motor 600 with a horizontal output shaft extends laterally to the right and is inserted into the input shaft large bearing housing 103 of the input shaft bevel gear direct drive housing 100 of the new multi-purpose shaft transmission housing installed side by side and coaxially on the right, it meshes with the internal tooth spline groove in the center spline hole of the bearing assembly of the driving bevel gear 102 and is fastened with a nut on the extended part outside the small bearing housing 104.

Therefore, the input shaft bevel gear right-angle transmission box housing 100 of the new multi-purpose shaft transmission box, with its large input shaft bearing housing 103 and input shaft coaxial splined shaft 101, is horizontally and laterally arranged and installed on the body of the four-wheel drive kart UTV ATV with front and rear double axles, and is installed in a position parallel to the drive shafts of the front drive axle 1109 and the rear drive axle 1110. To enable the universal joint output shaft bevel gear right-angle transmission box housing 112 of the new multi-purpose shaft transmission box to output power in the direction of the front and rear drive axles of the kart UTV ATV, the universal joint output shaft bearing housing and the universal joint output splined shaft 113 of the universal joint output shaft bevel gear right-angle transmission box housing 112 must be horizontally and longitudinally arranged and installed at the bottom of the transverse output shaft of the engine 500 or the transverse output shaft of the electric motor 600. The front universal joint output bearing housing 118 and the rear universal joint output shaft bearing housing 117 of the universal joint output shaft bevel gear right-angle transmission box housing 112, as well as the forwardly extending universal joint output splined shaft 113, should be in the same vertical plane as the longitudinal axis of the kart UTV ATV body and be installed in a parallel position. At the front end of the forwardly and rearwardly extending universal joint output splined shaft 113, the front constant velocity ball cage universal joint 115 is installed, and the forward power transmission half shaft 1107 is installed to transmit power to the front drive axle 1109. At the rear end of the forwardly and rearwardly extending universal joint output splined shaft 113, the rear constant velocity ball cage universal joint 116 is installed, and the rear power transmission half shaft 1108 is installed to transmit power to the rear drive axle 1110. Therefore, the input shaft bevel gear right-angle transmission box housing 100 of the new multi-purpose shaft transmission box must be connected with the universal joint output shaft bevel gear right-angle transmission box housing 112 of the new multi-purpose shaft transmission box. The conical gear of the output shaft of the right-angle transmission box shell 112 is rotated 90° and fixed on the axial position of the intermediate transmission shaft 108, so that the input shaft conical gear right-angle transmission box shell 100 of the new multi-purpose shaft transmission box body has the input shaft splined shaft 101 in a horizontal and transverse installation position, and the universal joint output splined shaft 113 in the universal joint output conical gear right-angle transmission box shell 112 of the new multi-purpose shaft transmission box body is arranged longitudinally at the bottom of the engine or motor, with a 90° transmission phase difference on the axial position of the intermediate transmission shaft 108. When the new multi-purpose shaft transmission box body is used in conjunction with various types of engines and applied to the power distribution to the front and rear double drive axles in the power transfer box for the front and rear double drive axles, the intermediate transmission shaft 108 and the intermediate transmission shaft protection support tube 109 of the new multi-purpose shaft transmission box body can use the shorter models as much as possible without causing transmission interference with the drive half shaft and the constant velocity ball cage universal joint, so that the universal joint output conical gear right-angle transmission box of the new multi-purpose straight shaft transmission box body can be closer to the bottom of the engine, reducing the overall height of the engine and the new multi-purpose shaft transmission box body which is integrally installed with the engine.

The constant velocity ball cage universal joint used in the novel multi-purpose shaft transmission system of the present invention serves as an exemplary illustration. In this transmission system, it is not specifically limited to the constant velocity ball cage universal joint. To reduce the actual production and usage costs, the constant velocity ball cage universal joint in the exemplary embodiment of the present invention can be replaced with a cross-axis universal joint or a flexible universal joint coupling, or other types of universal joints for power transmission.

In the present invention, the three sets of transmission gears or sprocket chains installed in the integral drive axle transmission box shell used in conjunction with the new multi-purpose shaft transmission system are for demonstration purposes. In this transmission system, it is not specifically limited to three sets of transmission gears or sprocket chains. During production and use, the number of transmission gears or sprocket chains installed in the integral drive axle transmission box shell can be increased or decreased according to the actual working conditions to achieve the best transmission matching.

In the present invention, when the new multi-purpose shaft transmission box is used in conjunction with a conventional vertical or horizontal engine, the three sets of transmission gears or sprocket chains installed in the overdrive gear or sprocket chain transmission box shell between the engine and the new multi-purpose shaft transmission box serve as an exemplary illustration. In this transmission system, it is not specifically limited to three sets of transmission gears or sprocket chains. During production and use, the number of transmission gears or sprocket chains installed in the overdrive gear or sprocket chain transmission box shell can be increased or decreased according to actual working conditions to achieve the best transmission match.

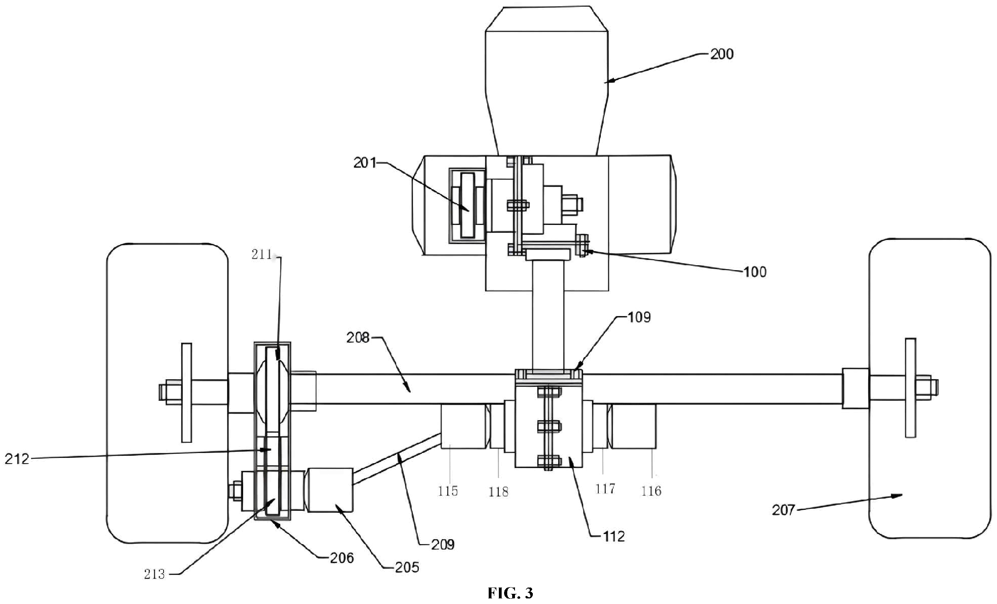

The working principle involved in one of the above-mentioned embodiments is as follows: The ordinary vertical or horizontal engine equipped with a new multi-purpose shaft transmission box body, which is installed with an overdrive gear or chain wheel and chain transmission box body as shown in Figures 2, 3, and 4, is applied to the integral drive axle and independent suspension transmission system.

A set of horizontal-positioned overdrive gear or sprocket chain transmission box 201 is installed on the left side of the vertical or horizontal engine 200. The output splined shaft on the left side of the vertical or horizontal engine 200 is inserted into the center hole of the splined shaft of the first input shaft's first drive gear 218 in the overdrive gear or sprocket chain transmission box shell 201 and meshes with it. The rotating output shaft of the engine 200 drives the first input shaft's first drive gear 218 in the overdrive gear or sprocket chain transmission box 201 to rotate simultaneously, and also drives multiple sets of sequentially arranged and meshing drive gears to rotate. In the middle position between the two bearing seats on the left and right ends of the first input shaft in the overdrive gear or sprocket chain transmission box 201, the first input shaft's first drive gear 218 drives the second drive gear 219 installed between the two bearing seats in the middle to rotate, and transmits the power to the third drive gear 220 combination installed in the middle position between the two bearing seats at the end of the output shaft, and also drives the splined shaft at the end of the output shaft of the overdrive gear or sprocket chain transmission box 201 to rotate simultaneously to transmit the power. The output splined shaft at the end of the overdrive gear or sprocket chain transmission box 201 extends horizontally to the right outside the output shaft bearing seat 001 at the right end, and at the same time, it is inserted into the large bearing seat 103 and small bearing seat 104 of the input shaft bevel gear right-angle transmission box shell 100 of the new multi-purpose shaft transmission box installed side by side and coaxially on the right, and meshes with the splined slot in the center splined shaft hole of the input shaft driving bevel gear 102 installed in the input shaft bevel gear right-angle transmission box shell 100. Therefore, the output splined shaft 101 extending to the right outside the output shaft bearing seat 001 at the end of the overdrive gear or sprocket chain transmission box 201 drives the input shaft driving bevel gear 102 in the input shaft bevel gear right-angle transmission box shell 100 of the new multi-purpose shaft transmission box to rotate simultaneously. The power output by the engine is transmitted through the overdrive gear or sprocket chain transmission box to the new multi-purpose shaft transmission box.

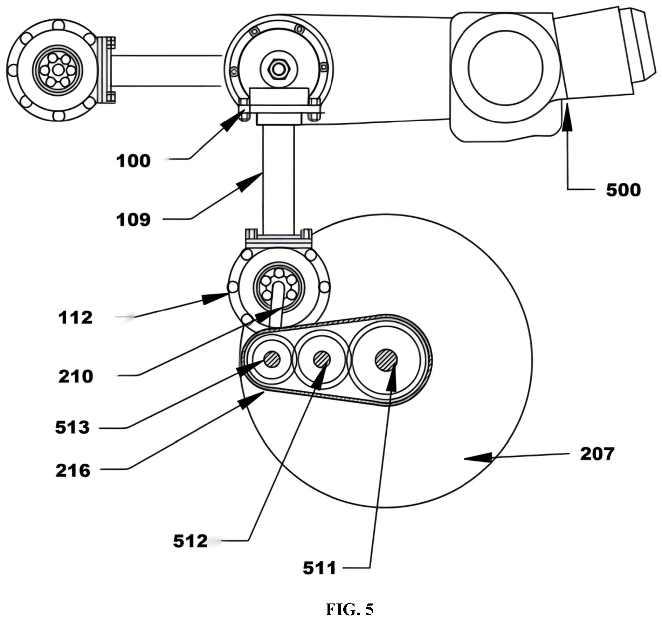

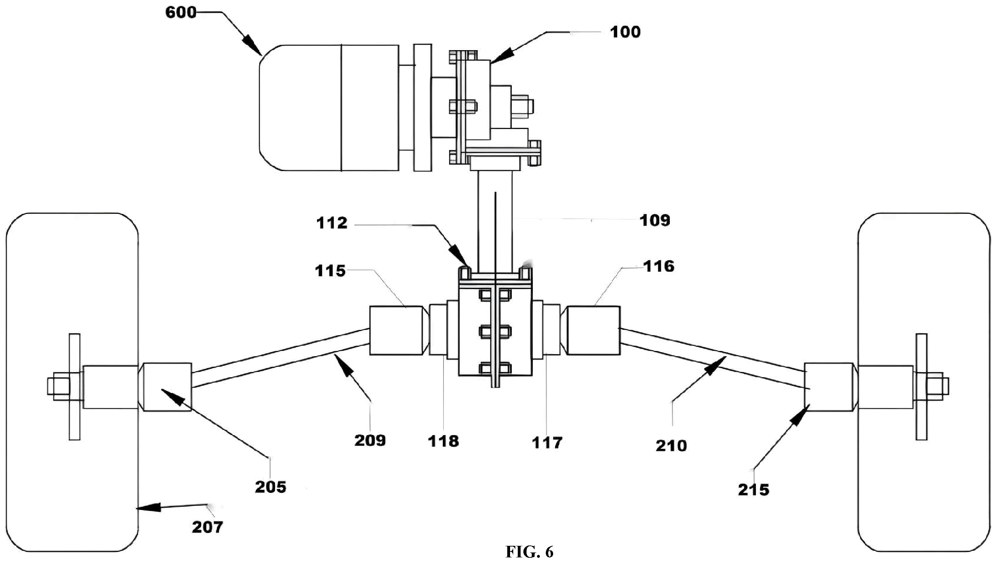

One of the working principles involved in the above-mentioned embodiments, as illustrated in Figures 5, 6, and 7, is the application of a new multi-purpose shaft transmission housing for CVT engine and motor in the power transmission system of the integral drive axle and independent suspension knuckle steering knuckle.

The co-axial splined shaft of the CVT engine 500 transmission housing end or the motor 600 end of the transverse output shaft is in a horizontal position and extends laterally to the right, penetrating the input shaft bevel gear right-angle transmission box 100 of the new multi-purpose shaft transmission housing installed side by side and coaxially on the right. The splines on the output shaft coaxial splined shaft extending to the right from the output shaft bearing housing 001 at the end of the CVT engine 500 transmission housing or the electric motor 600 mesh with the splines in the center splined hole of the input shaft bevel gear 102 installed in the input shaft bevel gear right-angle transmission housing 100 within the large bearing housing 103 of the input shaft, thus driving the bevel gear 102 in the input shaft bevel gear right-angle transmission housing 100 of the new multi-purpose shaft transmission housing to rotate simultaneously, transmitting the power output from the CVT engine or the electric motor into the new multi-purpose shaft transmission housing.

One of the working principles involved in the above-mentioned embodiments is illustrated in Figures 8, 9, and 10, which shows the application of a new multi-purpose shaft transmission housing for a vertical engine with a mid-mounted output shaft, a horizontal engine, a CVT engine, and an electric motor longitudinally installed on the body of a go-kart, UTV, or ATV in the power transmission system of an integral drive axle and independent suspension knuckle.

When the vertical or horizontal engine 800 with a mid-mounted longitudinal output shaft and the electric motor 1000 installed in a longitudinal position are integrated into a single structure with the input shaft bevel gear right-angle transmission box housing 100 of the new multi-purpose shaft transmission box, the longitudinal arrangement of the mid-mounted longitudinal output shaft of the vertical or horizontal engine 800 or the electric motor 1000 is installed on the vehicle body of a go-kart, UTV, ATV, etc. The output shaft splined shaft 101 extending outward and backward from the end output shaft bearing housing 001 of the engine 800 or the electric motor 1000 is inserted into the input shaft large bearing housing 103 of the input shaft bevel gear right-angle transmission box housing 100 installed in parallel and coaxially with the end output shaft bearing housing 001 of the engine 800 or the electric motor 1000, and meshes with the center splined teeth of the input shaft driving bevel gear 102 installed in the input shaft bevel gear right-angle transmission box housing 100. Therefore, the output shaft splined shaft 101 extending outward and backward from the end output shaft bearing housing 001 of the mid-mounted output shaft of the vertical or horizontal engine 800 or the longitudinally installed electric motor 1000 drives the input shaft driving bevel gear 102 installed on the input shaft splined shaft 101 coaxially with it to rotate simultaneously, thereby transmitting the power output from the mid-mounted output shaft of the engine 800 or the electric motor 1000 to the new multi-purpose shaft transmission box.

Since the output shaft splined shaft 001 installed in the output shaft bearing housing of the mid-mounted engine 800 or the electric motor 1000 is coaxial with the input shaft splined shaft 101 installed in the input shaft bearing housing 103 of the new multi-purpose shaft transmission box body's input shaft bevel gear right-angle transmission box housing 100, and both are parallel to the longitudinal axis of the kart, UTV, ATV and other vehicle bodies, in order to make the universal joint output shaft bevel gear right-angle transmission box 112 of the new multi-purpose shaft transmission box body's universal joint output shaft parallel to the longitudinal axis of the vehicle body, The bearing housing of the shaft and the universal joint output shaft 113 are installed transversely on the chassis of go-karts, UTVs, ATVs, etc. Therefore, the input shaft bevel gear right-angle transmission box housing 100 of the new multi-purpose shaft transmission box and the universal joint output shaft bevel gear right-angle transmission box housing 112 are positioned on the axial position of the intermediate transmission shaft 108. The intermediate transmission shaft support and protection tube 109, which is welded with the flange of the cylindrical shell of the end bevel gear bearing housing, is rotated 90° and fixedly installed, so that the input shaft bevel gear right-angle transmission box housing 100's input shaft splined shaft 101 is installed longitudinally on the go-kart, UTV, ATV, etc. chassis, and the universal joint output splined shaft 113 inside the universal joint output shaft bevel gear right-angle transmission box housing 112, which is installed transversely on the chassis of the go-kart, UTV, ATV, etc., has a 90° transmission phase difference on the axial position of the intermediate transmission shaft 108.

One of the working principles involved in the above-mentioned embodiments is illustrated in Figure 1, which shows the working principle of the new multi-purpose shaft transmission housing.

In the input shaft bevel gear right-angle transmission box housing 100 of the new multi-purpose shaft transmission box, the driving bevel gear 102 is installed on the input shaft 101 in the horizontal direction of rotation and in the middle position of the two sets of bearing seats, and it meshes with the driven bevel gear 106 installed at the input end of the intermediate transmission shaft 108 in the vertical direction, and they rotate simultaneously to transmit power, converting the horizontal output power of the engine motor into vertical output power.

In the input end bearing housing 105 of the intermediate transmission shaft support protection tube 109 in the vertical direction, the intermediate transmission shaft 108 and the driven bevel gear 106 at the input end are installed and rotate simultaneously in mesh with the driving bevel gear 102. At the same time, they drive the intermediate transmission shaft 108 in the tube cavity of the intermediate transmission shaft support protection tube 109, which is in mesh with the splined shaft hole of the driven bevel gear 106, to rotate. The intermediate transmission shaft 108 transmits power to the end output shaft bevel gear 111 installed in the end bearing housing 110 of the intermediate transmission shaft support protection tube 109, which is in mesh with the splined shaft of the intermediate transmission shaft 108, to output power and drive the end driving bevel gear 111 installed in the universal joint output shaft bevel gear right-angle transmission box housing 112 to rotate simultaneously. At the same time, in the output shaft bearing housings at the left and right ends in the horizontal position inside the universal joint output shaft bevel gear right-angle transmission box housing 112 of the new multi-purpose shaft transmission box body, the universal joint output shaft splined shaft 113 and the left driven bevel gear 119 and the right driven bevel gear 120 installed in the left and right output shaft bearing housings in the horizontal position are in mesh and rotate simultaneously, driving the universal joint output shaft 113 to rotate and transmit power.

As the center holes of the left and right pairs of driven bevel gears installed on the bearing housing of the universal joint output shaft are smooth holes without internal splines, they cannot mesh with the splined shaft of the universal joint output, thus failing to connect with the intermediate transmission. The two sets of driven bevel gears 119 and 120 on the left and right ends of the output shaft 113 of the universal joint can rotate simultaneously in both forward and backward directions. At the middle position of the two sets of driven bevel gears 119 and 120 on the output shaft 113 of the universal joint, the center hole of the middle sliding splined sleeve 114 inserted into the output shaft 113 of the universal joint has an internal splined slot structure, which meshes with the splined slot of the output shaft 113 of the universal joint. Meanwhile, the middle sliding splined sleeve 114 can slide left and right. When it slides to the left, it can mesh with the splined sleeve on the inner side of the driven bevel gear 119 at the left end. When it slides to the right, it can mesh with the splined sleeve on the inner side of the driven bevel gear 120 at the right end. Thus, the output shaft 113 of the universal joint has the function of forward and reverse rotation, enabling the vehicle to have the reverse gear function for moving forward and backward.

One of the working principles involved in the above-mentioned embodiments is that the output shaft of a vertical or horizontal engine 200 with a transverse output shaft, a CVT engine 500 with a transverse output shaft, and a transversely installed electric motor 600, as well as a vertical or horizontal engine 800 with a mid-mounted output shaft and a CVT engine, and a longitudinally installed electric motor 1000, preferably, the output shaft of one of the engines is inserted into the large bearing housing 103 of the input shaft of the new multi-purpose shaft transmission box body conical gear right-angle transmission box housing 100, which is coaxially and side-by-side installed with the bearing housing 001 at the end of the engine output shaft. The engine and the new multi-purpose shaft transmission box are installed as an integrated structure and are flexibly installed at the rear middle position of the upper part of the vehicle body of a go-kart, UTV, ATV, etc., through a rubber spring mount. The new multi-purpose shaft transmission box, which is installed as an integrated structure with the engine, is connected in a joint-like structure through its coaxial splined shaft 101, allowing the new multi-purpose shaft transmission box to rotate around the coaxial splined shaft to a horizontal position, a vertical position, or any direction to transmit power.

One of the working principles involved in the above-mentioned embodiments is illustrated by the structure form in which the new multi-purpose shaft transmission box is vertically arranged and installed, and the power is transmitted to the integral drive axle with the rear drive as an example, as shown in Figures 2, 3, 5, 6, 8, 9, and 10.

The new multi-purpose shaft transmission box, which is integrally structured with the engine, is vertically installed at the rear middle position on the upper part of the frame of go-karts, UTVs, ATVs, etc. The universal joint output shaft bevel gear right-angle transmission box housing 112 of the new multi-purpose shaft transmission box is laterally installed at the rear end of the integral drive axle of the chassis of go-karts, UTVs, ATVs, etc., ensuring a suitable distance between the universal joint output shaft bearing seat of the bevel gear right-angle transmission box housing 112 and the bridge tube of the integral drive axle 208, and maintaining a parallel power transmission position of the two shafts. The two ends of the universal joint output splined shaft 113 outside the universal joint output shaft bearing seat of the bevel gear right-angle transmission box housing 112, which is laterally installed on the chassis of go-karts, UTVs, ATVs, etc., are simultaneously installed. It is equipped with two left and right constant velocity ball cage universal joints, with the outer cages of the two universal joints fastened by a central screw. Inside the outer cages of the two left and right constant velocity ball cage universal joints, two left and right drive half shafts are simultaneously installed, which mesh with the inner cages of the two universal joints. The two drive half shafts extend to the left and right respectively to the input shaft end of the drive axle gear or sprocket chain drive box installed at the left or right end of the overall drive axle tube 208. The power is transmitted through the constant velocity ball cage universal joint installed at the input shaft end of the chain drive box. Among them, the preferred rotating left output power constant velocity ball cage universal joint 115 outer cage drives the left output force drive half shaft 209 installed with the inner cage to rotate simultaneously, and extends to the left to the input shaft bearing seat of the drive axle gear or sprocket chain drive box body 206 installed at the left end of the overall drive axle tube 208, and meshes with the inner cage of the left and right extendable constant velocity ball cage universal joint 205 extending outwards to the right, driving the left and right extendable constant velocity ball cage universal joint 205 and the input shaft third drive small gear or sprocket 213 installed on the splined shaft of the constant velocity ball cage universal joint in the middle of the two input shaft bearing seats in the drive axle gear or sprocket chain drive box shell 206 to rotate simultaneously, and transmits the power to the second intermediate drive gear or chain guide wheel 212 installed on the intermediate shaft between the two bearing seats in the middle of the drive axle gear or sprocket chain drive box body, and drives the first drive large gear or large sprocket 211 installed on the overall drive shaft in the drive axle gear or sprocket chain drive box body to rotate simultaneously, and the overall drive shaft rotates in the overall drive axle tube, and transmits the power to the drive wheels installed at both ends of the overall drive shaft to rotate together, driving the vehicle forward.

When the vehicle ahead travels on a bumpy road, the integral drive axle bounces up and down with the road surface and performs vertical bouncing movements with the vehicle frame or cross-axis movements with the front axle. In the transmission system, the left end of the single transmission half shaft 209 that outputs power to the left is connected to the inner cage of the constant velocity ball cage universal joint 115 installed on the left end of the output shaft bearing seat 118 of the new multi-purpose shaft transmission box 112, which is laterally arranged and installed on the vehicle frame chassis. In the movement posture, it maintains a relatively stationary transmission position with the vehicle frame. The right end of the single transmission half shaft 209 that outputs power to the left is connected to the inner cage of the telescopic constant velocity ball cage universal joint 205, which extends outward to the right from the input shaft bearing seat of the drive axle gear or chain sprocket transmission box 206 installed on the left end of the integral drive axle tube. In the movement posture, when the integral drive axle 208 undergoes large-amplitude bouncing, it ensures the continuity of power transmission in the transmission system.

Figure 7 in Figure 4 shows an example of the power transmission of the independent suspension knuckle shaft steering knuckle driven by the rear drive, which is equipped with a new multi-purpose vertical shaft transmission housing.

The new multi-purpose shaft transmission box, which is integrally structured with the engine, is vertically installed at the upper part of the frame of the go-kart, UTV or ATV and located at the rear middle position of the frame. The universal joint output shaft bevel gear right-angle transmission box 112 of the new multi-purpose shaft transmission box is laterally installed at the rear drive axle position of the go-kart, UTV or ATV frame, and the universal joint output shaft bearing seat of the new multi-purpose shaft transmission box is arranged in the same vertical plane as the output splined shaft 113 of the universal joint output shaft bearing seat and the axis of the independent suspension knuckle shaft steering knuckle installed on the right side of the vehicle body at the rear drive axle position. The universal joint output shaft bearing seat of the new multi-purpose shaft transmission box 112 is laterally installed at the position of the vehicle frame chassis of the go-kart, UTV or ATV, and the two ends of the universal joint output shaft splined shaft 113 are simultaneously equipped with left and right constant velocity ball cage universal joints and fastened with a center screw. The left and right constant velocity ball cage universal joints installed at the two ends of the rotating universal joint output splined shaft 113 simultaneously have left and right two transmission half shafts installed inside, which are meshed with the center splined holes of the left and right inner ball cages and rotate simultaneously. The left and right two transmission half shafts extend laterally to the left and right sides of the vehicle body and are meshed with the left and right two constant velocity ball cage universal joints with telescopic function installed on the left and right two sets of independent suspension knuckle shaft steering knuckles, and are meshed with the center splined holes of the inner ball cages. They drive the wheel load flange discs installed on the left and right two sets of knuckle shaft steering knuckles to rotate and drive the vehicle forward. When the vehicle travels on a bumpy road, the left and right two knuckle shaft steering knuckles on both sides of the vehicle body jump up and down with the road surface, performing vertical bouncing movements relative to the vehicle frame or cross-axis movements relative to the front axle. In the transmission system, the left and right two transmission half shafts that simultaneously output power to the left and right sides are connected to the left and right ends of the constant velocity ball cage universal joints installed on the universal joint output shaft bearing seat of the new multi-purpose shaft transmission box laterally installed on the vehicle frame chassis. In the movement state, they maintain a relatively stationary power transmission position relative to the vehicle frame chassis. The outer ends of the left and right two transmission half shafts extend laterally to the left and right sides and are meshed with the left and right two constant velocity ball cage universal joints with telescopic function installed on the left and right two sets of knuckle shaft steering knuckles. When the left and right two sets of knuckle shaft steering knuckles perform large-amplitude bouncing movements in the movement state, the continuity of power transmission in the transmission system is maintained.

The above description is merely an embodiment of the present invention and does not limit the scope of the patent. Any equivalent structure or process transformation made based on the content of the present invention's specification and drawings, or any direct or indirect application in other related technical fields, is equally included within the scope of protection of the present invention's patent.

## Claims

1. A new multi-purpose shaft transmission system for all-terrain vehicles, comprising a new multi-purpose shaft transmission box, **characterized in that**:
The new multi-purpose shaft transmission box is composed of three parts: the input shaft bevel gear right-angle transmission box shell, the intermediate transmission shaft support and protection tube, and the universal joint output shaft bevel gear right-angle transmission box shell. The input shaft bevel gear right-angle transmission box shell (100) and the coaxial splined shaft (101) installed inside, the input shaft's driving bevel gear (102) bearing assembly, the intermediate transmission shaft support and protection tube (109) of suitable length, the intermediate transmission shaft (108) installed in the tube cavity, the driven bevel gear (106) at the end of the intermediate transmission shaft, the universal joint output shaft bevel gear right-angle transmission box shell (112) and the bearing assembly of the driving bevel gear (111) at the end of the intermediate transmission shaft, the left output shaft driven bevel gear (119), the right output shaft driven bevel gear (120), and the universal joint output splined shaft (113) are combined together. The input shaft bevel gear right-angle transmission box shell (100) is composed of multiple cylindrical shells of different diameters. The input shaft bevel gear right-angle transmission box shell (100) of the new multi-purpose shaft transmission box includes the cylindrical shell of the input shaft large bearing seat (103), the cylindrical shell of the driving bevel gear, the cylindrical shell of the input shaft small bearing seat (104), the cylindrical shell of the driven bevel gear of the intermediate transmission shaft (105), and the cylindrical shell of the driven bevel gear bearing seat of the intermediate transmission shaft (107), which are combined to form an irregular input shaft bevel gear right-angle transmission box shell (100). The cylindrical shell of the input shaft large bearing seat (103) and the cylindrical shell of the driving bevel gear are welded together in the horizontal position. In the vertical direction, the cylindrical shell of the driven bevel gear of the intermediate transmission shaft (105) is welded to the cylindrical shell of the driving bevel gear and the cylindrical shell of the input shaft small bearing seat (104) in the horizontal direction to form an integrated structure. In the horizontal direction, the flange of the cylindrical shell of the driving bevel gear is fastened to the flange of the cylindrical shell of the input shaft large bearing seat (103) with bolts. In the vertical direction, the flange of the cylindrical shell of the driven bevel gear bearing seat of the intermediate transmission shaft (107) is fastened to the flange of the cylindrical shell of the driven bevel gear of the intermediate transmission shaft (105) with bolts. The housing (100) is equipped with an input shaft splined shaft (101) on the same axis, the driving bevel gear (102) assembly of the input shaft and the intermediate transmission shaft (108), and the driven bevel gear (106) assembly at the end of the intermediate transmission shaft. The splined shaft of the output shaft extending horizontally to the right from the right side of the output shaft bearing housing (001) at the end of the overdrive gear (or sprocket chain) transmission housing (201) installed on the left side of the vertical or horizontal engine (200), or the splined shaft of the output shaft of the CVT engine (500) or the electric motor (600) with the horizontal output shaft extending horizontally to the right from the right side of the output shaft bearing housing (001) at the end, is inserted into the input shaft bevel gear right-angle transmission housing (100) of the new multi-purpose shaft transmission box. Inside the input shaft bevel gear right-angle transmission housing (100), two sets of large bearings are installed in the cylindrical shell of the large bearing housing (103) in the horizontal direction of the input shaft, and an internal gear splined shaft sleeve that can mesh with the input shaft splined shaft (101) is installed in the large bearing holes. The inner end of the internal gear splined shaft sleeve of suitable length is welded with the driving bevel gear (102), forming an integrated internal gear splined shaft driving bevel gear (102) assembly. Two sets of small bearings are installed in the cylindrical shell of the small bearing housing (104) in the horizontal direction of the input shaft, and adjustment shims are installed on both sides of the small bearing holes. The splined shaft part of the output shaft extending horizontally to the right from the right side of the output shaft bearing housing (001) at the end of the overdrive gear (or sprocket chain) transmission housing (201) installed on the left side of the vertical or horizontal engine (200), or the splined shaft of the output shaft of the CVT engine (500) or the electric motor (600) with the horizontal output shaft extending horizontally to the right from the right side of the output shaft bearing housing (001) at the end, is meshed with the internal gear splined hole of the integrated internal gear splined shaft driving bevel gear (102) installed in the large bearing hole of the input shaft bevel gear right-angle transmission housing (100) to transmit power. The smooth shaft part of the same axis passes through the bearing holes of the two sets of small bearings installed in the cylindrical shell of the small bearing housing (104) and is fixed with a large nut at the exposed screw part at the end of the cylindrical shell of the small bearing housing (104). In the above structure, the new multi-purpose shaft transmission box is described. The input shaft bevel gear transmission box housing (100) of the path shaft transmission is installed in an integrated structure with the overdrive gear (or sprocket chain) transmission box housing (201) of a vertical or horizontal engine (200), or with the CVT engine (500) or the electric motor (600) with a transverse output shaft. The right side of the output shaft bearing housing (001) at the end of the overdrive gear (or sprocket chain) transmission box housing (201) is in a horizontal position and extends laterally to the right, and the right side of the output shaft bearing housing (001) at the end of the CVT engine (500) or the electric motor (600) with a transverse output shaft is also in a horizontal position and extends laterally to the right, which is coaxial with the input shaft splined shaft (101) inside the input shaft bevel gear right-angle transmission box housing (100).
The intermediate transmission shaft support and protection tube (109) of the said new multi-purpose shaft transmission box is composed of multiple cylindrical shell tubes of different diameters and lengths, including: the cylindrical shell of the driven conical gear bearing seat (107) of the intermediate transmission shaft in the vertical direction, the cylindrical shell of the intermediate transmission shaft support and protection tube (109) of suitable length, and the cylindrical shell of the conical gear bearing seat (110) at the end of the intermediate transmission shaft, which are combined into a coaxial intermediate transmission shaft support and protection tube (109). The flange of the cylindrical shell of the driven conical gear (105) of the input shaft conical gear right-angle transmission box shell in the vertical direction is fastened to the flange of the cylindrical shell of the driven conical gear bearing seat (107) of the intermediate transmission shaft support and protection tube with bolts. The flange of the cylindrical shell of the conical gear bearing seat (110) at the end of the intermediate transmission shaft in the vertical direction of the intermediate transmission shaft support and protection tube (109) is fastened to the flange at the top of the universal joint output shaft conical gear right-angle transmission box shell (112) with bolts. The driven conical gear (106) at the end of the intermediate transmission shaft, which is installed in a vertical direction, is installed in the cylindrical shell of the driven conical gear bearing seat (107) in the vertical direction, and the driven conical gear (106) at the end of the intermediate transmission shaft is meshed with the active conical gear (102) installed on the input shaft splined coaxial shaft (101) in a horizontal position to transmit power. The intermediate transmission shaft support and protection tube (109) in a vertical installation direction, which is coaxial with the input shaft splined coaxial shaft (101) in a horizontal position, The inner cavity is equipped with an intermediate drive shaft (108) of appropriate length. Both ends of the intermediate drive shaft are splined shaft sections. The upper splined head section is inserted into the input shaft bevel gear right-angle transmission box housing (100) and meshes with the splined slot in the center splined hole of the driven bevel gear (106) that meshes with the driving bevel gear (102). The lower splined head section is inserted into the universal joint output shaft bevel gear right-angle transmission box housing (112) and meshes with the splined slot in the center splined hole of the driving bevel gear (111) at the end of the intermediate drive shaft, which transmits power to the left driven bevel gear (119) and the right driven bevel gear (120) installed on the horizontal position universal joint output splined shaft (113).
The conical gear right-angle transmission box shell (112) of the universal joint output shaft of the new multi-purpose shaft transmission box is composed of multiple cylindrical shells of different diameters, including: the cylindrical shell of the left universal joint output shaft bearing seat (118) in the horizontal position, the cylindrical shell of the right universal joint output shaft bearing seat (117) in the horizontal position, the cylindrical shell (112) of the universal joint output shaft conical gear in the middle position, and the cylindrical shell (110) of the conical gear at the end of the intermediate transmission shaft installed in the vertical position. On the outside of the left side of the universal joint output shaft conical gear right-angle transmission box shell (112), there is a cylindrical shell of the left universal joint output shaft bearing seat (118), and on the right side, there is a cylindrical shell of the right universal joint output shaft bearing seat (117). At the top of the universal joint output shaft conical gear right-angle transmission box cylindrical shell (112) in the vertical direction, there is a cylindrical shell of the bearing seat of the conical gear at the end of the intermediate transmission shaft (110). The flange plate at the bottom of the intermediate transmission shaft support and protection tube (109) of the cylindrical shell (110) of the bearing seat of the conical gear at the end of the intermediate transmission shaft is fastened to the flange plate at the top of the universal joint output shaft conical gear right-angle transmission box shell (112) with bolts.
The end driving bevel gear (111) of the intermediate transmission shaft (108) installed vertically in the bevel gear right-angle transmission box housing (112) of the universal joint output shaft is the driving bevel gear (111) that meshes with the intermediate transmission shaft (108) in the bevel gear right-angle transmission box housing (112). The end driving bevel gear (111) that meshes with the intermediate transmission shaft (108) and the bearing assembly are installed on the end bevel gear shaft of the intermediate transmission shaft. Inside the cylindrical shell (110) of the support seat, the left driven bevel gear (119) and the right driven bevel gear (120) installed on the horizontal position of the universal joint output splined shaft (113) in the right-angle transmission box shell (112) of the universal joint output shaft bevel gear mesh with each other and transmit power.
Inside the horizontal left and right bearing seats (118 and 117) of the bevel gear right-angle transmission box housing (112) of the universal joint output shaft, there are two sets of bearings installed respectively. In the bearing holes of these two sets of bearings, the left driven bevel gear (119) and the right driven bevel gear (120) are respectively installed. The end universal joint output splined shaft (113) is inserted into the center holes of the left and right driven bevel gears (119 and 120). In the middle of the end universal joint output splined shaft (113), the middle sliding gear sleeve (114) is inserted. The center holes of the left and right driven bevel gears (119 and 120) are smooth holes without internal splined grooves, while the center hole of the middle sliding gear sleeve (114) inserted into the end universal joint output splined shaft (113) has an internal splined groove structure and meshes with the splined shaft (113), and the sliding gear sleeve (114) can slide left and right, meshing with the inner teeth of the left driven bevel gear (119) or the right driven bevel gear (120) on the end universal joint output splined shaft (113), thereby enabling the end output shaft driven bevel gears and the end universal joint output splined shaft (113) to rotate in both forward and reverse directions, providing the vehicle with a reverse gear function. At the same time, the left end of the end universal joint output splined shaft (113) installed outside the left universal joint output shaft bearing seat (118) is equipped with a left constant velocity ball cage universal joint outer cage (115), and the right end of the end universal joint output splined shaft (113) installed outside the right universal joint output shaft bearing seat (117) is equipped with a right constant velocity ball cage universal joint outer cage (116), simultaneously transmitting power to both sides, providing convenient conditions for the subsequent installation of the drive half shafts.
The conical gear right-angle transmission box housing (112) at the output shaft of the universal joint can be optionally equipped with a differential between the half shafts, allowing the splined shaft (113) at the output of the universal joint to have the end heads installed on both the left and right sides. The left and right constant velocity ball cage universal joints have differential functions. Inside the universal joint output shaft bevel gear right-angle transmission box housing (112), there are two sets of bearings installed in the left universal joint output shaft bearing housing (118) and the right universal joint output shaft bearing housing (117) at the horizontal position. The edges of the protrusions on both sides of the differential housing are respectively installed in the bearing holes of these two sets of bearings. Inside the differential housing, there is a differential gear assembly. Outside the differential housing, there is an end output shaft differential driven bevel gear, which meshes with the end driving bevel gear (111) vertically installed in the universal joint output shaft bevel gear right-angle transmission box housing (112) and the intermediate transmission shaft (108). At the same time, the splined half shafts for transmitting power to the left and right are respectively inserted into the center splined holes of the left and right differential bevel gears installed in the differential housing and mesh with each other. Moreover, the left constant velocity ball cage universal joint outer cage (115) is installed at the left end of the universal joint output shaft splined half shaft, and the right constant velocity ball cage universal joint outer cage (116) is installed at the right end of the universal joint output shaft splined half shaft, simultaneously transmitting power to both ends.
A new multi-purpose shaft drive system for all-terrain vehicles, **characterized by** a structure with a transmission box housing including an overdrive gear (or sprocket chain) is:
When the ordinary vertical or horizontal engine (200) is installed as an integrated structure with the input shaft bevel gear right-angle transmission box housing (100), a set of overdrive gears (or sprocket chain) transmission box (201) must be added between the ordinary vertical or horizontal engine (200) and the new multi-purpose shaft transmission box body to smoothly transfer the power output from the engine (200) to the input shaft co-axial splined shaft (101) of the input shaft bevel gear right-angle transmission box housing (100) of the new multi-purpose shaft transmission box body. At the same time, the output splined shaft extending horizontally to the right from the output shaft bearing housing (001) at the end of the overdrive gears (or sprocket chain) transmission box (201) is the input shaft co-axial splined shaft (101) of the new multi-purpose shaft transmission box body, which can assist the new multi-purpose shaft transmission box body to rotate to a horizontal position, a vertical position, or any angle position to transmit power.
The said overdrive gear (or sprocket chain) transmission box body shell (201) is formed by welding an elliptical cross-section shell with a rectangular cross-section shell and two semi-circular shell ends of the rectangular shell to form an elliptical shell with a suitable length, thickness and internal gear combination or sprocket chain combination installation space. It is installed horizontally on the left side of the vertical or horizontal engine (200) output shaft box body and fastened with bolts at the position opposite to the engine output splined shaft on the left side of the engine, thus forming an integrated structure with the vertical or horizontal engine (200) and the overdrive gear (or sprocket chain) transmission box (201). The left output splined shaft of the vertical or horizontal engine (200) is inserted into the center splined hole on the right side of the first set of input shaft transmission gears (or sprockets) (218) in the overdrive gear (or sprocket chain) transmission box (201) and meshes with it to transmit power. Taking the overdrive gear transmission box as an example, there are multiple sets of meshing transmission gears installed in the overdrive gear (or sprocket chain) transmission box shell (201) in sequence, including the first set of overdrive gears (218), the second set of intermediate transmission gears (219), and the third set of output shaft transmission gears (220) at the end. On the inner walls of the left and right sides of the input shaft end of the overdrive gear transmission box shell (201), there are first input shaft bearing seats, in which two sets of bearings and the first set of input shaft transmission gears (218) are installed, and the left output splined shaft of the vertical or horizontal engine (200) is inserted into the center splined hole on the right side of the first transmission gear (218). On the inner walls of the left and right sides of the middle position of the overdrive gear transmission box shell (201), there are two sets of intermediate transmission gear bearing seats, in which bearings, transmission gear shafts, and the second set of intermediate transmission gears (219) installed on the gear shafts are installed. On the inner walls of the left and right sides of the output shaft end of the overdrive gear transmission box shell (201), there are output shaft bearing seats (001), in which bearings, the output splined shaft at the end, and the third set of output shaft transmission gears (220) installed on the output splined shaft are installed. The output splined shaft at the end is in a horizontal position and extends laterally to the right outside the output shaft bearing seat (001) at the end of the overdrive gear transmission box shell (201) and then enters the input shaft bevel gear right-angle transmission box shell of the new multi-purpose shaft transmission box body installed in parallel and coaxially on the right side. (100) engages with the center splined hole of the driving bevel gear (102) of the input shaft and transmits power.
Taking the overbridge sprocket chain transmission box as an example, the transmission structure inside the overbridge sprocket chain transmission box is improved from the overbridge gear transmission box; among which, the overbridge gear transmission box The first set of input shafts 1 and the first transmission gear are installed on the bearing housing at the end of the input shaft (201). (218) Replace the first drive chain wheel; install the second intermediate chain guide roller in place of the second intermediate drive gear (219) located in the middle position of the overdrive gear transmission box; replace the third drive gear (220) on the end output splined shaft with the third drive chain wheel of the end output shaft; use a transmission chain to mesh the first drive chain wheel of the first input shaft and the third drive chain wheel of the end output shaft in the overdrive chain wheel chain transmission box to transmit power, and the second intermediate chain guide wheel assists the chain to run smoothly. The overdrive gear transmission box and the overdrive chain wheel chain transmission box have the same shell shape, the same installation position, and the same function, and the installation positions of the shafts inside the transmission box shells are the same.
A new multi-purpose shaft drive system for all-terrain vehicles, including the structural feature of a matched integral drive axle, is **characterized by**:
The integral drive axle (208) is formed by combining a tubular axle housing of suitable length with an elliptical drive axle gear (or sprocket chain) transmission box housing installed at the left or right end of the axle housing. An integral drive shaft is inserted and installed inside the axle housing of the integral drive axle (208). The left-end drive axle gear (or sprocket chain) transmission box housing (206) welded at the left end of the integral drive axle (208) or the right-end drive axle gear (or sprocket chain) transmission box housing (216) welded at the right end is composed of a rectangular shell and two semi-cylindrical shell ends welded to the ends of the rectangular shell, forming an elliptical cross-section of suitable length, which is suitable for installing a transmission gear assembly or a transmission sprocket chain assembly.
Take the installation of the drive axle gear transmission box housing at the left end of the integral drive axle tube as an example;
Inside the left-end drive axle gear transmission box housing (206) installed at the left end of the integral drive axle (208), there are multiple sets of transmission gear combinations arranged in sequence and meshing with each other, among which On the inner walls on both sides of the integral drive axle (208) at the end of the left drive axle gear box housing (206), there are welded symmetrical bearing seats for the drive axle. Inside these symmetrical bearing seats, there is an integral drive shaft installed and penetrating through. On the integral drive shaft, there is a first large drive gear (211) installed. On both sides of the first large gear, there are bearings installed on the integral drive shaft, which are also fixed in the symmetrical bearing seats on the inner walls of the left drive axle gear box housing (206) on both sides, keeping the first large gear (211) in the middle of the two bearing seats for transmission. In the middle of the left drive axle gear box housing (206), there are symmetrical bearing seats installed on the inner walls on both sides. Inside these two bearing seats, there are bearings and the shaft of the intermediate transmission gear installed, as well as a second intermediate transmission gear (212) installed on the shaft in the middle of the two bearing seats. On the inner walls on both sides of the input shaft end of the left drive axle gear (or sprocket chain) box housing (206), there are symmetrical bearing seats for the input shaft installed. Inside the bearing holes of these two bearing seats, there is an input splined shaft with an extendable constant velocity ball cage universal joint (205) extending to the right installed, and a third input transmission pinion (213) installed on the input splined shaft in the middle of the two bearing seats. The splined shaft of the constant velocity ball cage universal joint (205) extending to the right installed on the outer right side of the left drive axle gear box housing (206) at the left end of the integral drive axle (208) passes through the bearing seat at the input shaft end of the left drive axle gear box housing (206), and its left extended part is fastened with a nut. Inside the bearing seats at both ends of the integral drive axle (208) bridge tube, there are two sets of bearings installed to fix the integral drive shaft inside the bridge tube cavity. At both ends of the integral drive shaft, there are splines, allowing the installation of flange plates for fixing the wheel hub and tire and the flange plate for fixing the brake disc. The extended parts of the flange plates at both ends of the integral drive shaft are fastened with nuts. Outside the integral drive axle bridge tube, there are welded longitudinal and transverse push-pull rod brackets, shock absorber spring brackets, brake pump brackets and other accessories to control the movement posture of the integral drive axle.
To expand the broader applicability of the integral drive axle, according to the vehicle usage requirements, the first large gear installed on the integral drive shaft within the left end drive axle gear transmission box housing (206) at the left end of the integral drive axle (208) can be replaced with a differential transmission large gear assembly (211) with differential function. The integral drive shaft installed within the integral drive axle bridge tube can be replaced with two drive axle half shafts that are compatible with the differential assembly. The differential transmission large gear assembly (211) is installed within the drive axle gear transmission box housing (206) at the middle position between the two symmetrical bridge tube bearing seats. The edges of the protrusions on both sides of the differential housing are respectively embedded in the left and right bridge tube bearing seats within the drive axle gear transmission box housing. Within the differential housing, a differential conical gear assembly is installed. The splined shafts of the left and right drive axle half shafts that are inserted into both ends of the integral drive axle (208) bridge tube are respectively inserted into the center splined shaft holes of the left and right differential conical gears within the differential housing and mesh with each other to transmit power. Bearings are installed in the bearing seats at both ends of the integral drive axle (208) bridge tube to fix the left and right drive axle half shafts, enabling differential function between the left and right drive axle half shafts.
Taking the installation of the drive axle sprocket and chain transmission box shell at the left end of the integral drive axle tube as an example;
the transmission sprocket and chain assembly inside the integral drive axle sprocket and chain transmission box shell is an improvement of the transmission gear structure inside the integral drive axle gear transmission box shell. Specifically, the first large drive gear (211) installed on the integral drive shaft at the middle position between the left and right symmetrical drive axle tube bearing seats in the left end drive axle gear transmission box shell (206) at the left end of the integral drive axle (208) is replaced with the first large sprocket, the second intermediate transmission gear (212) installed on the intermediate transmission gear shaft at the middle position inside the integral drive axle gear transmission box shell is replaced with an intermediate chain guide wheel, and the third small drive gear (213) installed on the input shaft splined shaft connected to the outer cage of the constant velocity ball cage universal joint (205) between the left and right symmetrical input shaft bearing seats in the left end drive axle gear transmission box shell (206) is replaced with the third small sprocket. The power is transmitted through a set of transmission chains meshing with each other between the various sprockets, and the intermediate chain guide wheel assists in the smooth operation of the chain. The integral drive axle sprocket and chain transmission box shell and the integral drive axle are the shapes of the bridge gear transmission box housings are the same, their installation positions are the same, and their functions are the same. The installation positions of each shaft within the transmission box housing are also the same.
In order to adapt to the output positions of the left drive shaft (209) extending laterally to the left installed in the left outer ball cage (115) of the left constant velocity ball joint universal joint at the left end of the universal joint output splined shaft (113) outside the left universal joint output shaft bearing housing (118) of the universal joint output shaft bevel gear right-angle transmission housing (112), and the right drive shaft (210) extending laterally to the right installed in the right outer ball cage (116) of the right constant velocity ball joint universal joint at the left end of the universal joint output splined shaft (113) outside the right universal joint output shaft bearing housing (117), the position of the left drive axle gear (or sprocket chain) transmission housing (206) can be preferably welded to the left end of the overall drive axle (208) bridge tube, or the right drive axle gear (or sprocket chain) transmission housing (216) can be preferably welded to the right end of the overall drive axle (208) bridge tube; the installation position of the drive axle gear (or sprocket chain) transmission housing (206) welded to the left end of the overall drive axle (208) bridge tube or the drive axle gear (or sprocket chain) transmission housing (216) welded to the right end of the overall drive axle (208) bridge tube can be in a horizontal state parallel to the ground, or in a vertical state, or in any position convenient for the installation of the drive shaft, among which the horizontal position is the best demonstration example for power transmission.
A new type of multi-purpose shaft drive system for all-terrain vehicles, which is **characterized by** being integrated with a conventional vertical or horizontal engine, a transfer case (or sprocket chain) transmission box, and a new multi-purpose shaft transmission box to form an overall structure, and transmitting power through an integral drive axle.
When the horizontal output shaft of the vertical or horizontal engine (200) is installed as an integrated structure with the new multi-purpose shaft transmission box, the output splined shaft at the outer end of the overdrive gear (or sprocket chain) transmission box (201) on the right side of the bearing housing (001) is in a horizontal position and extends laterally to the right, and is inserted into the bearing hole of the large bearing housing (103) of the input shaft bevel gear right-angle transmission box shell (100) of the new multi-purpose shaft transmission box installed side by side and coaxially on the right. It meshes with the splined slot in the center splined hole of the driving bevel gear (102) installed on the splined shaft (101) coaxial with the input shaft and is fastened with a nut at the extended part outside the small bearing housing (104) of the input shaft. The output splined shaft on the outer right side of the bearing housing (001) at the outer end of the transmission box body (201) is the input shaft splined shaft (101) on the left side of the input shaft coaxial with the bevel gear right-angle transmission box housing (100).
The output shaft bearing housing (001) at the end of the overdrive gear (or sprocket chain) transmission housing (201) installed on the left side of the vertical or horizontal engine (200) on the transverse output shaft, with the output splined shaft on the right side in a horizontal position and extending laterally to the right, is inserted into the input bevel gear right-angle transmission housing of the new multi-purpose shaft transmission housing installed in parallel and coaxially on the right side. The large bearing housing (103) of the input shaft is installed inside the input shaft universal joint splined shaft (101), which connects the overdrive gear (or sprocket chain) transmission box (201) and the input shaft bevel gear right-angle transmission box shell (100) of the new multi-purpose shaft transmission box into a joint-like integral structure, allowing the new multi-purpose shaft transmission box to rotate around its input shaft universal joint splined shaft. (101) The power is transmitted in the vertical direction, the horizontal direction or any other direction. Preferably, the new multi-purpose shaft transmission box is installed and fixed between the engine and the frame in a vertical position to transmit power.
The end output splined shaft of the overdrive gear (or sprocket chain) transmission housing (201) installed on the left side of the horizontal output shaft of the vertical or horizontal engine (200) is in a horizontal position and extends laterally to the right, and is inserted into the large bearing housing (103) of the input shaft of the right-adjacent and coaxially installed input shaft bevel gear right-angle transmission housing (100) to transmit power. Therefore, the new multi-purpose shaft transmission housing can be matched with various engine types as the power source.
The preferred option is to install and fix the new multi-purpose shaft transmission box in a vertical position relative to the frame to transfer power, and it is arranged and installed at the rear end of the rear drive shaft and the upper part of the frame of the go-kart, UTV, ATV and other vehicle bodies. Therefore, the left universal joint output shaft bearing seat (118) and the right universal joint output shaft bearing seat (117) of the conical gear right-angle transmission box shell (112) of the new multi-purpose shaft transmission box and the universal joint output splined shaft (113) extending outward to the left and right ends must be in a horizontal position and installed laterally at the chassis position of the go-kart, UTV, ATV and other vehicle bodies. And at the left and right ends outside the left universal joint output shaft bearing seat (118) and the right universal joint output shaft bearing seat (117) of the conical gear right-angle transmission box shell (112) of the new multi-purpose shaft transmission box The left and right constant velocity ball cage universal joints' outer cages (115 and 116) are respectively installed at both ends of the universal joint output splined shaft (113), and the left and right transmission half shafts (209 and 210) extending laterally to the left and right respectively output power laterally to both sides of the vehicle body. When the new multi-purpose shaft transmission box is installed as an integrated structure with a preferred power source among the ordinary vertical engine, horizontal engine, CVT engine or variable frequency motor, the input shaft coaxial splined shaft (101) and the universal joint output splined shaft (113) of the new multi-purpose shaft transmission box maintain a parallel power transmission position.
The integral drive axle (208) is connected to the frame of the go-kart, UTV, ATV and other vehicles through a longitudinally installed parallel four-bar linkage and a transversely installed Panhard rod. The integral drive axle (208) is arranged and installed at the position of the rear drive shaft of the go-kart, UTV, ATV and other vehicles, and is located at the lower part of the frame in alignment with the engine output shaft of the integral structure and the frame. There is a sufficient stroke distance between the integral drive axle (208) and the frame. In the new multi-purpose shaft transmission structure on the upper part of the frame, the vertical or horizontal engine (200) of the transverse output shaft, the CVT engine transmission (500) box housing of the transverse output shaft, and the motor (600) of the transverse output shaft, as well as the vertical or horizontal engine and CVT engine (800) and motor (1000) of the mid-mounted longitudinal output shaft, one of the engines is preferably installed as an integral structure with the new multi-purpose shaft transmission box housing in a vertical position, and is also installed as an integral structure with the frame of the go-kart, UTV, ATV and other vehicles through rubber spring mounts. On the lower part of the frame, the universal joint output shaft bevel gear right-angle transmission box housing (112) of the new multi-purpose shaft transmission box, the left universal joint output shaft bearing housing (118) and the right universal joint output shaft bearing housing (117), and the universal joint output splined shaft (113) extending to both sides are transversely installed at the lower part of the frame of the go-kart, UTV, ATV and other vehicles. The left universal joint output splined shaft (113) extending to the left of the left universal joint output shaft bearing housing (118) is equipped with a left constant velocity ball cage universal joint outer cage (115) at the end, and the right universal joint output splined shaft (113) extending to the right of the right universal joint output shaft bearing housing (117) is equipped with a right constant velocity ball cage universal joint outer cage (116) at the end, which is fastened with a center screw. At the same time, the left constant velocity ball cage universal joint outer cage (115) and the right constant velocity ball cage universal joint outer cage (116) are installed. The inner ball cage center splined hole in the outer ball cage (115) of the ball cage universal joint is fitted with the drive half shaft (209) that transmits power to the left side of the vehicle body, and the inner ball cage center splined hole in the outer ball cage (116) on the right side is fitted with the drive half shaft (210) that transmits power to the right side of the vehicle body. The inner ball cages installed at both ends of the drive half shafts on the left and right sides mesh with the outer ball cages, and the two drive half shafts simultaneously transmit power to the left and right sides.
When a vertical or horizontal engine with a transverse output shaft, or a CVT engine or electric motor with a transverse output shaft is installed as an integrated structure with a new multi-purpose shaft transmission housing to drive the overall drive axle, taking the case where the left end of the drive axle gear (or sprocket chain) of the overall drive axle (208) is installed in a horizontal position as an example, it is preferred to use a single leftward power transmission half shaft (209), which is horizontally arranged in the outer ball cage (115) of the constant velocity ball cage universal joint on the left side of the universal joint output splined shaft (113). The leftward power transmission half shaft (209) is installed in the center splined hole of the inner ball cage and extends leftward and enters the outer ball cage (205) with telescopic function that extends outward from the right side of the input shaft bearing housing of the left end of the drive axle gear (or sprocket chain) transmission housing (206) of the overall drive axle (208), meshing with the center splined hole of the inner ball cage and transmitting power. The power is then transmitted through the various sets of transmission gears and drive shafts installed in the left end of the drive axle gear (or sprocket chain) transmission housing (206) of the overall drive axle (208) to drive the wheels (207) installed at both ends of the overall drive axle (208) to rotate and drive the vehicle forward.
The single right-output drive half shaft (210) can also be optimally arranged and installed horizontally to the right of the universal joint output splined shaft (113) within the outer cage (116) of the constant velocity ball cage universal joint. The drive half shaft (210) installed in the center splined hole of the inner cage within the outer cage (116) of the constant velocity ball cage universal joint extends laterally to the right and is inserted into the left input shaft bearing housing of the drive bridge gear (or sprocket chain) transmission box housing (216) welded to the right end of the integral drive bridge (208), and meshes with the center splined hole of the inner cage of the constant velocity ball cage universal joint with telescopic function (215) to transmit power, and the power is transmitted through the drive bridge gear installed at the right end of the integral drive bridge (208) bridge tube. The transmission box housing (216) is equipped with various sets of transmission gears and drive shafts, which drive the wheels (207) installed at both ends of the bridge tube of the integral drive axle (208) to rotate, thus propelling the vehicle forward.
In the new multi-purpose shaft transmission housing with a single drive half shaft for power transmission in an integral drive axle, the universal joint output shaft bevel gear right-angle transmission box housing (112) can only install a straight-through hard splined shaft (113) between the left universal joint output shaft bearing seat (118) and the right universal joint output shaft bearing seat (117), and cannot be equipped with an inter-axle differential assembly. This ensures that the two constant velocity ball cage universal joints on the universal joint output shaft outside the universal joint output shaft bevel gear right-angle transmission box housing do not have a differential function, allowing the single drive half shaft to smoothly transmit power.

2. A new type of multi-purpose shaft transmission system for all-terrain vehicles, featuring an ordinary CVT engine or variable-frequency motor with a transverse output shaft and a new type of multi-purpose shaft transmission box installed as an integrated structure, is **characterized by** the transmission of power through an integrated drive axle.
The CVT engine (500) transmission case housing end of the said transverse output shaft or the transverse output The bearing housing (001) on the outer right side of the motor (600) at the end of the shaft is in a horizontal position and The output spline shaft extending laterally to the right is inserted into the new multi-purpose shafts installed side by side and coaxially on the right. The input shaft bevel gear of the drive box body for the track shaft is in a right-angle transmission box shell (100), and the input shaft is inside. The center spline in the large bearing housing (103), which is combined with the bearing of the driving bevel gear (102) The internal splines in the holes mesh with each other to transmit power, and the smooth shaft section on the same axis passes through the transmission. After the two sets of small bearings are installed in the cylindrical shell of the small bearing housing (104), the bearing holes are formed. The exposed screw part at the end of the cylindrical shell of the small bearing housing (104) of the input shaft is tightened with a large nut. The CVT engine (500) transmission housing or the lateral output shaft as described above
The output splined shaft on the right end of the motor (600) is the new multi-purpose shaft transmission box. The coaxial spline on the left side of the input shaft of the bevel gear right-angle transmission box housing (100) Shaft (101)
The output splined shaft of the CVT engine (500) transmission case at the end of the transversely arranged output shaft or the end of the transversely installed motor (600) extends horizontally to the right and laterally from the outer right side of the output shaft bearing housing (001), and is inserted into the right side of the parallel arrangement. The input shaft bevel gear right-angle transmission box shell (100) of the new multi-purpose shaft transmission box body is coaxially installed. The input shaft splined shaft (101) is installed in the large bearing housing (103) of the input shaft of the input shaft bevel gear right-angle transmission box shell (100), and the input shaft splined shaft (101) connects the CVT engine (500) or the motor (600) with the horizontal output shaft in a joint-like integral structure, allowing the new multi-purpose shaft transmission box body to rotate around the input shaft splined shaft (101) to the vertical position, horizontal position or any position to transmit power. Preferably, the new multi-purpose shaft transmission box body is fixedly installed in a vertical position relative to the engine and the vehicle frame to transmit power.
The output splined shaft at the end of the transmission box body with the CVT engine (500) installed horizontally or the motor (600) installed horizontally is in a horizontal position and extends laterally to the right, and is inserted into the large bearing housing (103) of the input shaft bevel gear right-angle transmission box shell (100) of the new multi-purpose shaft transmission box body installed coaxially on the right side in parallel, thus the new multi-purpose shaft transmission box body can be matched with various engine types as the power source.
The preferred installation of the new multi-purpose shaft transmission box is to fix it in a vertical position relative to the frame to transfer power, and it is arranged and installed at the rear end of the rear drive shaft and the upper part of the frame of the go-kart, UTV, ATV and other vehicles. Therefore, the left universal joint output shaft bearing seat (118) and the right universal joint output shaft bearing seat (117) of the universal joint output shaft conical gear right-angle transmission box shell (112) of the new multi-purpose shaft transmission box and the universal joint output splined shaft (113) extending outward to the left and right must be in a horizontal position and installed laterally on the chassis of the go-kart, UTV, ATV and other vehicles. Moreover, the left constant velocity ball cage universal joint outer cage (115) and the right constant velocity ball cage universal joint outer cage (116) are respectively installed at the left and right ends of the universal joint output splined shaft (113) outside the left universal joint output shaft bearing seat (118) and the right universal joint output shaft bearing seat (117) of the universal joint output shaft conical gear right-angle transmission box shell (112), and the left power transmission half shaft (209) and the right power transmission half shaft (210) respectively output power laterally to the left and right sides of the vehicle body simultaneously. The power is preferably transmitted from a vertical engine with a horizontal output shaft (200), a CVT engine with a horizontal output shaft, or an electric motor. When the new multi-purpose shaft transmission box of the power source is installed as an integrated structure, the input shaft splined shaft (101) and the universal joint output splined shaft (113) of the new multi-purpose shaft transmission box maintain a parallel power transmission position.
The integral drive axle (208) is connected to the frame of the go-kart, UTV, ATV and other vehicles through a longitudinally installed parallel four-bar linkage and a transversely installed Panhard rod. The integral drive axle (208) is arranged and installed at the position of the rear drive shaft of the go-kart, UTV, ATV and other vehicles, and is located at the lower part of the frame in an integrated structure with the engine output shaft axis of the frame. Meanwhile, there is a sufficient stroke distance between the integral drive axle (208) and the frame. The new multi-purpose shaft transmission structure on the upper part of the frame includes a vertical or horizontal engine (200) with a transverse output shaft, a CVT engine (500) with a transverse output shaft, and an electric motor (600) with a transverse output shaft. One of these engines is preferably integrated with the new multi-purpose shaft transmission box body arranged in a vertical position and is also integrated with the frame of the go-kart, UTV, ATV and other vehicles through a rubber spring mount. The universal joint output shaft bevel gear right-angle transmission box housing (112) of the new multi-purpose shaft transmission box body on the lower part of the frame is transversely installed at the lower part of the frame of the go-kart, UTV, ATV and other vehicles. The left universal joint output shaft bearing seat (118) and the right universal joint output shaft bearing seat (117) on the left and right sides of the housing and the universal joint output splined shaft (113) extending to the left and right are transversely arranged. The left constant velocity ball cage universal joint outer cage (115) is installed at the end of the left extending output splined shaft (113) on the left universal joint output shaft bearing seat (118), and the right constant velocity ball cage universal joint outer cage (116) is installed at the end of the right extending output splined shaft (113) on the right universal joint output shaft bearing seat (117) and is fastened with a center screw. The left constant velocity ball cage universal joint inner cage (115) in the left constant velocity ball cage universal joint outer cage (115) has a transmission half shaft (209) for left power output inserted into its center splined hole, and the right constant velocity ball cage universal joint inner cage (116) in the right constant velocity ball cage universal joint outer cage (116) has a transmission half shaft (210) for right power output inserted into its center splined hole. The inner cages and outer cages at both ends of the transmission half shafts are meshed, and the two transmission half shafts simultaneously output power to the left and right.
When a vertical or horizontal engine with a transverse output shaft, or a conventional CVT engine or motor with a transverse output shaft, is installed as an integrated structure with a new multi-purpose shaft transmission housing to drive the entire drive axle, taking the case where the transmission housing shell (206) of the drive axle gear (or sprocket chain) is installed horizontally at the left end of the drive axle tube (208) as an example, it is preferable to use a single leftward power transmission half shaft (209), which is horizontally arranged on the left side of the universal joint output splined shaft (113) inside the left equal-speed ball cage universal joint outer cage (115). The leftward power transmission half shaft (209) is installed in the center splined hole of the inner cage inside the left equal-speed ball cage universal joint outer cage (115) and extends leftward horizontally, then enters the right input shaft bearing housing of the left end drive axle gear (or sprocket chain) transmission housing shell (206) welded to the left end of the drive axle tube (208), and engages with the center splined hole of the inner cage of the extendable equal-speed ball cage universal joint outer cage (205) to transmit power. The power is then transmitted through the various sets of transmission gears and drive shafts installed inside the left end drive axle gear (or sprocket chain) transmission housing shell (206) to drive the wheels (207) installed at both ends of the drive axle tube (208) to rotate and drive the vehicle forward.
The single transmission half shaft (210) that outputs force to the right can also be preferentially installed horizontally in the right outer ball cage (116) of the constant velocity ball cage universal joint on the right side of the output splined shaft (113) of the universal joint. The transmission half shaft (210) that outputs power to the right is installed in the center splined hole of the inner ball cage and extends laterally to the right, then passes through the left extension of the right end drive axle gear (or sprocket chain) transmission box housing (216) welded to the right end of the integral drive axle tube (208), and is inserted into the outer ball cage (215) with telescopic function on the left side of the input shaft bearing seat, meshing with the center splined hole of the inner ball cage to transmit power. The power is then transmitted through the various sets of transmission gears and drive shafts installed in the right end drive axle gear (or sprocket chain) transmission box housing (216) on the right end of the integral drive axle tube (208) to drive the wheels (207) installed at both ends of the integral drive axle tube (208) to rotate and drive the vehicle forward.
In the left side of the universal joint output shaft bevel gear right-angle transmission box shell (112) of the new multi-purpose shaft transmission box body applying single drive half shaft to transfer power to the integral drive axle The straight-through hard splined shaft (113) can only be installed in the middle position between the left universal joint output shaft bearing housing (118) and the right one (117). The installation of the differential assembly between the shafts is not allowed. This ensures that the two constant velocity ball cage universal joints on the universal joint output shaft outside the bevel gear right-angle transmission box housing do not have a differential function, guaranteeing that the single drive half shaft can smoothly transmit power.

3. A new multi-purpose shaft transmission system for all-terrain vehicles, **characterized in that** when a common vertical or horizontal engine or motor is not used with an overdrive gear (or sprocket chain) transmission box, a new multi-purpose shaft transmission box is installed at the left side of the engine or motor in an integrated structure and applied to the integral drive axle for power transmission.
The input shaft bearing seat of the input shaft bevel gear right-angle transmission box shell (100) of the new multi-purpose shaft transmission box is installed in parallel and coaxially outside the end output shaft bearing seat (001) on the left side of the vertical or horizontal engine (200) box or the end output shaft bearing seat (001) on the left side of the horizontally arranged motor (600). The output splined shaft extending horizontally to the left from the end output shaft bearing seat (001) of the horizontal output shaft engine (200) or the end output shaft bearing seat (001) of the horizontal output shaft motor (600) is inserted into the large bearing seat (103) inside the input shaft bevel gear right-angle transmission box shell (100) installed on the left side in parallel and coaxially. It meshes with the internal splined teeth in the center splined hole of the bearing assembly of the driving bevel gear (102) to transmit power. The smooth shaft part coaxial with it passes through the bearing holes of the two sets of small bearings installed in the cylindrical shell of the input shaft small bearing seat (104) and is fastened with a large nut at the exposed screw part at the end of the cylindrical shell of the input shaft small bearing seat (104).
The output spline shaft that extends horizontally to the left from the left end of the bearing housing (001) of the horizontal or vertical engine (200) transmission box or the left end of the bearing housing (001) of the motor (600) for the horizontal output shaft is the input shaft co-axial spline shaft (101) on the right side of the new multi-purpose shaft transmission box input shaft bevel gear right-angle transmission box housing (100).
The left end bearing housing (001) of the horizontal output shaft of the vertical or horizontal engine (200) transmission box or the left end of the motor (600) at the end of the horizontal output shaft The output splined shaft (001) on the outer left side of the bearing housing, which is in a horizontal position and extends laterally to the left, is inserted into the input shaft bevel gear right-angle transmission box housing (100) of the new multi-purpose shaft transmission box, which is installed side by side and coaxially on the left. The input shaft splined shaft (101) coaxial with the input shaft connects the vertical or horizontal engine box housing (200) or variable frequency motor (600) with the input shaft bevel gear right-angle transmission box housing (100) of the new multi-purpose shaft transmission box in a joint-like integral structure, allowing the new multi-purpose shaft transmission box to rotate around the input shaft splined shaft (101) coaxial with the input shaft to a vertical position, a horizontal position, or any position to transmit power.
The above-mentioned end output splined shaft, which is in a horizontal position and extends laterally to the left, is installed at the left side of the ordinary vertical or horizontal engine (200) box without using an overdrive gear (or sprocket chain) transmission box shell structure. It transmits power into the large bearing housing (103) of the input shaft of the new multi-purpose shaft transmission box body, which is installed side by side and coaxially on the left. Therefore, the new multi-purpose shaft transmission box can be matched with various engine types as the power source.
The preferred installation of the new multi-purpose shaft transmission box is to fix it in a vertical position relative to the engine and the frame, and it is arranged and installed at the rear end of the rear drive shaft and the upper part of the frame of the go-kart, UTV, ATV and other vehicles. Therefore, the left universal joint output shaft bearing seat (118) and the right universal joint output shaft bearing seat (117) of the universal joint output shaft conical gear right-angle transmission box shell (112) of the new multi-purpose shaft transmission box and the universal joint output splined shaft (113) extending outward to the left and right ends must be in a horizontal position and installed horizontally at the chassis position of the go-kart, UTV, ATV and other vehicles. Moreover, the left constant velocity ball cage universal joint outer cage (115) and the left power transmission half shaft (209) for outputting power to the left, and the right constant velocity ball cage universal joint outer cage (116) and the right power transmission half shaft (210) for outputting power to the right are respectively installed at the left and right ends of the universal joint output splined shaft (113) outside the left universal joint output shaft bearing seat (118) and the right universal joint output shaft bearing seat (117), and simultaneously output power to the left and right sides of the vehicle body horizontally. The preferred engines include vertical engines, horizontal engines, CVT engines with horizontal output shafts, or electric motors with horizontal output shafts.
When the new multi-purpose shaft transmission housing of one of the power source configurations is installed as an integral structure, the input shaft splined shaft (101) and the universal joint output splined shaft (113) of the new multi-purpose shaft transmission housing maintain a parallel power transmission position.
The integral drive axle (208) is connected to the frame of the go-kart, UTV, ATV and other vehicles through a longitudinally installed parallel four-bar linkage and a transversely installed Panhard rod. The integral drive axle (208) is arranged and installed at the position of the rear drive shaft of the go-kart, UTV, ATV and other vehicles, and is located at the lower part of the frame in an integrated structure with the engine output shaft axis of the frame. Meanwhile, there is a sufficient stroke distance between the integral drive axle (208) and the frame. The new multi-purpose shaft transmission structure on the upper part of the frame is equipped with a vertical or horizontal engine (200) with a transverse output shaft, a CVT engine (500) with a transverse output shaft, or an electric motor (600) with a transverse output shaft. One of these engines is preferably installed in an integrated structure with the new multi-purpose shaft transmission box body arranged in a vertical position, and is also installed in an integrated structure with the frame of the go-kart, UTV, ATV and other vehicles through a rubber spring support. The left and right universal joint output shaft bearing seats (118, 117) of the universal joint output shaft bevel gear right-angle transmission box housing (112) of the new multi-purpose shaft transmission box body at the lower part of the frame are transversely arranged and installed at the lower part of the frame of the go-kart, UTV, ATV and other vehicles. The left end of the universal joint output splined shaft (113) extending to the left from the left universal joint output shaft bearing seat (118) is installed with the left constant velocity ball cage universal joint outer cage (115), and the right end of the universal joint output splined shaft (113) extending to the right from the right universal joint output shaft bearing seat (117) is installed with the right constant velocity ball cage universal joint outer cage (116), which are fastened with a center screw. The transmission half shaft (209) for left power output and the transmission half shaft (210) for right power output are respectively inserted into the center splined holes of the inner cages of the left and right constant velocity ball cage universal joint outer cages (115, 116). The inner cages and outer cages at both ends of the transmission half shafts are meshed with each other, and the two transmission half shafts output power to the left and right simultaneously.
When a vertical or horizontal engine with lateral power output, or a conventional CVT engine or motor with a lateral output shaft, is installed as an integrated structure with a new multi-purpose shaft transmission box to drive the overall drive axle, taking the case where the transmission box shell (206) is installed horizontally at the left end of the drive axle tube (208) as an example, it is preferable to use a single leftward power output drive half shaft (209), which is laterally arranged and installed inside the outer ball cage (115) of the constant velocity ball cage universal joint on the left side of the universal joint output splined shaft (113). The leftward power output drive half shaft (209) is laterally extended to the right and inserted into the outer ball cage (205) with telescopic function that extends out of the right input shaft bearing housing of the left end drive axle gear (or sprocket chain) transmission box shell (206) welded to the left end of the drive axle tube (208), and meshes with the center splined hole of the inner ball cage to transmit power. The power is then transmitted through the various sets of transmission gears and drive shafts installed in the left end drive axle gear (or sprocket chain) transmission box shell (206) to drive the wheels (207) installed at both ends of the drive axle tube (208) to rotate and drive the vehicle forward.
The single right-output force transmission half shaft (210) can also be preferentially installed laterally in the right side of the output splined shaft (113) of the universal joint and inside the outer cage (116) of the left constant velocity ball cage universal joint. The right-output force transmission half shaft (210) installed in the center splined hole of the inner cage inside the outer cage (116) of the left constant velocity ball cage universal joint extends laterally to the right and is inserted into the left extension of the outer cage (215) with telescopic function that protrudes from the left side of the left bearing housing of the right end drive axle gear (or sprocket chain) transmission box housing (216) welded to the right end of the integral drive axle tube (208), meshing with the center splined hole of the inner cage to transmit power. The power is then transmitted through the various sets of transmission gears and drive shafts installed in the right end drive axle gear (or sprocket chain) transmission box housing (216) to drive the wheels (207) installed at both ends of the integral drive axle tube (208) to rotate and drive the vehicle forward.
In the left side of the universal joint output shaft bevel gear right-angle transmission box shell (112) of the new multi-purpose shaft transmission box body applying single drive half shaft to transfer power to the integral drive axle The straight-through hard splined shaft (113) can only be installed in the middle position between the left universal joint output shaft bearing housing (118) and the right one (117). The installation of the differential assembly between the shafts is not allowed. This ensures that the two constant velocity ball cage universal joints on the universal joint output shaft outside the conical gear right-angle transmission box housing do not have a differential function, guaranteeing that the single drive half shaft can smoothly transmit power.

4. A new multi-purpose shaft transmission system for all-terrain vehicles, **characterized in that** when a vertical or horizontal engine or motor with a transverse output shaft is not used in conjunction with an overdrive gear (or sprocket chain) transmission box, the new multi-purpose shaft transmission box is installed in a split structure at the left side of the engine or motor and is applied to the integral drive axle for power transmission.
The input shaft bearing housing (103) of the input shaft bevel gear right-angle transmission box housing (100) of the new multi-purpose shaft transmission box is installed in parallel and coaxially outside the left output shaft bearing housing of the vertical or horizontal engine (200) or the left output shaft bearing housing of the motor for the horizontal output shaft. The output splined shaft extending laterally to the left from the end of the output shaft bearing housing (001) of the vertical or horizontal engine (200) or the end of the output shaft bearing housing (001) of the motor (600) for the horizontal output shaft is laterally arranged and installed at the upper position of the rear drive shaft of the go-kart, UTV, ATV and other vehicle bodies. At the same time, the input shaft large bearing housing (103) and the input shaft coaxial splined shaft (101) of the input shaft bevel gear right-angle transmission box housing (100) of the new multi-purpose shaft transmission box are installed in a horizontal position and extend laterally to the right, and are in a relative installation position with the output splined shaft extending laterally to the left from the end of the output shaft bearing housing (001) on the left side of the vertical or horizontal engine (200) box or the end of the output shaft bearing housing (001) on the left side of the motor (600) for the horizontal output shaft. Between the output splined shaft extending laterally to the left from the end of the output shaft bearing housing (001) on the left side of the vertical or horizontal engine (200) box or the end of the output shaft bearing housing (001) on the left side of the motor (600) for the horizontal output shaft and the coaxial splined shaft (101) of the input shaft bevel gear right-angle transmission box housing (100) of the new multi-purpose shaft transmission box extending laterally to the right, there is an inner splined shaft sleeve installed coaxially and meshing with both shafts. The power output from the horizontal output shaft of the engine (200) or the motor is transmitted to the input shaft co-axial splined shaft (101) at the input end of the input shaft bevel gear right-angle transmission box housing (100) of the new multi-purpose shaft transmission box through the internal splined shaft sleeve meshing with both shafts, and then to the entire transmission system. Moreover, a dedicated fixed support is installed between the left end output shaft end of the horizontal output shaft of the vertical or horizontal engine (200) or the motor and the right input shaft end of the input shaft bevel gear right-angle transmission box housing (100) of the new multi-purpose shaft transmission box, which is coaxially and side-by-side installed, to integrate the engine or motor with the new multi-purpose shaft transmission box into a single structure. The right end face of the installation flange of the dedicated fixed support is adapted to the installation shape of the left end face of the engine or motor housing of the horizontal output shaft of the vertical or horizontal engine (200) or the motor, and is fastened by bolts at the corresponding positions. The left end face of the flange of the dedicated fixed support is adapted to the end face of the flange of the input shaft large bearing housing (103) cylindrical shell and the flange of the active bevel gear cylindrical shell outside the input shaft bevel gear right-angle transmission box housing (100), and is fastened by bolts at the corresponding positions. The internal splined shaft sleeve meshing with both shafts and installed in the cavity of the dedicated fixed support can rotate freely without interfering with other components.
When the vertical or horizontal engine (200) with a transverse output shaft or the transverse output shaft motor is not using the overdrive gear (or sprocket chain) transmission box housing (201), and is installed as an integral structure with the new multi-purpose shaft transmission box body by installing a dedicated fixed support between the engine or motor, the position of the input shaft large bearing housing (103) cylindrical shell and the active bevel gear cylindrical shell flange end face of the new multi-purpose shaft transmission box body input shaft bevel gear right-angle transmission box housing (100) that is in contact with the left flange end face of the dedicated fixed support can be adjusted. The new multi-purpose shaft transmission box can be rotated around the input shaft coaxial splined shaft (101) or the coaxially installed engine output splined shaft to a vertical position. The vertical position, horizontal position or any angular position can be installed and fixed by corresponding bolt holes on its flange plate and power can be transmitted.
The preferred option is to install and fix the new multi-purpose shaft transmission box in a vertical position relative to the frame to transfer power, and it is arranged and installed at the rear end of the rear drive shaft of the go-kart, UTV, ATV and other vehicle bodies and at the upper part of the frame. Therefore, the left universal joint output shaft bearing seat (118) and the right universal joint output shaft bearing seat (117) of the universal joint output shaft conical gear right-angle transmission box shell (112) of the new multi-purpose shaft transmission box and the universal joint output splined shaft (113) extending outward to the left and right must be in a horizontal position and installed laterally on the chassis of the go-kart, UTV, ATV and other vehicle bodies. Moreover, the left constant velocity ball cage universal joint outer cage (115) and the right constant velocity ball cage universal joint outer cage (116) are installed at both ends of the universal joint output splined shaft (113) on the left and right sides of the universal joint output shaft conical gear right-angle transmission box shell (112), and the left drive half shaft (209) and the right drive half shaft (210) output power to the left and right sides of the vehicle body respectively. The above-mentioned horizontal output shafts are connected to a vertical or horizontal engine (200) or a horizontal output shaft motor without using an overdrive gear transmission box, and one of them is preferably selected as the power source. When the new multi-purpose shaft transmission box is installed, the input shaft splined shaft (101) and the universal joint output splined shaft (113) of the new multi-purpose shaft transmission box maintain a parallel position for power transmission. The integral drive axle (208) is connected to the frame of the go-kart, UTV, ATV and other vehicle bodies through a longitudinally installed parallel four-bar linkage and a transversely installed Panhard rod. The integral drive axle (208) is arranged and installed at the position of the rear drive shaft of the go-kart, UTV, ATV and other vehicle bodies, and is located at the lower part of the frame in an integrated structure with the engine output shaft axis and the frame. There is a sufficient stroke distance between the integral drive axle (208) and the frame. The new multi-purpose shaft transmission system on the upper part of the frame uses a horizontal output shaft vertical or horizontal engine (200) and a horizontal output shaft motor, and one of them is preferably selected to be installed in an integrated structure with the vertically arranged new multi-purpose shaft transmission box, and is also connected to the go-kart through a rubber spring support. The frame of vehicles such as V ATV is installed in an integrated structure. Under the frame, the universal joint output shaft bevel gear right-angle transmission box shell (112) of the new multi-purpose shaft transmission box is laterally arranged and installed. The left universal joint output shaft bearing seat (118) and the right universal joint output shaft bearing seat (117) of the box extend laterally to the left and right, respectively, with the universal joint output splined shaft (113) extending outwards. The left universal joint output splined shaft (113) on the left side of the left universal joint output shaft bearing seat (118) is equipped with a left constant velocity ball cage universal joint outer cage (115) at its left end, and the right universal joint output splined shaft (113) on the right side of the right universal joint output shaft bearing seat (117) is equipped with a right constant velocity ball cage universal joint outer cage (116) at its right end, which are fastened with a center screw. The left constant velocity ball cage universal joint outer cage (115) and the right constant velocity ball cage universal joint outer cage (116) are respectively fitted with a left drive half shaft (209) and a right drive half shaft (210) that extend to the left and right sides of the vehicle body to output power. The inner cages of the left and right drive half shafts (209 and 210) are respectively engaged with the outer cages, and the two drive half shafts simultaneously output power to the left and right sides.
When a vertical engine with horizontal power output, a horizontal engine, or an electric motor with horizontal power output is installed as an integrated structure with a new multi-purpose shaft transmission box without using an overdrive gear transmission box, and one of them is preferably selected as the power source, and the power is transmitted through an integrated drive axle, taking the left end of the drive axle tube (208) where the left end drive axle gear (or sprocket chain) transmission box shell (206) is installed in a horizontal position as an example, a single leftward power output transmission half shaft (209) is preferably arranged horizontally inside the outer ball cage (115) of the left equal-speed ball cage universal joint on the left side of the universal joint output splined shaft (113). The leftward power output transmission half shaft (209) extends leftward and horizontally and is inserted into the outer ball cage (205) with telescopic function on the right side of the input shaft bearing seat of the left end drive axle gear (or sprocket chain) transmission box shell (206) installed at the left end of the drive axle tube (208), meshing with the center splined hole of the inner ball cage and transmitting power, and the power is transmitted through the left end drive axle gear (or sprocket chain) installed at the left end of the drive axle tube (208). The transmission gears and drive shafts installed in the moving box housing (206) drive the wheels (207) installed at both ends of the bridge tube of the entire drive axle (208) to rotate, thereby propelling the vehicle forward.
The single right-output force transmission half shaft (210) can also be optimally arranged and installed horizontally on the right side of the universal joint output spline shaft (113) within the right constant velocity ball cage universal joint outer cage (116). The right-output power transmission half shaft (210) installed in the inner cage center spline hole within the right constant velocity ball cage universal joint outer cage (116) extends laterally to the right and penetrates into the left extension of the telescopic function constant velocity ball cage universal joint outer cage (215) that protrudes from the left side of the left input shaft bearing housing of the right end drive axle gear (or sprocket chain) transmission box housing (216) welded to the right end of the integral drive axle tube (208), meshing with the inner cage center spline hole and transmitting power. The power is then transmitted through the various sets of transmission gears and drive shafts installed in the right end drive axle gear (or sprocket chain) transmission box housing (216) on the right end of the integral drive axle tube (208) to drive the wheels (207) installed at both ends of the integral drive axle tube (208) to rotate and drive the vehicle forward.
In the universal joint output shaft splined shaft (113) of the new multi-purpose shaft transmission box body with a single drive half shaft applied to the integral drive axle for power transmission, which is located in the middle position between the left universal joint output shaft bearing seat (118) and the right universal joint output shaft bearing seat (117) within the bevel gear right-angle transmission box shell (112), only a straight-through hard splined shaft can be installed, and the inter-axle differential assembly cannot be selected. This ensures that the two constant velocity ball cage universal joints on the universal joint output shaft outside the bevel gear right-angle transmission box shell do not have a differential function, guaranteeing that the single drive half shaft can smoothly transmit power.

5. A new multi-purpose shaft drive system for all-terrain vehicles, including a longitudinally arranged shaft installed in the go-kart. Electric motors on vehicle bodies such as UTVs and ATVs, or vertical engines with a mid-mounted output shaft, or Horizontal engines and CVT engines are integrated with the new multi-purpose shaft transmission box body as a whole. The structural characteristics of the integral drive axle for transmitting power are:
It is longitudinally arranged and installed on the chassis of go-karts, UTVs, ATVs, etc., with a mid-mounted longitudinal layout. Vertical or horizontal engines (800) or longitudinally arranged electric motors with output shafts The bearing housing (001) at the end of the output shaft (1000) is in a horizontal position and extends longitudinally backward. The central output splined shaft is parallel to the longitudinal axis of the kart, UTV, ATV and other vehicle bodies; excellent. One of the engines is directly integrated with the input shaft bevel gear right-angle transmission box housing (100) of the new multi-purpose shaft transmission box body, which is longitudinally installed in a vertical position.
The extended mid-mounted splined output shaft, which is in a horizontal position and extends longitudinally backward from the outer end of the bearing housing (001) of the mid-mounted longitudinal output shaft of the vertically or horizontally installed engine (800) or the electric motor (1000) installed in a longitudinal position, is inserted into the mid-mounted longitudinal output shaft of the vertically or horizontally installed engine or the electric motor. The output spline shaft extending horizontally and rearward from the output shaft bearing housing (001) outside the end of the (1000) multi-purpose shaft transmission box body with the input shaft bevel gear right-angle transmission box housing (100) installed in parallel and coaxially is the input shaft coaxial spline shaft (101) of the multi-purpose shaft transmission box body with the input shaft bevel gear right-angle transmission box housing (100) installed in a longitudinal position. The vertical or horizontal engine (800) with the output shaft in the middle or the electric motor (1000) installed in a longitudinal position is combined with the multi-purpose shaft transmission box body with the input shaft bevel gear right-angle transmission box housing (100) installed in a longitudinal position to form an integrated structure, and the inner splined slot in the center splined hole of the input shaft large bearing housing (103) inside the input shaft bevel gear right-angle transmission box housing (100) is meshed with the active bevel gear (102) bearing assembly.
The input shaft splined co-axial shaft (101) is fastened with a nut on the extended screw section outside the input shaft small bearing housing (104) within the input shaft bevel gear right-angle transmission box housing (100) of the new multi-purpose shaft transmission box. The input shaft splined co-axial shaft (101) connects the mid-mounted longitudinal output shaft of the vertical or horizontal engine (800) or the longitudinally installed electric motor (1000) with the input shaft bevel gear right-angle transmission box housing (100) of the new multi-purpose shaft transmission box in a joint-like integral structure. Therefore, the input shaft splined shaft (101) of the new multi-purpose conical gear right-angle transmission box housing (100) is parallel to the longitudinal axis of the go-kart, UTV, ATV and other vehicle bodies.
The preferred embodiment of the new multi-purpose shaft transmission box is fixedly installed in a vertical position relative to the engine and the frame to transmit power, and is arranged and installed at the rear end of the rear drive shaft of the go-kart, UTV, ATV and other vehicle bodies and at the upper position of the frame. Therefore, the universal joint output shaft conical gear right-angle transmission box shell (112) of the new multi-purpose shaft transmission box, the left universal joint output shaft bearing seat (118) and the right universal joint output shaft bearing seat (117) inside which the universal joint output splined shaft (113) is installed, must be in a horizontal position and arranged and installed horizontally at the chassis position of the go-kart, UTV, ATV and other vehicle bodies. At the same time, the left universal joint output splined shaft (113) at the left end outside the left universal joint output shaft bearing seat (118) of the universal joint output shaft conical gear right-angle transmission box shell (112) is equipped with a left constant velocity ball cage universal joint (115) and a left drive half shaft (209) for outputting power to the left side of the vehicle body, and the right universal joint output splined shaft (113) at the right end outside the right universal joint output shaft bearing seat (117) is equipped with a right constant velocity ball cage universal joint (116) and a right drive half shaft (210) for outputting power to the right side of the vehicle body.
Therefore, the input shaft bevel gear right-angle transmission box housing (100) of the new multi-purpose shaft transmission box and the universal joint output shaft bevel gear right-angle transmission box housing (112) are installed and fixed by rotating the support and protection tube (109) of the intermediate transmission shaft (108) and the flange (110) of the cylindrical shell of the end bevel gear bearing seat by 90° at the axial position of the intermediate transmission shaft (108), so that the input shaft co-axial splined shaft (101) inside the input shaft bevel gear right-angle transmission box housing (100) is installed in a longitudinal position and is parallel to the longitudinal axis of the go-kart, UTV, and ATV vehicle body, and the universal joint output splined shaft (113) installed inside the universal joint output shaft bevel gear right-angle transmission box housing (112) is arranged in a transverse position at the lower part of the vehicle body chassis frame, with a 90° transmission phase difference at the axial position of the intermediate transmission shaft (108). When the new multi-purpose shaft transmission box is installed as an integral structure with a longitudinally installed mid-mounted longitudinal output shaft vertical or horizontal engine (800) or a longitudinally installed electric motor (1000), one of these power sources is preferably selected. The key shaft (113) maintains a power transmission position where the two shafts are perpendicular to each other at the axial position of the intermediate drive shaft (108).
A dedicated support seat for the end of the engine or motor is installed between the end output shaft bearing seat (001) of the vertically or horizontally installed mid-mounted longitudinal output shaft engine (800) and the input shaft bevel gear right-angle transmission box housing (100) of the new multi-purpose shaft transmission box body coaxially installed. The flange end face of the active bevel gear cylindrical housing of the input shaft large bearing seat (103) outside the input shaft bevel gear right-angle transmission box housing (100) in the horizontal direction and the vertical surface of the dedicated support seat fixedly installed at the end of the transmission box housing of the mid-mounted longitudinal output shaft engine (800) or the longitudinally installed motor (1000) are in close contact and fastened with bolts, thus integrating the vertically or horizontally installed mid-mounted output splined shaft engine and CVT engine (800) and the motor (1000) installed on the vehicle body of go-karts, UTVs, ATVs, etc. with the new multi-purpose shaft transmission box body into an integral structure.
The integral drive axle (208) is connected to the frame of the go-kart, UTV, ATV, etc. through a longitudinally installed parallel four-bar linkage and a transversely installed Panhard rod. The integral drive axle (208) is arranged and installed at the position of the rear drive shaft of the go-kart, UTV, ATV, etc., and is located at the lower part of the frame in alignment with the engine output shaft axis of the engine (800) installed as an integral structure with the frame, with a sufficient stroke distance between the integral drive axle (208) and the frame. In the new multi-purpose shaft transmission system on the upper part of the frame, a vertical or horizontal engine (800) with a longitudinal output shaft and a longitudinally installed electric motor (1000) are adopted. Preferably, one of the engines is installed as an integral structure with the new multi-purpose shaft transmission box body in a vertical position and is also installed as an integral structure with the frame of the go-kart, UTV, ATV, etc. through a rubber spring support. On the lower part of the frame, the universal joint output shaft bevel gear right-angle transmission box housing (112) of the new multi-purpose shaft transmission box is transversely installed, with the left universal joint output shaft bearing seat (118) and the right universal joint output shaft bearing seat (117) and the universal joint output splined shaft (113) extending to the left and right sides. The end of the universal joint output splined shaft (113) extending to the left of the left universal joint output shaft bearing seat (118) Install the left constant velocity ball cage universal joint outer cage (115), and install the right constant velocity ball cage universal joint outer cage (116) on the right end of the output splined shaft (113) extending from the right universal joint output shaft bearing housing (117), and fasten it with a center screw. At the same time, install the drive half shaft (209) that transmits power to the left side of the vehicle body into the inner cage center splined hole of the left constant velocity ball cage universal joint outer cage (115) that has been installed, and install the drive half shaft (210) that transmits power to the right side of the vehicle body into the inner cage center splined hole of the right constant velocity ball cage universal joint outer cage (116) that has been installed. The inner cages installed at both ends of the drive half shafts on the left and right sides mesh with the outer cages, and the two drive half shafts simultaneously transmit power to the left and right sides of the vehicle body.
When a vertical or horizontal engine with a mid-mounted output shaft, a CVT engine, and a longitudinally arranged electric motor are integrated with a new multi-purpose shaft transmission box to form an integral structure for power transmission, taking the left end of the integral drive axle (208) as an example, where the transmission box shell (206) is installed horizontally, it is preferred to use a single leftward power output half shaft (209) which is horizontally arranged on the left side of the universal joint output splined shaft (113) and inside the outer ball cage (115) of the left constant velocity ball cage universal joint. The leftward power output half shaft (209) is installed in the center splined hole of the inner ball cage and extends leftward, then passes through the right input shaft bearing housing of the left end drive axle gear (or sprocket chain) transmission box shell (206) welded to the left end of the integral drive axle (208) and enters the outer ball cage (205) with telescopic function of the constant velocity ball cage universal joint, meshing with the center splined hole of the inner ball cage to transmit power. The power is then transmitted through the transmission gears and drive shafts installed in the left end drive axle gear (or sprocket chain) transmission box shell (206) to drive the wheels (207) installed at both ends of the integral drive axle (208) to rotate and drive the vehicle forward.
The single right-output force transmission half shaft (210) can also be preferentially installed laterally in the right side of the universal joint output spline shaft (113) within the outer cage (116) of the constant velocity ball cage universal joint. The transmission half shaft (210) that outputs power to the right is installed in the inner cage center spline hole within the outer cage (116) of the constant velocity ball cage universal joint and extends laterally to the right and passes through. The outer cage (215) of the telescopic constant velocity ball cage universal joint, which extends outward from the left side of the left bearing housing of the input shaft of the right end drive axle gear (or sprocket chain) transmission box housing (216) welded to the right end of the integral drive axle (208) tube, meshes with the central splined hole of the inner cage to transmit power. The power is then transmitted through the various sets of transmission gears and drive shafts installed inside the right end drive axle gear (or sprocket chain) transmission box housing (216) to drive the wheels (207) installed at both ends of the integral drive axle (208) tube to rotate and drive the vehicle forward.
In the new multi-purpose shaft transmission housing with a single drive half shaft for power transmission in an integral drive axle, the universal joint output shaft bevel gear right-angle transmission housing (112) can only install a straight-through hard splined shaft (113) between the left universal joint output shaft bearing seat (118) and the right universal joint output shaft bearing seat (117), and cannot be equipped with an inter-axle differential assembly. This ensures that the two constant velocity ball cage universal joints on the universal joint output shaft outside the universal joint output shaft bevel gear right-angle transmission housing do not have a differential function, allowing the single drive half shaft to smoothly transmit power.

6. A new multi-purpose shaft drive system for all-terrain vehicles, including a longitudinally arranged shaft installed in the go-kart. Electric motors on vehicles such as UTVs and ATVs, as well as vertical or horizontal engines with a mid-mounted output shaft The motive and CVT engine and the new multi-purpose shaft transmission box are installed in a split structure as a set. The characteristics of power transmission of the integral drive axle are:
The electric motor (1000) installed in the longitudinal position on the chassis of go-karts, UTVs, ATVs, etc. Bearing for the end output shaft of a vertical or horizontal engine (800) with a centrally located longitudinal output shaft The mid-mounted output spline shaft at position (001), which is in a horizontal position at the rear and extends backward, is for a go-kart. The longitudinal axes of the UTV, ATV and other vehicle bodies remain parallel to each other; it is preferable to select one of them as the reference. The input of a new type of multi-purpose shaft transmission housing with a longitudinal installation position of the motive force and vertical position The housing (100) of the right-angle transmission box with conical bevel gears is installed as an integral structure.
The short-structured output splined shaft, which is in a horizontal position and extends longitudinally backward from the bearing housing (001) at the end of the mid-mounted longitudinal output shaft of the vertically or horizontally installed engine (800) or the longitudinally positioned electric motor (1000), requires a conical gear on the input shaft of the new multi-purpose shaft transmission housing for longitudinal installation. A universal joint coupling (908) is installed between the input shaft (101) extending forward from the input shaft end of the right-angle transmission box housing (100).
The output splined shaft (001) extending horizontally and rearward from the end of the vertical or horizontal engine (800) with a mid-mounted longitudinal output shaft or the motor (1000) installed in a longitudinal position, is in a corresponding installation position with the input shaft splined shaft (101) extending forward from the input shaft bevel gear right-angle transmission box housing (100) of the new multi-purpose shaft transmission box body, which is installed in parallel and coaxially with the output shaft bearing housing (001) at the end of the mid-mounted longitudinal output shaft of the vertical or horizontal engine (800) or the motor (1000) installed in a longitudinal position. A universal joint coupling (908) is installed between the end of the output splined shaft of the mid-mounted longitudinal output shaft of the vertical or horizontal engine (800) or the motor (1000) installed in a longitudinal position and the end of the input shaft splined shaft (101) extending forward from the input shaft bevel gear right-angle transmission box housing (100) of the new multi-purpose shaft transmission box body, thus the input shaft (101) of the new multi-purpose shaft transmission box body is kept parallel to the longitudinal axis of the kart, UTV, ATV and other vehicle bodies.
The preferred embodiment of the new multi-purpose shaft transmission box is fixedly installed in a vertical position relative to the engine motor and the frame to transmit power, and is arranged and installed at the rear end of the rear drive shaft and the upper part of the frame of the go-kart, UTV, ATV and other vehicle bodies. Therefore, the universal joint output shaft bevel gear right-angle transmission box shell (112) of the new multi-purpose shaft transmission box, the left universal joint output shaft bearing seat (118) and the right universal joint output shaft bearing seat (117), and the universal joint output splined shaft (113) extending outward to the left and right ends must be arranged and installed in a horizontal position and laterally on the chassis of the go-kart, UTV, ATV and other vehicle bodies. At the same time, the left end of the universal joint output splined shaft (113) outside the left universal joint output shaft bearing seat (118) of the universal joint output shaft bevel gear right-angle transmission box shell (112) is installed with the left constant velocity ball cage universal joint outer cage (115) and the left drive half shaft (209) for outputting power to the left side of the vehicle body laterally, and at the right end of the universal joint output splined shaft (113) outside the right universal joint output shaft bearing seat (117) Install the right constant velocity ball cage universal joint outer cage (115) and the right power transmission half shaft (210) to output power laterally to the right side of the vehicle body.
Therefore, the input shaft bevel gear right-angle transmission box housing (100) of the new multi-purpose shaft transmission box and the universal joint output shaft bevel gear right-angle transmission box housing (112) are installed and fixed by rotating the support and protection tube (109) of the intermediate transmission shaft (108) and the flange (110) of the cylindrical shell of the end bevel gear bearing seat by 90 degrees at the axial position of the intermediate transmission shaft (108), so that the input shaft splined shaft (101) in the input shaft bevel gear right-angle transmission box housing (100) is installed in a longitudinal position and is parallel to the longitudinal axis of the go-kart, UTV, ATV and other vehicle bodies. At the same time, the universal joint output splined shaft (113) installed in the universal joint output shaft bevel gear right-angle transmission box housing (112) arranged laterally on the lower part of the frame of the go-kart, UTV, ATV and other vehicle bodies has a 90-degree transmission phase difference with the intermediate transmission shaft (108) at the axial position.
When a new multi-purpose shaft transmission box is installed as an integrated structure with a vertical engine and a horizontal engine (800) or an electric motor (1000) both in a longitudinal installation position, the input shaft splined shaft (101) and the universal joint output splined shaft (113) of the new multi-purpose shaft transmission box maintain a perpendicular power transmission position on the axial position of the intermediate transmission shaft (108).
The vertical or horizontal engine (800) with a mid-mounted longitudinal output shaft installed on the chassis of go-karts, UTVs, ATVs, etc., and the electric motor (1000) installed in a longitudinal position are separately installed with dedicated brackets on the new multi-purpose shaft transmission box. Between the end of the transmission box shell of the mid-mounted longitudinal output shaft vertical or horizontal engine (800) or the electric motor (1000) installed in a longitudinal position and the input shaft bevel gear right-angle transmission box shell (100) installed coaxially, there is a dedicated extended support seat for the engine or motor end. The flange end face of the active bevel gear cylindrical shell of the large bearing seat (103) of the input shaft on the horizontal direction of the outer end of the input shaft of the input shaft bevel gear right-angle transmission box shell (100) is in close contact with the vertical surface of the dedicated extended support seat for the engine or motor end and is fastened with bolts. Among them, in the mid-mounted The universal joint coupling (908) installed between the end output splined shaft of the vertical or horizontal engine (800) with the longitudinal output shaft or the end output splined shaft of the electric motor in a longitudinal position and the input splined shaft (101) at the input end of the input shaft of the new multi-purpose shaft drive box body and the right-angle transmission box shell (100) is installed in the suitable cavity in the middle of the dedicated extended support seat, protecting the universal joint coupling from interference during rotation.
The above-mentioned installation method involves adding a universal joint coupling (908) between the vertical or horizontal engine (800) with a longitudinally arranged mid-mounted output shaft installed on the chassis of go-karts, UTVs, ATVs, etc., or the longitudinally arranged electric motor (1000) and the input shaft bevel gear right-angle transmission box housing (100) of the new multi-purpose shaft transmission box body, and installing them as an integrated structure through a specially designed extended support seat.
The integral drive axle (208) is connected to the frame of the go-kart, UTV, ATV, etc. through a longitudinally installed parallelogram linkage and a transversely installed Panhard rod. The integral drive axle (208) is arranged and installed at the position of the rear drive shaft of the go-kart, UTV, ATV, etc., and is located at the lower part of the frame in alignment with the engine output shaft axis of the engine (800) or the motor (1000) installed in a vertical position and integrated with the frame, with a sufficient stroke distance between the integral drive axle (208) and the frame. The new multi-purpose shaft transmission system on the upper part of the frame uses a vertical or horizontal engine (800) with a mid-mounted longitudinal output shaft or a motor (1000) installed in a longitudinal position, and is preferably integrated with the new multi-purpose shaft transmission box body arranged in a vertical position and the frame through rubber spring mounts. On the lower part of the frame, the universal joint output shaft bevel gear right-angle transmission box housing (112) of the new multi-purpose shaft transmission box is transversely installed, with the left universal joint output shaft bearing housing (118) and the right universal joint output shaft bearing housing (117) and the universal joint output splined shaft (113) extending to the left and right sides. The left constant velocity ball cage universal joint outer cage (115) is installed at the end of the left extending output splined shaft (113) of the left universal joint output shaft bearing housing (118), and the right constant velocity ball cage universal joint outer cage (116) is installed at the end of the right extending output splined shaft (113) of the right universal joint output shaft bearing housing (117) and is fastened with a center screw. The left and right constant velocity ball cages are simultaneously installed. The inner ball cage center splined hole of the left outer ball cage (115) of the universal joint is inserted with the drive half shaft (209) that outputs power to the left side of the vehicle body, and the inner ball cage center splined hole of the right outer ball cage (116) of the constant velocity universal joint is inserted with the drive half shaft (210) that outputs power to the right side of the vehicle body. The inner ball cages installed at both ends of the drive half shafts on the left and right are meshed with the outer ball cages, and the two drive half shafts output power to the left and right sides simultaneously.
When a vertical or horizontal engine with a mid-mounted output shaft, a CVT engine, and an electric motor are installed in a split structure with a new multi-purpose shaft transmission box to drive the overall drive axle, taking the case where the left end of the drive axle (208) is installed with a left-end drive axle gear (or sprocket chain) and the transmission box shell (206) is in a horizontal position as an example, it is preferred to use a single transmission half shaft (209) that outputs power to the left, which is horizontally arranged and installed in the outer ball cage (115) of the constant velocity ball cage universal joint on the left side of the universal joint output splined shaft (113). The transmission half shaft (209) installed in the center splined hole of the inner ball cage within the outer ball cage (115) on the left side of the constant velocity ball cage universal joint extends laterally to the left and is inserted into the outer ball cage (205) with telescopic function that extends to the right from the right side of the input shaft bearing housing of the left-end drive axle gear (or sprocket chain) transmission box shell (206) welded to the left end of the drive axle (208), meshing with the center splined hole of the inner ball cage and transmitting power. The power is then transmitted through the transmission gears and drive shafts installed in the left-end drive axle gear (or sprocket chain) transmission box shell (206) welded to the left end of the drive axle (208) to drive the wheels (207) installed at both ends of the drive axle (208) to rotate and drive the vehicle forward.
Alternatively, a single transmission half shaft (210) that outputs power to the right can be used, which is horizontally arranged and installed in the outer ball cage (116) of the constant velocity ball cage universal joint on the right side of the universal joint output splined shaft (113). The transmission half shaft (210) installed in the center splined hole of the inner ball cage within the outer ball cage (116) on the right side of the constant velocity ball cage universal joint extends laterally to the right and is inserted into the outer ball cage (215) with telescopic function that extends to the left from the left side of the input shaft bearing housing of the right-end drive axle gear (or sprocket chain) transmission box shell (216) welded to the right end of the drive axle (208), meshing with the center splined hole of the inner ball cage and transmitting power. The power is then transmitted through the transmission gears and drive shafts installed in the right-end drive axle gear (or sprocket chain) transmission box shell (216) welded to the right end of the drive axle (208) to drive the wheels (207) installed at both ends of the drive axle (208) to rotate and drive the vehicle forward. The right-end drive axle gear (or sprocket chain) transmission box housing (216) is equipped with a set of transmission gears and drive shafts that drive the wheels (207) installed at both ends of the overall drive axle (208) to rotate, thereby propelling the vehicle forward.
In the new multi-purpose shaft transmission housing with a single drive half shaft for power transmission in an integral drive axle, the universal joint output shaft bevel gear right-angle transmission housing (112) can only install a straight-through hard splined shaft (113) between the left universal joint output shaft bearing seat (118) and the right universal joint output shaft bearing seat (117), and cannot be equipped with an inter-axle differential assembly. This ensures that the two constant velocity ball cage universal joints on the universal joint output shaft outside the universal joint output shaft bevel gear right-angle transmission housing do not have a differential function, allowing the single drive half shaft to smoothly transmit power.

7. A new type of multi-purpose shaft drive system for all-terrain vehicles, including a vertical or horizontal engine like a common one Motors with a transverse output shaft, such as ordinary CVT engines or transversely installed electric motors as well as vertical or horizontal engines with a mid-mounted longitudinal output shaft, CVT engines and longitudinal arrangements The installed electric motor is integrated with the new multi-purpose shaft transmission box to form a complete structure and is independently suspended. The characteristics of the power transmission of the steering knuckle with a kingpin are:
The universal joint output shaft bevel gear right-angle transmission box shell at both ends of the new multi-purpose shaft transmission box body integrated with various types of engine motors in this invention is equipped with universal joint output spline shafts extending outward to the left and right in the universal joint output shaft bearing seats at both ends. At the two ends of the universal joint output spline shafts, two equal-speed ball cage universal joints are installed simultaneously, and the transmission half shafts for outputting power laterally to the left and right are installed laterally to the left and right, respectively. Therefore, the new multi-purpose shaft transmission box body integrated with various types of engine motors in this invention is also suitable for transmitting power to the independent suspension knuckle shaft steering knuckles.
The vertical or horizontal engine (200) with a lateral output shaft equipped with an overdrive gear transmission box in the new multi-purpose shaft drive system on the upper part of the vehicle frame, or the ordinary CVT engine (500) with a lateral output shaft, or the motor (600) with a lateral output shaft, the preferred end output shaft bearing housing (001) of one of these engines, on the outer right side, is in a horizontal position and extends laterally to the right, and the output splined shaft is inserted into the new multi-purpose shaft transmission box body installed side by side and coaxially on the right. The input shaft bevel gear right-angle drive box housing (100) and the large bearing seat of the input shaft (103) Inside, with the bearing assembly of the driving bevel gear (102) installed on the input splined shaft (101) The internal teeth of the splined hole at the center of the hub mesh with the splined groove of the input shaft, and at the small bearing seat of the input shaft The overhanging part is fastened with a nut. The input shaft coaxial splined shaft (101) is arranged laterally. Vertical or horizontal output shaft engine (200), CVT engine with transverse output shaft The motor (500) or the horizontal output shaft motor (600) is installed in an articulated integral structure with the input shaft bevel gear right-angle transmission box housing (100) of the new multi-purpose shaft transmission box body.
The end output shaft of the vertical or horizontal engine (800) with a mid-mounted longitudinal output shaft or the motor (1000) installed in a longitudinal position, preferably the end output shaft bearing housing (001) of one of the engines, has its rear end in a horizontal position and extends longitudinally backward. The output splined shaft is inserted into the input shaft large bearing housing (103) of the new multi-purpose shaft transmission box body's input shaft bevel gear right-angle transmission box housing (100), which is installed in parallel and coaxially at the rear end. It meshes with the internal splined slot in the center splined hole of the bearing assembly of the driving bevel gear (102) installed on the input shaft splined shaft (101) of the same axis, and is fastened with a nut at the extended part of the small bearing housing (104). The input shaft splined shaft (101) of the same axis connects the vertical or horizontal engine (800) with a mid-mounted longitudinal output shaft or the motor (1000) installed in a longitudinal position and the new multi-purpose shaft transmission box body's input shaft bevel gear right-angle transmission box housing (100) into a joint-like integral structure. The end output splined shaft of the engine or variable frequency motor is the input shaft splined shaft (101) at the front end of the new multi-purpose shaft transmission box body's input shaft bevel gear right-angle transmission box housing (100). This enables the new multi-purpose shaft transmission box body to rotate around its input shaft splined shaft (101) to a vertical position, a horizontal position, or any position to transmit power. Preferably, the new multi-purpose shaft transmission box body is fixed in a vertical position relative to the engine and the vehicle frame to transmit power.
The above structure is installed as an integrated structure with the frame of the go-kart, UTV, ATV and other vehicle bodies through rubber spring mounts. The left and right universal joint output shaft bearing seats (118) and (117) of the new multi-purpose shaft transmission box body's universal joint output shaft bevel gear right-angle transmission box shell (112) are arranged and installed transversely under the frame of the vehicle. At the lower part of the frame of vehicles such as go-karts, UTVs and ATVs, the left end of the output splined shaft (113) extending outward from the left universal joint output shaft bearing seat (118) is fitted with the left constant velocity ball cage universal joint outer cage (115), and the right end of the output splined shaft (113) extending outward from the right universal joint output shaft bearing seat (117) is fitted with the right constant velocity ball cage universal joint outer cage (116), which are fastened with a central screw. Meanwhile, the inner cage of the left constant velocity ball cage universal joint outer cage (115) installed in the universal joint output shaft bearing seat (112) of the new multi-purpose shaft transmission box has the left drive half shaft (209) for transmitting power to the left side of the vehicle body inserted into its central splined hole. The inner cage installed at the right end of the drive half shaft (209) meshes with the left constant velocity ball cage universal joint outer cage (115) to transmit power. The left drive half shaft (209) extends laterally to the left and is inserted into the central splined hole of the left constant velocity ball cage universal joint outer cage (405) installed in the left independent suspension knuckle steering knuckle shaft hole to mesh with the inner cage and transmit power. Similarly, the inner cage of the right constant velocity ball cage universal joint outer cage (116) has the right drive half shaft (210) for transmitting power to the right side of the vehicle body inserted into its central splined hole. The inner cage installed at the left end of the drive half shaft (210) meshes with the right constant velocity ball cage universal joint outer cage (116) to transmit power. The right drive half shaft (210) extends laterally to the right and is inserted into the central splined hole of the right constant velocity ball cage universal joint outer cage (415) installed in the right independent suspension knuckle steering knuckle shaft hole to mesh with the inner cage and transmit power. The two knuckle steering knuckles installed on the left and right sides of the vehicle body and on the same axis are connected to the frame through one of the preferred connection methods such as double A-arms, multi-link trailing arms or longitudinal swing arms. The two knuckle steering knuckles on the same axis are arranged and installed at the position of the rear drive shaft of the go-kart, UTV and ATV, and their axis lines are located at the lower part of the frame where the engine output shaft is integrated with the frame. Moreover, the axis lines of the two knuckle steering knuckles on the same axis have a sufficient stroke distance from the frame. Meanwhile, the splined shaft of the left constant velocity ball cage universal joint (405) is inserted into the central splined hole of the left knuckle steering knuckle installed on the vehicle body to form an integrated structure, and the left drive half shaft (209) drives the left knuckle steering knuckle shaft hole installed on the vehicle body. The left constant velocity ball cage universal joint (405) that extends to the right and has a telescopic function rotates, while the splined shaft of the right constant velocity ball cage universal joint (415) is inserted into the center splined hole of the knuckle shaft steering knuckle installed on the right side of the vehicle body, forming an integrated structure with the right independent suspension knuckle shaft steering. At the same time, the right drive half shaft (210) that outputs power to the right drives the right constant velocity ball cage universal joint (415) that extends to the left and has a telescopic function, which is installed in the knuckle shaft steering knuckle on the right side of the vehicle body, to rotate, and simultaneously drives the two wheels installed on the left and right independent suspension knuckle shaft steering knuckles to rotate, thus driving the vehicle forward.
The conical gear right-angle transmission box housing (112) of the universal joint output shaft of the knuckle shaft steering knuckle can be optionally equipped with an inter-axle differential at the middle position between the left universal joint output shaft bearing seat (118) and the right universal joint output shaft bearing seat (117). This enables the left constant velocity ball cage universal joint outer cage (115) installed on the left end of the universal joint output splined shaft (113) and the left drive half shaft (209) that outputs power to the left, as well as the right constant velocity ball cage universal joint outer cage (116) installed on the right end and the right drive half shaft (210) that outputs power to the right, and the left and right tires to have a differential function.

8. A new type of multi-purpose shaft drive system for all-terrain vehicles, including a new type of multi-purpose shaft drive box. This body is applied to go-karts, UTVs, ATVs and other vehicle bodies when matched with various types of engines. The power transfer case of the double-axle four-wheel drive system that distributes power to both the front and rear drive axles. The characteristics of the driving force are:
The longitudinal arrangement is installed on the longitudinal position of the vehicle body of go-karts, UTVs, ATVs, etc. Motors (1000) and vertical or horizontal engines with a mid-mounted longitudinal output shaft (800) The new multi-purpose shaft drive box body, which is installed in a vertical position as a set, can be installed as an integrated structure to A transfer case for distributing power between the front and rear drive axles in a four-wheel drive vehicle with front and rear double axles.
It is installed longitudinally on the body of go-karts, UTVs, ATVs and other vehicles. Longitudinal position installation. The electric motor (1000) and the vertical or horizontal engine with a longitudinally arranged output shaft in the middle. (800), preferably one of the engines is installed in a longitudinal position at a vertical location Input shaft bevel gear right-angle drive box housing (100) of a new type of multi-purpose shaft drive box body Install as an integral structure;
The middle-mounted longitudinal output shaft of the vertical or horizontal (800) or the motor (1000) installed in a longitudinal position, the end output shaft bearing housing (001) outside of which is in a horizontal position and extends longitudinally backward, the middle-mounted output splined shaft is parallel to the longitudinal axis of the go-kart, UTV, ATV and other vehicle bodies;
the middle-mounted longitudinal output shaft of the vertical or horizontal (800) or the motor (1000) installed in a longitudinal position, the end output shaft bearing housing (001) outside of which is in a horizontal position and extends longitudinally backward, the middle-mounted output splined shaft is inserted into the input shaft bevel gear right-angle transmission box housing (100) of the new multi-purpose shaft transmission box body, which is installed in parallel and coaxially outside the input shaft large bearing housing (103), and meshes with the internal splines in the center splined hole of the bearing assembly of the driving bevel gear (102). The input shaft coaxial splined shaft (101) is fastened with a nut on the extended screw part outside the input shaft small bearing housing (104) inside the input shaft bevel gear right-angle transmission box housing (100) of the new multi-purpose shaft transmission box body. The input shaft coaxial splined shaft (101) connects the middle-mounted longitudinal output shaft of the vertical or horizontal (800) or the motor (1000) installed in a longitudinal position and the input shaft bevel gear right-angle transmission box housing (100) of the new multi-purpose shaft transmission box body into a joint-like integral structure. Therefore, the input shaft splined shaft (101) of the input shaft bevel gear right-angle transmission box housing (100) of the new multi-purpose shaft transmission box body is parallel to the longitudinal axis of the go-kart, UTV, ATV and other vehicle bodies.
In order to install the universal joint output shaft bevel gear right-angle transmission box housing (112) of the new multi-purpose shaft transmission box as an intermediate transfer case capable of outputting power to the front and rear of vehicles such as go-karts, UTVs, and ATVs, the universal joint output shaft bevel gear right-angle transmission box housing (112), the universal joint output shaft bearing seat and the extended universal joint output splined shaft (113) must be arranged and installed in a longitudinal and horizontal position at the bottom of the engine. The universal joint output shaft bearing seat (118) at the front end of the universal joint output shaft bevel gear right-angle transmission box housing (112) outputs power to the front drive axle, and the universal joint output shaft bearing seat (117) at the rear end outputs power to the rear drive axle, and is connected to the engine (800) or the electric motor (1). The new multi-purpose shaft transmission box is installed as an integral structure, with the front and rear universal joint output shaft bearing seats (118 and 117) of the universal joint output shaft bevel gear right-angle transmission box shell (112) and the universal joint output splined shaft (113) extending forward and backward from both ends being parallel to the longitudinal axis of the go-kart, UTV, and ATV vehicle body. The input splined shaft (101) of the input shaft bevel gear right-angle transmission box shell (100) and the universal joint output splined shaft (113) of the universal joint output shaft bevel gear right-angle transmission box shell (112) are simultaneously installed in the same vertical plane parallel to the longitudinal axis of the vehicle body. The front end of the universal joint output splined shaft (113) extending forward from the front universal joint output shaft bearing seat (118) of the universal joint output shaft bevel gear right-angle transmission box shell (112) is equipped with a constant velocity ball cage universal joint outer cage (115) and a drive half shaft (1107) for forward power transmission to the front drive axle (1109), while the rear end of the universal joint output splined shaft (113) extending backward from the rear universal joint output shaft bearing seat (117) of the universal joint output shaft bevel gear right-angle transmission box shell (112) is equipped with a constant velocity ball cage universal joint outer cage (116) and a drive half shaft (1108) for backward power transmission to the rear drive axle (1110), simultaneously transmitting power to the front and rear drive axles.

9. A new multi-purpose shaft drive system for all-terrain vehicles, including an overdrive gear (or The ordinary vertical engine and horizontal engine are equipped with a new type of multi-purpose transmission box with sprocket and chain. The shaft transmission box is installed in an integrated structure and is applied to the front when used in a four-wheel drive with dual axles at the front and rear. The transmission structure characteristics of the relay power transfer case for distributing power to the rear dual drive axles are:
the engine box (200) installed on the left side of the horizontal output shaft, which is vertical or horizontal The bearing housing at the outer end of the output shaft of the overrunning gear (or sprocket chain) transmission box housing (201) (001) The output spline shaft on the outer right side, which is in a horizontal position and extends laterally to the right, is inserted into the right The input shaft bevel gear of the new multi-purpose coaxial side-by-side mounted shaft transmission housing is at a right angle. Inside the input shaft large bearing housing (103) within the transmission box housing (100), there is a driving bevel gear The internal teeth of the splined hole at the center of the wheel (102) mesh with the coaxial splines of the input shaft. The shaft (101) passes through the input shaft bevel gear right-angle transmission of the new multi-purpose shaft drive housing. The input shaft small bearing housing (104) of the box shell (100) is tightened with a nut on the extended screw part outside.
Therefore, the input shaft bevel gear right-angle transmission box housing (100) of the new multi-purpose shaft transmission box is arranged and installed in a horizontal position on the chassis of go-karts, UTVs, ATVs, etc. The output shaft splined shaft (001) at the end of the transmission box housing (201) on the left side of the vertical or horizontal engine (200) installed on the horizontal output shaft is arranged in a horizontal position and extends laterally to the right. This enables the engine and the input shaft bevel gear right-angle transmission box housing (100) of the new multi-purpose shaft transmission box to be installed in a joint-like integral structure, allowing the new multi-purpose shaft transmission box to rotate around its input shaft splined shaft (101), that is, the right end of the transmission box housing (201) of the overdrive gear (or sprocket chain) in a horizontal position and extending laterally to the right, to the horizontal position, vertical position or any direction position to transmit power.
The preferred structure for transmitting power is to install the new multi-purpose shaft transmission box in a vertical position and apply it to the front drive axle (1109) and the rear drive axle (1110) for power distribution through the intermediate power transfer case. The end output splined shaft of the overdrive gear (or sprocket chain) transmission box (201) installed on the left side of the horizontal output shaft of the vertical or horizontal engine (200) box is in a horizontal position and extends laterally to the right, and is inserted into the input shaft large bearing housing (103) of the input shaft conical gear direct drive box housing (100) of the new multi-purpose shaft transmission box installed in parallel and coaxially on the right side. Therefore, the input shaft conical gear right-angle drive box housing (100) of the new multi-purpose shaft transmission box, with its input shaft large bearing housing (103) and input shaft coaxial splined shaft (101), is arranged horizontally and laterally on the body of the four-wheel drive kart UTV ATV with front and rear double axles, and is parallel to the drive shafts of the front drive axle (1109) and the rear drive axle (1110).
In order to enable the splined output shaft (113) of the universal joint output conical gear right-angle transmission box housing (112) of the new multi-purpose shaft transmission box to output power in both the front and rear directions of the vehicle body of go-karts, UTVs, ATVs, etc., it is necessary to ensure that the universal joint output of the new multi-purpose shaft transmission box's conical gear right-angle transmission box housing (112) can be transmitted in both directions. The bearing housing for the output shaft and the output splined shaft (113) of the universal joint are installed horizontally and longitudinally at the bottom of the transverse output shaft of the vertical or horizontal engine (200) and are integrated with the engine to form an integral structure, so that the bevel gear right-angle transmission box housing of the universal joint output shaft (112) The front universal joint output bearing housing (118) and the rear universal joint output shaft bearing housing (117), as well as the universal joint output splined shaft (113) extending forward and backward, are installed in the same vertical plane as the longitudinal axis of the vehicle body of the go-kart, UTV, ATV, etc., with the two shafts parallel to each other. At the front end of the universal joint output splined shaft (113), the front constant velocity ball cage universal joint (115) is installed and the transmission half shaft (1107) extending forward to transmit power to the front drive axle (1109). At the same time, on the universal joint output splined shaft The rear end of (113) is equipped with a rear constant velocity ball cage universal joint (116) and a drive half shaft (1108) extending backward to transmit power to the rear drive axle (1110). Therefore, the input shaft bevel gear of the new multi-purpose shaft transmission box body must be directly connected to the right-angle transmission box shell (100) The universal joint output shaft conical gear of the new multi-purpose shaft transmission box body is installed and fixed at a 90-degree rotation to the intermediate transmission shaft (108) in the axial position of the intermediate transmission shaft protection support tube (109) and the flange of the cylindrical shell of the end conical gear bearing housing (110), so that the input shaft splined shaft (10) in the input shaft conical gear right-angle transmission box shell (100) of the laterally arranged new multi-purpose shaft transmission box body is coaxial. 1) The universal joint output splined shaft (113) inside the right-angle transmission box housing (112) of the new multi-purpose shaft transmission box body installed longitudinally at the bottom of the engine is in a 90° transmission phase difference with the intermediate transmission shaft (108) in the axial position.
When the new multi-purpose shaft transmission box body is used in conjunction with various types of engines and applied to the power distribution to the front and rear double drive axles in the four-wheel drive system, the intermediate transmission shaft (108) and the intermediate transmission shaft protection support tube (109) of the new multi-purpose shaft transmission box body can use the shorter models as much as possible without causing transmission interference with the drive half shafts and constant velocity ball cage universal joints, so that the front universal joint output shaft bearing housing (118) and the rear universal joint output shaft bearing housing (117) of the right-angle transmission box housing (112) of the new multi-purpose straight shaft transmission box body are closer to the engine. The bottom of the motive power unit is designed to reduce the overall height of the engine and the new multi-purpose shaft transmission housing that is integrally structured with the engine.

10. A new multi-purpose shaft transmission system for all-terrain vehicles, including an electric motor and a conventional transverse output shaft of a CVT engine, which are laterally arranged and installed on the body of a go-kart, UTV, ATV, etc., and a new multi-purpose shaft transmission box body is installed in an integrated structure. When applied to a dual-axle four-wheel drive, the transmission structure feature is that it serves as a relay power transfer case to distribute power to the front and rear dual drive axles.
The output spline shaft at the right end of the CVT engine (500) transmission box or the electric motor (600) installed on the chassis of go-karts, UTVs, ATVs, etc., which is in a horizontal position and extends laterally to the right, is inserted into the large bearing housing (103) of the input shaft bevel gear right-angle transmission box housing (100) of the new multi-purpose shaft transmission box, which is installed side by side and coaxially on the right, and meshes with the internal splines in the center spline hole of the driving bevel gear (102). The input shaft coaxial spline shaft (101) of the new multi-purpose shaft transmission box extends outside the small bearing housing (104) of the input shaft bevel gear right-angle transmission box housing (100) and is fastened with a nut on the extended screw part. Therefore, the output spline shaft at the right end of the CVT engine (500) transmission box or the right end of the electric motor (600) is the input shaft coaxial spline shaft (101) of the input shaft bevel gear right-angle transmission box housing (100) of the new multi-purpose shaft transmission box. By installing the output shaft coaxial spline shaft at the right end of the CVT engine (500) transmission box or the right end of the electric motor (600) in a horizontal position and extending laterally to the right, the CVT engine (500) transmission box or the electric motor (600) and the input shaft bevel gear right-angle transmission box housing (100) of the new multi-purpose shaft transmission box are installed in a joint-like integral structure. This enables the input shaft bevel gear right-angle transmission box housing (100) of the new multi-purpose shaft transmission box to rotate around its input shaft coaxial spline shaft (101), which is the output shaft coaxial spline shaft at the right end of the CVT engine (500) transmission box or the right end of the electric motor (600), to the horizontal position, vertical position, or any direction to transmit power.
The preferred CVT engine (500) with a transverse output shaft or the transverse output shaft electric motor (600) is equipped with a new multi-purpose shaft transmission housing. When the power is transmitted to the front drive axle (1109) and the rear drive axle (1110) through the intermediate power transfer case, it adopts a vertical installation method for power transmission. The CVT engine (500) transmission housing of the transverse output shaft or the end output splined shaft of the transverse output shaft motor (600) extends laterally to the right and is inserted into the input shaft large bearing housing (103) of the input shaft bevel gear direct drive housing (100) of the new multi-purpose shaft transmission housing installed side by side and coaxially on the right, engaging with the internal splined teeth of the center splined hole of the bearing assembly of the driving bevel gear (102), and is fastened with a nut on the extended part of the small bearing housing (104).
Therefore, the input shaft bevel gear right-angle transmission box housing (100) of the new multi-purpose shaft transmission box, with the large bearing seat (103) of the input shaft and the co-axial splined shaft (101) of the input shaft, is horizontally and laterally arranged and installed on the body of the all-terrain vehicle (UTV) or all-terrain vehicle (ATV) with front and rear dual-axle four-wheel drive, and is installed in a position where the three axes are parallel to the drive shafts of the front drive axle (1109) and the rear drive axle (1110). In order to enable the universal joint output shaft bevel gear right-angle transmission box housing (112) of the new multi-purpose shaft transmission box to output power to the front and rear drive axles of the all-terrain vehicle (UTV) or all-terrain vehicle (ATV), the universal joint output shaft bearing seat and the universal joint output splined shaft (113) of the universal joint output shaft bevel gear right-angle transmission box housing (112) must be horizontally and longitudinally arranged and installed at the bottom of the engine (500) or the electric motor (600) with a horizontal output shaft. The front universal joint output bearing seat (118) and the rear universal joint output shaft bearing seat (117) of the universal joint output shaft bevel gear right-angle transmission box housing (112), as well as the forwardly extending universal joint output splined shaft (113), are installed in the same vertical plane as the longitudinal axis of the all-terrain vehicle (UTV) or all-terrain vehicle (ATV) body, maintaining a parallel installation position of the two axes. At the front end of the forwardly and rearwardly extending universal joint output splined shaft (113), a front constant velocity ball cage universal joint (115) is installed, and a forward output power transmission half shaft (1107) is installed to transmit power to the front drive axle (1109). At the rear end of the forwardly and rearwardly extending universal joint output splined shaft (113), a rear constant velocity ball cage universal joint is installed. The ball cage universal joint (116) and the drive half shaft (1108) transmitting force backward to the rear drive axle (1110) transfer power. Therefore, the input shaft bevel gear of the new multi-purpose shaft transmission box body (100) and the bevel gear of the universal joint output shaft of the new multi-purpose shaft transmission box body (112) in the right-angle transmission box shell must be rotated 90 degrees and fixed at the axial position of the intermediate transmission shaft (108), so that the input shaft splined shaft (101) in the input shaft bevel gear right-angle transmission box shell (100) of the new multi-purpose shaft transmission box body is installed horizontally and laterally, and the universal joint output splined shaft (113) in the universal joint output bevel gear right-angle transmission box shell (112) of the new multi-purpose shaft transmission box body installed longitudinally at the bottom of the engine or motor is at a 90-degree transmission phase difference at the axial position of the intermediate transmission shaft (108). When the new multi-purpose shaft transmission box body is used in conjunction with various types of engines and applied to the power distribution to the front and rear double drive axles in the power transfer box for front and rear dual-axle four-wheel drive, the intermediate transmission shaft (108) and the intermediate transmission shaft protection support tube (109) of the new multi-purpose shaft transmission box body can use shorter models as needed without causing transmission interference with the drive half shaft and the constant velocity ball cage universal joint, so that the universal joint output shaft bearing housing of the new multi-purpose shaft transmission box body's universal joint output bevel gear right-angle transmission box body is close to the bottom of the engine to reduce the overall height of the engine and the new multi-purpose shaft transmission box body integrated with the engine.
The constant velocity ball cage universal joint used in the novel multi-purpose shaft drive system described in this invention serves as an exemplary illustration. In this drive system, it is not specifically limited to the constant velocity ball cage universal joint. To reduce the actual production and usage costs, the exemplary constant velocity ball cage universal joint in this invention can be replaced with various types of universal joints such as the cross-axis universal joint or the flexible universal joint coupling for power transmission.
In the present invention, when the integral drive axle is in operation to transmit power in conjunction with the new multi-purpose shaft drive system, the three sets of transmission gears (or sprocket chains) installed in the transmission box shell of the integral drive axle serve as an example. In this drive system, it is not specifically limited to three sets of transmission gears (or sprocket chains). In production and use, the number of sets can be adjusted according to actual working conditions.
In addition, the number of transmission gears or sprocket sets installed in the transmission box housing of the integral drive axle can be increased or decreased to achieve the best transmission match. In the present invention, when the new multi-purpose shaft transmission box is used in conjunction with a conventional vertical or horizontal engine, the three sets of transmission gears (or sprocket chains) installed in the overdrive gear (or sprocket chain) transmission box shell between the engine and the new multi-purpose shaft transmission box serve as an exemplary illustration. In this transmission system, it is not specifically limited to three sets of transmission gears (or sprocket chains). During production and use, the number of transmission gears or sprocket chains installed in the overdrive gear (or sprocket chain) transmission box shell can be increased or decreased according to the actual working conditions to achieve the best transmission matching.
